(19) Europäisches Patentamt European Patent Office Office européen des brevets

(11) **EP 4 734 518 A1**

(12) **EUROPEAN PATENT APPLICATION**
published in accordance with Art. 153(4) EPC

(43) Date of publication:
**29.04.2026 Bulletin 2026/18**

(21) Application number: **24832424.6**

(22) Date of filing: **26.06.2024**

(51) International Patent Classification (IPC):
**H04N 19/597** (2014.01)   **H04N 19/70** (2014.01)
**H04N 19/18** (2014.01)   **H04N 19/46** (2014.01)
**H04N 19/54** (2014.01)   **H04N 19/593** (2014.01)

(52) Cooperative Patent Classification (CPC):
**H04N 19/18; H04N 19/46; H04N 19/54;**
**H04N 19/593; H04N 19/597; H04N 19/70**

(86) International application number:
**PCT/KR2024/008873**

(87) International publication number:
**WO 2025/005646 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 KR 20230082062**

(71) Applicant: **LG Electronics Inc.**
**Yeongdeungpo-gu**
**Seoul 07336 (KR)**

(72) Inventors:
• **KIM, Daehyun**
  **Seoul 06772 (KR)**
• **SUH, Jongyeul**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **MESH DATA TRANSMISSION DEVICE, MESH DATA TRANSMISSION METHOD, MESH DATA RECEPTION DEVICE AND MESH DATA RECEPTION METHOD**

(57)    A mesh data decoding device according to embodiments may comprise a reception unit for receiving a base mesh bitstream, a displacement vector bitstream, a texture map bitstream, and signaling information, a base mesh processing unit for reconstructing a base mesh from the base mesh bitstream, a displacement information processing unit for reconstructing displacement information from the displacement vector bitstream; a reconstruction unit for reconstructing a mesh on the basis of the base mesh and the displacement information, and a texture map processing unit for reconstructing a texture map from the texture map bitstream.

# FIG. 16

**Description**

[Technical Field]

Embodiments provide a method for providing 3D content to provide a user with various services such as virtual reality (VR), augmented reality (AR), mixed reality (MR), and self-driving services.

[Background Art]

Point cloud data or mesh data in 3D content is a set of points in 3D space. However, it is difficult to create point cloud data or mesh data due to the large amount of points in 3D space.
In other words, a large throughput is required to transmit and receive 3D data with a considerable number of points, such as a point cloud or mesh data.

[Disclosure]

[Technical Problem]

An object of the present disclosure is to provide an apparatus and method for efficiently transmitting and receiving mesh data to resolve the aforementioned issue.
Another object of the present disclosure is to provide an apparatus and method to address the latency and encoding/decoding complexity of mesh data.
Another object of the present disclosure is to provide an apparatus and method for efficiently performing encoding and decoding of displacement vectors.
Embodiments are not limited to the above-described objects, and the scope of the embodiments may be extended to other objects that can be inferred by those skilled in the art based on the entire contents of the present disclosure.

[Technical Solution]

To achieve these objects and other advantages and in accordance with the purpose of the present disclosure, as embodied and broadly described herein, a method of encoding mesh data may include encoding an original mesh, and transmitting a bitstream containing the encoded mesh and signaling information.
According to embodiments, the encoding may include a base mesh processing operation of encoding a base mesh and generating a base mesh bitstream, the base mesh being generated by simplifying the original mesh, a displacement information processing operation of encoding displacement information generated based on the base mesh and generating a displacement vector bitstream, a mesh reconstruction operation of reconstructing a mesh based on the encoded base mesh and the encoded displacement information, and a texture map processing operation of encoding a texture map generated based on the original mesh and the reconstructed mesh and generating a texture map bitstream.
According to embodiments, the displacement information processing operation may include transforming a coordinate system of the displacement information into a local coordinate system, packing at least one of a normal component, a tangential component, or a bi-tangential component included in the displacement information in the local coordinate system based on one of a first format, a second format, or a third format, and encoding the packed displacement information.
According to embodiments, the packing may include selectively packing the bi-tangential component in the displacement information, wherein the signaling information may include information for identifying whether packing of the bi-tangential component has been skipped.
According to embodiments, the signaling information may include information for identifying the format applied to the displacement information.
According to embodiments, a device for encoding mesh data may include an encoder configured to encode an original mesh, and a transmitter configured to transmit a bitstream containing the encoded mesh and signaling information.
According to embodiments, the encoder may include a base mesh processor configured to encode a base mesh and generate a base mesh bitstream, the base mesh being generated by simplifying the original mesh, a displacement information processor configured to encode displacement information generated based on the base mesh and generate a displacement vector bitstream, a mesh reconstructor configured to reconstruct a mesh based on the encoded base mesh and the encoded displacement information, and a texture map processor configured to encode a texture map generated based on the original mesh and the reconstructed mesh and generate a texture map bitstream.
According to embodiments, the displacement information processor may include a displacement information coordinate transformer configured to transform a coordinate system of the displacement information into a local coordinate system, a displacement information packer configured to pack at least one of a normal component, a tangential component, or a bi-tangential component included in the displacement information in the local coordinate system based on one of a first format, a second format, or a third format, and a displacement information encoder configured to encode the packed displacement information.

According to embodiments, the displacement information packer is configured to selectively pack the bi-tangential component in the displacement information, wherein the signaling information may include information for identifying whether packing of the bi-tangential component has been skipped.

According to embodiments, the signaling information may include information for identifying the format applied to the displacement information.

According to embodiments, a method of decoding mesh data may include an operation of receiving a base mesh bitstream, a displacement vector bitstream, a texture map bitstream, and signaling information, a base mesh processing operation of reconstructing a base mesh from the base mesh bitstream, a displacement information processing operation of reconstructing displacement information from the displacement vector bitstream, a reconstruction operation of reconstructing a mesh based on the base mesh and the displacement information, and a texture map processing operation of reconstructing a texture map from the texture map bitstream.

According to embodiments, the displacement information processing operation may include decoding the displacement vector bitstream into the displacement information, identifying a format applied to the displacement information among a first format, a second format, and a third format, and unpacking at least one of a normal component, a tangential component, or a bi-tangential component included in the displacement information based on the identified format, and inversely transforming the unpacked displacement information from a local coordinate system into an original coordinate system.

According to embodiments, the signaling information may include information for identifying the format applied to the displacement information.

According to embodiments, the signaling information further may include information for identifying whether packing of the bi-tangential component has been skipped, wherein the unpacking operation may include determining a method of unpacking at least one of the normal component, the tangential component, or the bi-tangential component based on the signaling information.

According to embodiments, a device for decoding mesh data may include a receiver configured to receive a base mesh bitstream, a displacement vector bitstream, a texture map bitstream, and signaling information, a base mesh processor configured to reconstruct a base mesh from the base mesh bitstream, a displacement information processor configured to reconstruct displacement information from the displacement vector bitstream, a reconstructor configured to reconstruct a mesh based on the base mesh and the displacement information, and a texture map processor configured to reconstruct a texture map from the texture map bitstream.

According to embodiments, the displacement information processor may include a displacement information decoder configured to decode the displacement vector bitstream into the displacement information, a displacement information unpacker configured to identify a format applied to the displacement information among a first format, a second format, and a third format, and to unpack at least one of a normal component, a tangential component, or a bi-tangential component included in the displacement information based on the identified format, and a coordinate inverse transformer configured to inversely transform the unpacked displacement information from a local coordinate system into an original coordinate system.

According to the embodiments, a computer program stored in a computer-readable recording medium may be combined with hardware such as a computer to perform the above-described methods.

According to the embodiments, a computer program stored in a computer-readable recording medium may be combined with hardware such as a computer to perform the above-described methods.

[Advantageous Effects]

A mesh data transmission method, mesh data transmission apparatus, mesh data reception method, and mesh data reception apparatus according to embodiments may provide good-quality 3D services.

A mesh data transmission method, mesh data transmission apparatus, mesh data reception method, and mesh data reception apparatus according to embodiments may achieve various video codec schemes.

A mesh data transmission method, mesh data transmission apparatus, mesh data reception method, and mesh data reception apparatus according to embodiments may provide universal 3D content such as an autonomous driving service.

A mesh data transmission method, mesh data transmission apparatus, mesh data reception method, and mesh data reception apparatus according to embodiments may encode and transmit only normal and tangential components among normal, tangential, and bi-tangential components transformed into a local coordinate system, while allowing the decoder of the reception apparatus to decode even the bi-tangential component, thereby efficiently reducing bits and obtaining mesh data with better image quality.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process for V-MESH data according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process for V-MESH data according to embodiments;
FIG. 12 illustrates an inter-frame decoding process for V-MESH data according to embodiments;
FIG. 13 illustrates a transmission apparatus according to embodiments;
FIG. 14 illustrates a reception apparatus according to embodiments;
FIG. 15 illustrates another example of a transmission apparatus according to the embodiments;
FIG. 16 is a detailed block diagram of a displacement vector encoder according to embodiments;
FIG. 17 illustrates an example of the structure of displacement vector coefficients according to embodiments;
FIG. 18 is a diagram illustrating an example of packing displacement vector coefficients according to embodiments;
FIG. 19 is a diagram illustrating an example of packing displacement vector coefficient blocks for each LoD according to embodiments;
FIGS. 20-(a) and 20-(b) are diagrams illustrating examples of methods of packing displacement vector coefficients in a displacement vector coefficient block according to embodiments;
FIGS. 21-(a) and 21-(b) are diagrams illustrating an example of packing displacement vector coefficients based on a YUV 4:4:4 format according to embodiments;
FIGS. 22-(a) and 22-(b) are diagrams illustrating another example of packing displacement vector coefficients based on the YUV 4:4:4 format according to embodiments;
FIGS. 23-(a) and 23-(b) are diagrams illustrating an example of packing displacement vector coefficients based on a YUV 4:2:0 format according to embodiments;
FIGS. 24-(a) and 24-(b) are diagrams illustrating another example of packing displacement vector coefficients based on the YUV 4:2:0 format according to embodiments;
FIGS. 25-(a) and 25-(b) are diagrams illustrating an example of packing displacement vector coefficients based on a YUV 4:0:0 format according to embodiments;
FIGS. 26-(a) and 26-(b) are diagrams illustrating another example of packing displacement vector coefficients based on the YUV 4:0:0 format according to embodiments;
FIG. 27 is a diagram illustrating another example of a reception apparatus according to embodiments;
FIG. 28 is a detailed block diagram illustrating an example of a displacement vector decoder according to embodiments;
FIGS. 29-(a) and 29-(b) are diagrams illustrating an example of unpacking displacement vector coefficients based on the YUV 4:4:4 format according to embodiments;
FIGS. 30-(a) and 30-(b) are diagrams illustrating another example of unpacking displacement vector coefficients based on the YUV 4:4:4 format according to embodiments;
FIGS. 31-(a) and 31-(b) are diagrams illustrating an example of unpacking displacement vector coefficients based on the YUV 4:2:0 format according to embodiments;
FIGS. 32-(a) and 32-(b) are diagrams illustrating another example of unpacking displacement vector coefficients based on the YUV 4:2:0 format according to embodiments;
FIGS. 33-(a) and 33-(b) are diagrams illustrating an example of unpacking displacement vector coefficients based on the YUV 4:0:0 format according to embodiments;

FIGS. 34-(a) and 34-(b) are diagrams illustrating another example of unpacking displacement vector coefficients based on the YUV 4:0:0 format according to embodiments;

FIGS. 35-(a) and 35-(b) are diagrams illustrating yet another example of unpacking displacement vector coefficients based on the YUV 4:0:0 format according to embodiments;

FIG. 36 illustrates an example of a syntax structure of signaling information according to embodiments;

FIG. 37 illustrates another example of a syntax structure of signaling information according to embodiments;

FIG. 38 is a flowchart illustrating an example of a transmission method according to embodiments; and

FIG. 39 is a flowchart illustrating an example of a reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

With recent advancements in 3D data modeling and rendering technologies, research on generating and processing 3D data has been actively conducted across various fields, including virtual reality (VR), augmented reality (AR), autonomous driving, computer-aided design (CAD)/computer-aided manufacturing (CAM), and geographic information systems (GIS). 3D data may be represented as a point cloud or a mesh depending on the representation format. A mesh is composed of geometry information indicating the coordinates of each vertex or point, connectivity information indicating connections between vertices, a texture map representing color information about the mesh surface as 2D image data, and texture coordinates indicating the mapping information between the surface of the mesh and the texture map. In the present disclosure, a mesh is defined as a dynamic mesh when at least one of the elements constituting the mesh changes over time, and is defined as a static mesh when it does not change.

Dynamic mesh data involves significantly larger amounts of data of elements to represent the mesh compared to 2D image data. As a result, techniques for efficiently compressing a large amount of mesh data have been developed to store and transmit the data.

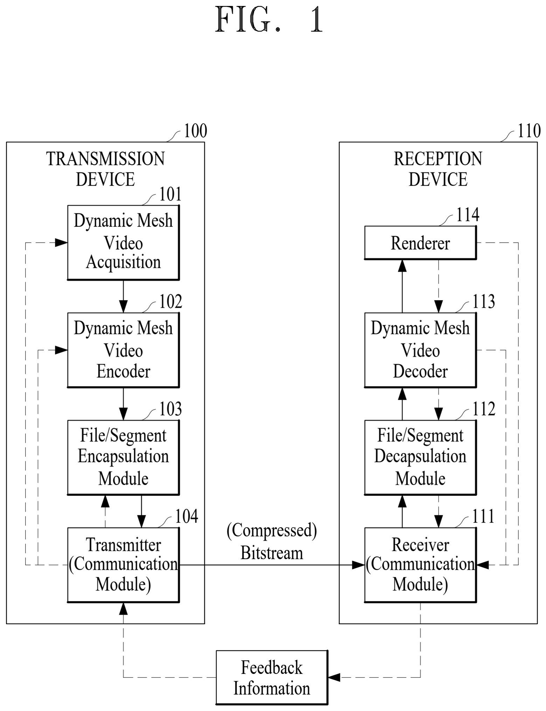

FIG. 1 illustrates a system for providing dynamic mesh content according to embodiments.

The system in FIG. 1 includes a transmission apparatus 100 and a reception apparatus 110. The transmission apparatus 100 may include a mesh video acquisition unit (or part) 101, a mesh video encoder 102, a file/segment encapsulator 103, and a transmitter 104. The reception apparatus 110 may include a receiver 111, a file/segment decapsulator 112, a mesh video decoder 113, and a renderer 114. Each component in FIG. 1 may correspond to hardware, software, a processor, and/or a combination thereof. In the following description, a mesh data transmission apparatus according to embodiments may be interpreted as referring to a 3D data transmission apparatus or transmission apparatus 100, or as referring to a mesh video encoder (hereinafter, encoder) 102. A mesh data reception apparatus according to embodiments may be interpreted as referring to a 3D data reception apparatus or reception apparatus 110, or as referring to a mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique for point cloud data. Point cloud data is data that has color information in the coordinates (X, Y, Z) of vertices (or points). In the present disclosure, vertex coordinates (i.e., position information) are referred to as geometry information, color information about vertices is referred to as attribute information. The geometry information and attribute information are together referred to as vertex information or point cloud data. Mesh data refers to vertex information including inter-vertex connectivity information. Content may be originally created in the form of mesh data. Alternatively, connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a mesh video. The generated mesh video may be transmitted through a series of operations, and the receiving side may process the received data back into a mesh video for rendering. Through this process, the mesh video may be provided to the user, allowing the user to utilize the mesh content interactively according to their intent.

As shown in FIG. 1, a mesh compression system may include a transmission apparatus 100 and a reception apparatus 110. The transmission apparatus 100 may encode the mesh video to output a bitstream, which may be delivered to the reception apparatus 110 over a digital storage medium or a network in the form of file or streaming (streaming segments). The digital storage medium may include various storage media such as USB, SD, CD, DVD, Blu-ray, HDD, and SSD.

In the transmission apparatus 100, the encoder may be referred to as a mesh video/image/picture/frame encoding device. In the reception apparatus 110, the decoder may be referred to as a mesh video/image/picture/frame decoding device. A transmitter may be included in the mesh video encoder, and a receiver may be included in the mesh video decoder. The renderer 114 may include a display, and the renderer and/or display may be configured as separate devices or external components. The transmission apparatus 100 and reception apparatus 110 may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinate related to mesh vertices, referred to as UV coordinates or texture coordinates, related to related to the vertices of the mesh. A mesh contains a 2D attribute map, which may be used to store high-resolution attribute information such as texture, normal, and displacement. Here, the displacement may be used interchangeably with displacement information or a displacement vector.

The mesh video acquisition unit 101 may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder 102 may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder 102 may perform a Video-based Dynamic Mesh (V-Mesh) compression procedure. For compression and coding efficiency, the mesh video encoder 102 may perform a series of procedures such as prediction, transformation, quantization, and entropy coding. Encoded data (encoded video/image information) may be output in the form of a bitstream.

The file/segment encapsulation module 103 may encapsulate encoded mesh video data and/or mesh video-related metadata in the form of a file or the like. The mesh video-related metadata may be received from a metadata processor. The metadata processing unit may be included in the mesh video encoder 102, or may be configured as a separate component/module. The file/segment encapsulation module 103 may encapsulate the data into a file format such as ISOBMFF or process the same into forms such as DASH segments. According to embodiments, the file/segment encapsulator 103 may include the mesh video-related metadata in the file format. For example, the mesh video metadata may be included in boxes at various levels in the ISOBMFF file format, or as data on separate tracks in the file. In some embodiments, the file/segment encapsulator 103 may encapsulate the mesh video-related metadata into a file.

The transmission processor may apply processing to the encapsulated mesh video data for transmission based on the file format. The transmission processor may be included in the transmitter 104 or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter 104 may transmit the encoded video/image information or data output in bitstream form to the receiver 111 of the reception apparatus 110 over a digital storage medium or network in the form of a file or streaming. The digital storage medium may include various storage media such as USB, SD, CD, DVD, Blu-ray, HDD, and SSD. The transmitter 104 may include an element to generate a media file through a predetermined file format, and may include an element for transmission over a broadcast/communication network. The receiver 111 may extract the bitstream and deliver the same to a decoding device.

The receiver 111 may receive the mesh video data transmitted by the mesh data transmission apparatus. Depending on the channel for transmission, the receiver 111 may receive the mesh video data over a broadcast network or a broadband network, or may receive the mesh video data over a digital storage medium.

The reception processor may perform processing on the received mesh video data according to the transmission protocol. The reception processor may be included in the receiver 111, or may be configured as a separate component/module. To correspond to the processing performed for transmission on the transmitting side, the reception processor may perform the reverse process to the operations of the transmission processor described above. The reception processor may deliver the acquired mesh video data to the file/segment decapsulator 112 and the acquired mesh video-related metadata to the metadata parser. The mesh video-related metadata acquired by the reception processor may be in the form of a signaling table.

The file/segment decapsulator 112 may decapsulate mesh video data in the form of files received from the reception processor. The file/segment decapsulator 112 may decapsulate the files according to ISOBMFF or the like to acquire a mesh video bitstream or mesh video-related metadata (metadata bitstream). The acquired mesh video bitstream may be delivered to the mesh video decoder 113, and the acquired mesh video-related metadata (metadata bitstream) may be delivered to the metadata processor. The mesh video bitstream may include metadata (metadata bitstream). The metadata processor may be included in the mesh video decoder 113, or may be configured as a separate component/module. The mesh video-related metadata acquired by the file/segment decapsulator 112 may be in the form of boxes or tracks in the file format. The file/segment decapsulator 112 may receive metadata required for decapsulation from the metadata processor, when necessary. The mesh video-related metadata may be delivered to the mesh video decoder 113 for use in the mesh video decoding procedure, or to the renderer 114 for use in the mesh video rendering procedure.

The mesh video decoder 113 may receive the input bitstream and perform the reverse operation corresponding to the operation of the mesh video encoder 102 to decode the video/images. The decoded mesh video/images may be displayed through the display of the renderer 114. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to embodiments of dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an M×N block may include a set (or array) of samples (or a sample array) or transform coefficients composed of M columns and N rows.

As described above, the encoding process of FIG. 1 is performed as follows.

In other words, the compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video. The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

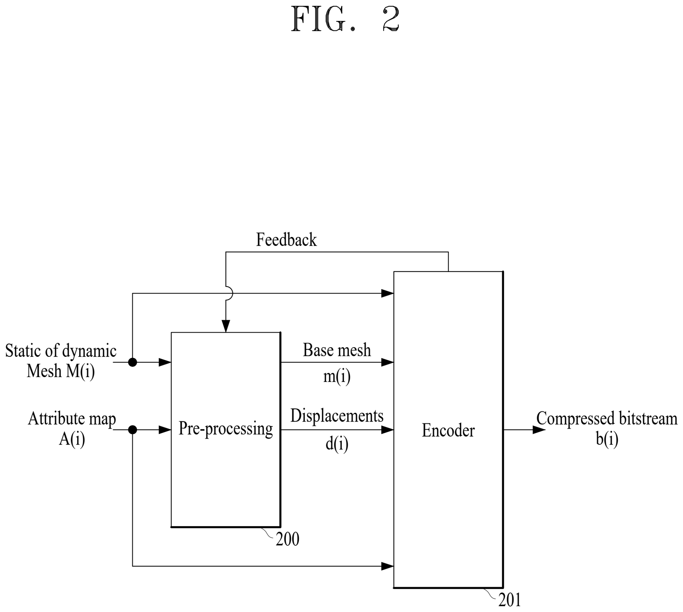

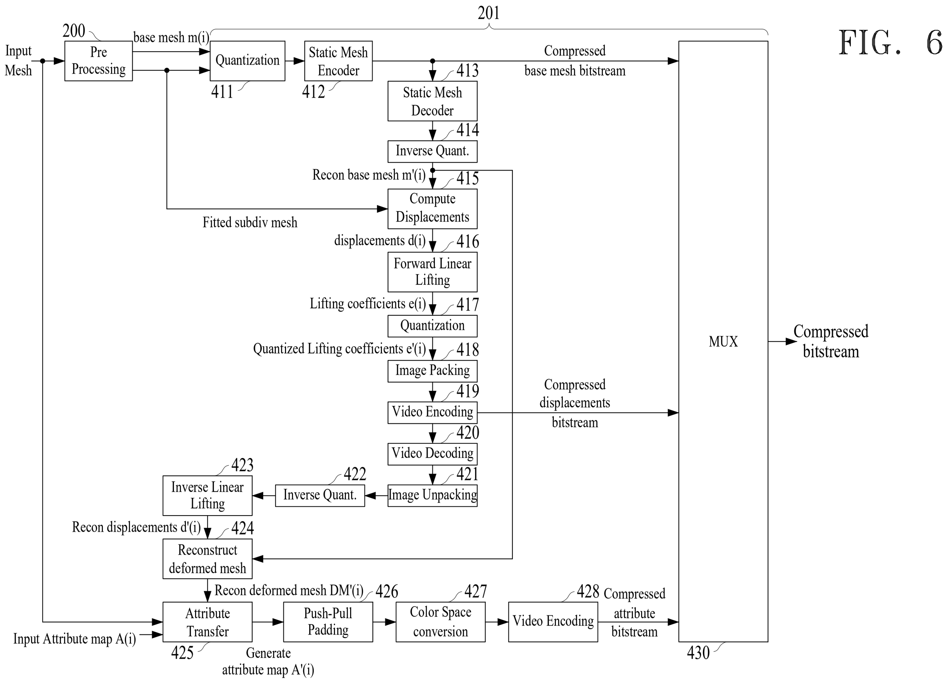

A method of encoding mesh position information (or vertex position information) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The mesh video encoder 102 of FIG. 1 may include a pre-processor 200 and an encoder 201, as shown in FIG. 2. Also, the transmission apparatus of FIG. 1 may be broadly referred to as an encoder, and the mesh video encoder 102 of FIG. 1 may be referred to as an encoder. The V-Mesh compression method may include pre-processing 200 and encoding 201, as shown in FIG. 2. The pre-processor 200 of FIG. 2 may be positioned at the front end of the encoder 201 of FIG. 2. The pre-processor 200 and encoder 201 of FIG. 2 may be referred to as a single encoder.

The pre-processor 200 may receive a static of dynamic mesh (M(i)) and/or an attribute map (A(i)). The pre-processor 200 may generate a base mesh m(i) and/or displacements d(i) through pre-processing. The pre-processor 200 may receive feedback information from the encoder 201, and may generate the base mesh and/or displacements based on the feedback information.

The encoder 201 may receive the base mesh m(i), the displacements d(i), the static of dynamic mesh M(i), and/or the attribute map A(i). In the present disclosure, at least one of the base mesh m(i), the displacements d(i), the static of dynamic mesh M(i), and/or the attribute map A(i) may be referred to herein as mesh-related data. The encoder 201 may encode the mesh-related data to generate a compressed bitstream.

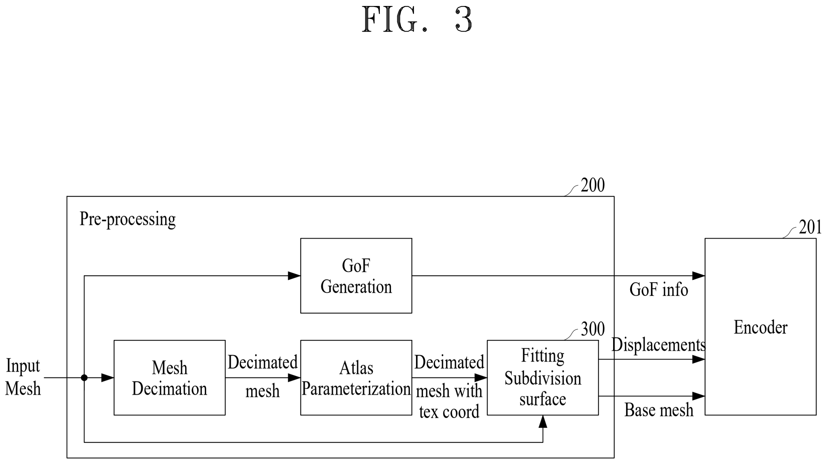

FIG. 3 illustrates pre-processing in V-MESH compression according to embodiments.

FIG. 3 illustrates the configuration and operation of the pre-processor of FIG. 2. In FIG. 3, the input mesh may include a static of dynamic mesh M(i) and/or attribute map A(i). The input mesh may also include 3D coordinates of vertices constituting the mesh, normal information about each vertex, mapping information for mapping the mesh surface to a 2D plane, and connectivity information between the vertices constituting the surface.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). According to embodiments, the GoF generation may be referred to as a GoF generation process or a GoF generator, the mesh decimation may be referred to as a mesh simplification process or the mesh decimation part, the UV parameterization may be referred to as a UV parameterization process or the UV parameterization part, and the fitting subdivision surface may be referred to as a fitting subdivision surface process or a fitting subdivision surface part. The pre-processor 200 may generate displacements and/or a base mesh from the received input mesh, and deliver the same to the encoder 201. The pre-processor 200 may deliver GoF information related to the GoF generation to the encoder 201.

Hereinafter, each operation of FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, the encoder 201 may perform inter frame encoding. Otherwise, it performs intra frame encoding for the frame.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface (300): A process of performing subdivision on the decimated mesh (i.e., a decimated mesh with texture coordinates). The displacements and base mesh generated by this process are output to the encoder 201. A user-defined method, such as the mid-edge method, may be applied as the subdivision method. A fitting process is performed such that the input mesh and the subdivided mesh become similar to each other. The mesh on which the fitting process is performed will be referred to herein as the fitted subdivided mesh.

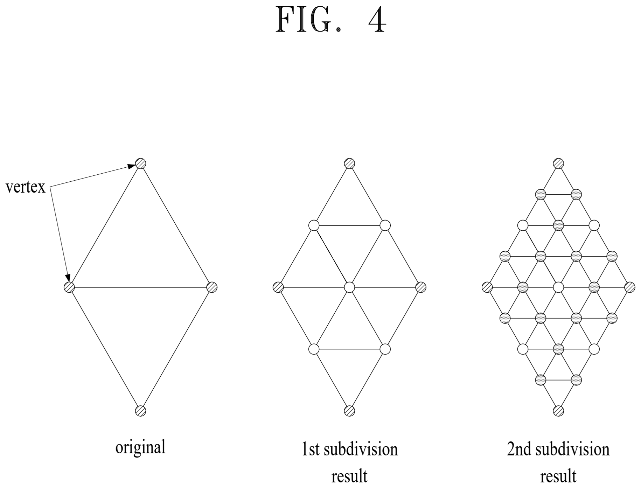

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices. Then, the fitting process is performed to make the input mesh and the sub-mesh similar to each other, resulting in a fitted subdivided mesh.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

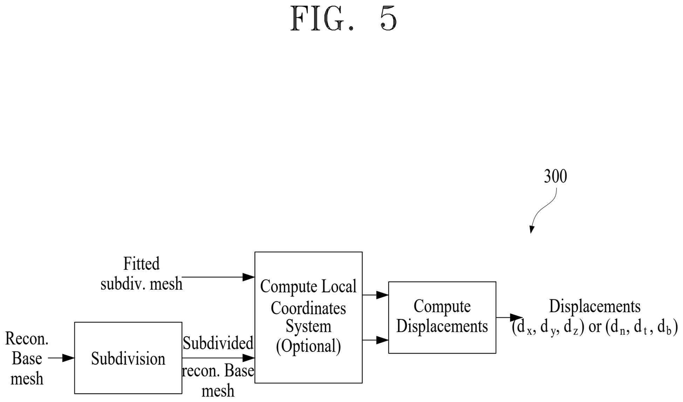

FIG. 5 illustrates a displacement generation process according to embodiments. The displacement generation process of FIG. 5 may be performed by the pre-processor 200, or may be performed by the encoder 201.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may perform a subdivision on the reconstructed base mesh to generate a subdivided reconstructed base mesh. Here, the reconstruction of the base mesh may be performed by the pre-processor 200, or may be performed by the encoder 201. The local coordinate system calculator may receive the fitted subdivided mesh and the subdivided reconstructed base mesh, and may transform the coordinate system related to the mesh to a local coordinate system based on the received meshes. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The mesh data transmission method and apparatus according to embodiments may encode the mesh data as follows. Mesh data is a term that includes point cloud data. Point cloud data (which may be referred to as a point cloud for short) according to embodiments may refer to data including vertex coordinates (also referred to as geometry information) and color information (also referred to as attribute information). In addition, a geometry image, an attribute image, an occupancy map, and auxiliary information (also referred to as patch information) generated through patch generation and packing based on vertex coordinates and color information may also be referred to as point cloud data. Therefore, point cloud data including connectivity information may be referred to as mesh data. The terms point cloud and mesh data may be used interchangeably herein.

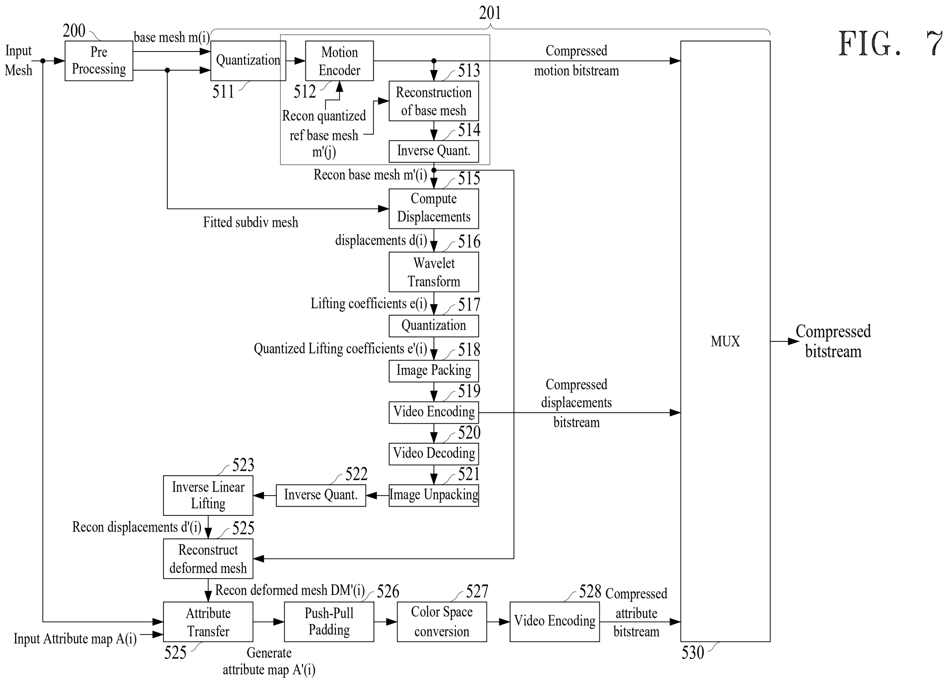

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments. Each component for the intra-frame encoding process of FIG. 6 corresponds to hardware, software, a processor, and/or a combination thereof.

The encoding process of FIG. 6 details the encoding of the mesh video encoder 102 of FIG. 1. That is, it represents the configuration of the mesh video encoder 102 when the encoding of FIG. 1 is intra-frame encoding. The encoder of FIG. 6 may include a pre-processor 200 and/or an encoder 201. The pre-processor 200 and encoder 201 of FIG. 6 may correspond to the pre-processor 200 and encoder 201 of FIG. 3.

The pre-processor 200 may receive an input mesh and perform the pre-processing described above. A base mesh and/or a fitted subdivided mesh may be generated through the pre-processing.

The quantizer 411 of the encoder 201 may quantize the base mesh and/or the fitted subdivided mesh. The static mesh encoder 412 may encode the static mesh (i.e., the quantized base mesh) and generate a bitstream containing the encoded base mesh (i.e., a compressed base mesh bitstream). The static mesh decoder 413 may decode the encoded static mesh (i.e., the encoded base mesh). The inverse quantizer 414 may inversely quantize the quantized static mesh (i.e., base mesh) and output a reconstructed (restored) base mesh. The displacement calculator 415 may generate a displacement or displacements based on the reconstructed static mesh (i.e., base mesh) and the fitted subdivided mesh. According to embodiments, the displacement calculator 415 subdivides the reconstructed base mesh and then calculates a displacement, which is the difference in position of each vertex between the subdivided base mesh and the fitted subdivided mesh. In other words, the displacement is a displacement vector that is the difference in position between the vertices in the two meshes when the fitted subdivided mesh is similar to the original mesh. The forward linear lifter 416 may perform a lifting transform on the input displacements to generate lifting coefficients (also referred to as a transform coefficient). The quantizer 417 may quantize the lifting coefficients. The image packer 418 may pack the image based on the quantized lifting coefficients. The video encoder 419 may encode the packed image. That is, the quantized lifting coefficients are packed into a frame as a 2D image by the image packer 418, compressed by the video encoder 419, and output as a displacement bitstream (i.e., a compressed displacement bitstream).

The video decoder 420 decodes the compressed displacement bitstream. The image unpacker 421 may perform unpacking on the decoded displacement frame to output quantized lifting coefficients. The inverse quantizer 422 may inversely quantize the quantized lifting coefficients. The inverse linear lifting unit 423 applies inverse lifting to the inversely quantized lifting coefficients to generate reconstructed displacements. The mesh reconstructor 424 restores the reconstructed and deformed mesh based on the reconstructed displacements output from the inverse linear lifting unit 423 and the reconstructed base mesh (also referred to as the subdivided reconstructed base mesh) output from the inverse quantizer 414. The reconstructed and deformed mesh is referred to herein as the reconstructed deformed mesh.

The attribute transfer 425 receives an input mesh and/or an input attribute map and regenerates an attribute map based on the reconstructed deformed mesh. The attribute map refers to a texture map corresponding to attribute information among the mesh data components. In the present disclosure, the terms attribute map and texture map may be used interchangeably. The push-pull padding unit 426 may pad data to the attribute map based on a push-pull method. The color space converter 427 may convert the space of the color components of the attribute map. For example, the attribute map may be converted from an RGB color space to a YUV color space. The video encoder 428 may encode the attribute map to output a compressed attribute bitstream.

The multiplexer 430 may multiplex the compressed base mesh bitstream, the compressed displacement bitstream, and the compressed attribute bitstream to generate a compressed bitstream.

In FIG. 6, the displacement calculator 415 may be included in the pre-processor 200. Additionally, at least one of the quantizer 411, the static mesh encoder 412, the static mesh decoder 413, or the inverse quantizer 414 may be included in the pre-processor 200.

As described in FIG. 6, the intra frame encoding method includes base mesh encoding (also referred to as static mesh encoding). That is, when intra frame encoding is performed on the current input mesh frame, the base mesh generated during the pre-processing of the pre-processor 200 may be quantized by the quantizer 411 and then encoded by the static mesh encoder 412 using a static mesh compression technique. In the V-Mesh compression method, for example, the Draco technique is applied to encode the base mesh, and the vertex position information, mapping information (texture coordinates), vertex connectivity information, and the like related to the base mesh are subject to compression.

The encoder in FIG. 6 compresses the base mesh, displacements, and attributes in a frame to generate a bitstream, while the encoder in FIG. 7 compresses the motion, displacements, and attributes between the current frame and a reference frame to generate a bitstream.

FIG. 7 illustrates an inter-frame encoding process in a V-MESH compression method according to embodiments. Each component for the inter-frame encoding process of FIG. 7 corresponds to hardware, software, a processor, and/or a combination thereof.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201. The pre-processor 200 and encoder 201 of FIG. 7 may correspond to the pre-processor 200 and encoder 201 of FIG. 3.

For the components of the encoding operation of FIG. 7 that correspond to the encoding operation of FIG. 6, refers to the description of FIG. 6. That is, the operations of the quantizer 511, displacement calculator 515, wavelet transformer 516, quantizer 517, image packer 518, video encoder 519, video decoder 520, image unpacker 521, inverse quantizer 522, and inverse wavelet transformer 523, mesh reconstructor 524, attribute transfer 525, push-pull padding 526, color space converter 527, video encoder 528, and multiplexer 530 in FIG. 7 are the same as or similar to the operations of the quantizer 411, static mesh encoder 412, static mesh decoder 413, and inverse quantizer 414, displacement calculator 415, forward linear lifting unit 416, quantizer 417, image packer 418, video encoder 419, video decoder 420, image unpacker 421, inverse quantizer 422, inverse linear lifting unit 423, and mesh reconstructor 424, attribute transfer 425, push-pull padding 426, color space converter 427, video encoder 428, and multiplexer 430 in FIG. 6 described above, and are therefore not described in detail in relation to FIG. 7 to avoid redundancy.

In FIG. 7, for inter-frame-based encoding, the motion encoder 512 may obtain and encode a motion vector between the reconstructed quantized reference base mesh and the quantized current base mesh, and output a compressed motion bitstream. The motion encoder 512 may be referred to as a motion vector encoder. The base mesh reconstructor 513 may reconstruct a base mesh based on the reconstructed quantized reference base mesh and the encoded motion vectors. The reconstructed base mesh is inversely quantized by the inverse quantizer 514 and output to the displacement calculator 515.

In FIG. 7, the displacement calculator 515 may be included in the pre-processor 200. Additionally, at least one of the quantizer 511, motion encoder 512, base mesh reconstructor 513, or inverse quantizer 514 may be included in the pre-processor 200.

As described with reference to FIG. 7, the inter-frame encoding method may include motion field encoding (also referred to as motion vector encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field (or motion vector) may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of the residual motion field may be encoded using entropy coding. Except for the motion field encoding in the inter frame encoding, the process of encoding the displacements and attribute map is the same as the structure of the intra frame encoding method except for the base mesh encoding.

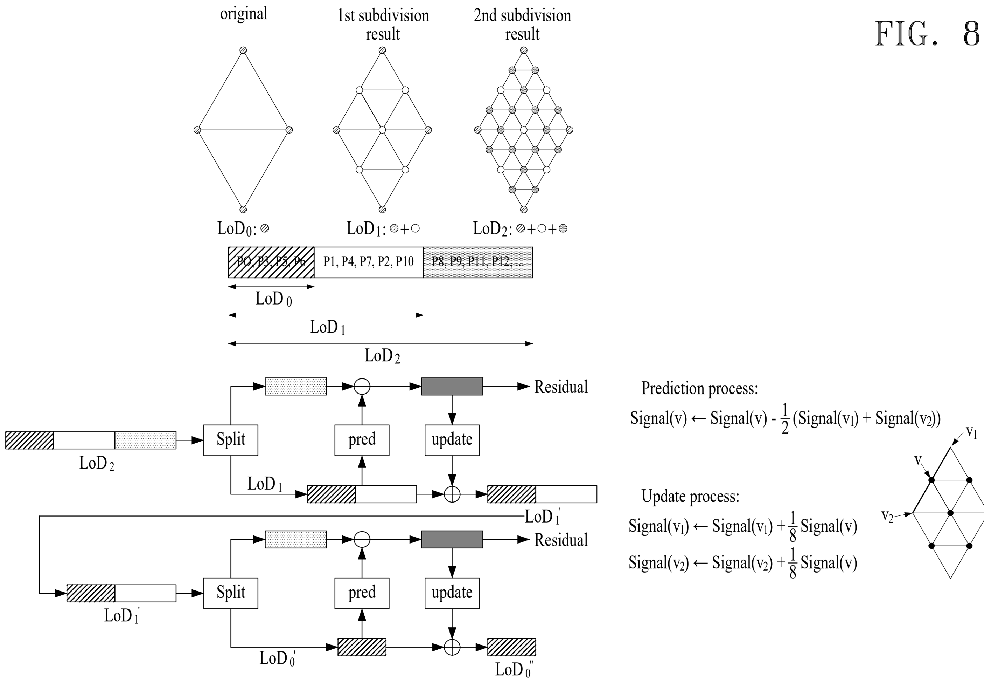

FIG. 8 illustrates a lifting transform process for displacements according to embodiments.

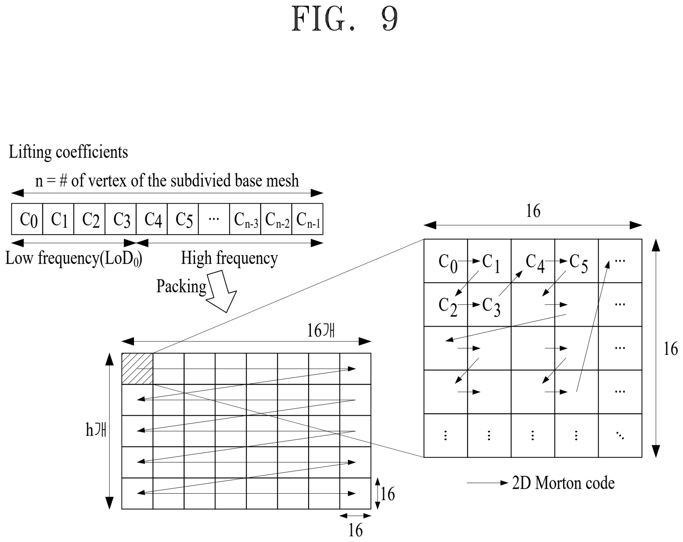

FIG. 9 illustrates a process of packing transform coefficients (also referred to as lifting coefficients) into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface (see 415 in FIG. 6 or 515 in FIG. 7). A data transform process, such as a wavelet transform, may be applied to the displacement information for effective encoding (see 416 in FIG. 6, or 516 in FIG. 7).

FIG. 8 illustrates the process of transforming displacement information by the forward linear lifting unit 416 of FIG. 6 or the wavelet transformer 516 of FIG. 7 using the lifting transform. For example, a linear wavelet-based lifting transform may be performed. The transform coefficients generated through the transform process are quantized by the quantizer 417 (or 517) and then packed into a 2D image by the image packer 418 (or 518), as shown in FIG. 9. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded by the video encoder 419 (or 519) using a conventional video compression codec.

Referring to FIG. 8, the base mesh (original) may include vertices and edges for LoD0. A first subdivision mesh generated by splitting (or subdividing) the base mesh includes vertices generated by further splitting (or subdividing) the edges of the base mesh. The first subdivision mesh contains vertices for LoD0 and vertices for LoD1. LoD1 includes subdivided vertices and vertices from the base mesh (LoD0). The first subdivision mesh may be split (or subdivided) to generate a second subdivision mesh. The second subdivision mesh contains LoD2. LoD2 includes a base mesh vertex (LoD0), LoD1 containing vertices further split (or subdivided) from LoD0, and LoD2 containing vertices further split (or subdivided) from LoD1. LoD is a level of detail that indicates how detailed the mesh data content is. As the index of the level increases, the distance between vertices is shortened, and the level of detail rises. In other words, as the value of LoD decreases, the detail of the mesh data content is degraded. As the value of LoD increases, the detail of the mesh data content is enhanced. LoD N contains the vertices contained in LoD N-1. In the case where the mesh (or vertex) is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated through the residual. In the present disclosure, vertex and point may be used interchangeably. The LoDs may be defined in the subdivision of the base mesh. According to embodiments, the subdivision of the base mesh may be performed by the pre-processor 200 or may be performed by a separate component/module.

Referring to FIG. 9, a vertex has a transform coefficient (also referred to as a lifting coefficient) generated through lifting transform. The transform coefficient of the vertex related to the lifting transform may be packed into an image by the image packer 418 (or 518) and then encoded by the video encoder 419 (or 519).

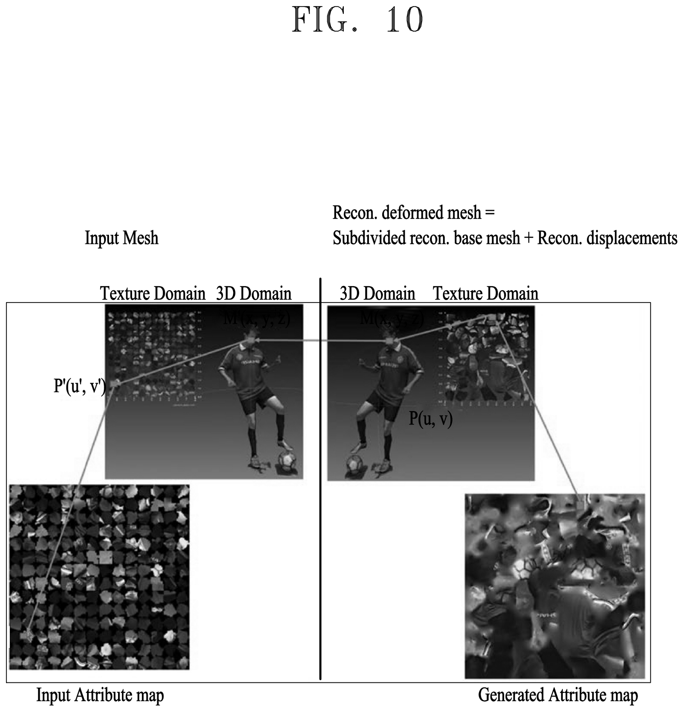

FIG. 10 illustrates an attribute transfer process in a V-MESH compression method according to embodiments.

According to embodiments, FIG. 10 illustrates a detailed operation of the attribute transfer 425 (or 525) in the encoding of FIGS. 6, 7, etc.

The encoding according to the embodiments includes attribute map encoding. According to embodiments, the attribute map encoding may be performed by the video encoder 428 of FIG. 6 or the video encoder 528 of FIG. 7.

According to embodiments, in the present disclosure, the encoder compresses information about the input mesh through base mesh encoding (i.e., intra-encoding), motion field encoding (i.e., inter-encoding), and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is re-generated through the attribute transfer process of the attribute transfer 425 (or 525).

According to embodiments, the attribute transfer 425 (or 525) first checks, for every point P(u, v) in the 2D texture domain, whether the corresponding vertex is within a texture triangle of the Recon. deformed mesh. When the corresponding vertex is in the texture triangle T, the attribute transfer calculates the barycentric coordinates $(\alpha, \beta, \gamma)$ of P(u, v) according to the triangle T. Then, it calculates the 3D coordinates M(x, y, z) of P(u, v) based on the 3D vertex positions of the triangle T and $(\alpha, \beta, \gamma)$. The vertex coordinates M'(x', y', z') that corresponds to the closest position to the calculated M(x, y, z) and a triangle T' containing this vertex are searched for in the input mesh domain. Then, the barycentric coordinates $(\alpha', \beta', \gamma')$ of M'(x', y', z') in the triangle T' are calculated. The texture coordinates (u', v') are calculated based on the texture coordinates corresponding to the three vertices of triangle T' and $(\alpha', \beta', \gamma')$, and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm of the push-pull padding 426 (or 526).

The new attribute map generated by the attribute transfer 425 (or 525) is bundled into GoFs to construct an attribute map video, which is compressed using a video codec of the video encoder 428 (or 528).

A reference relationship between the input mesh, the input attribute map, the reconstructed deformed mesh, and the reconstructed attribute map is shown may be seen from FIG. 10.

The decoding process of FIG. 1 may perform the reverse of the encoding process of FIG. 1. Specifically, the decoding process is performed as disclosed below.

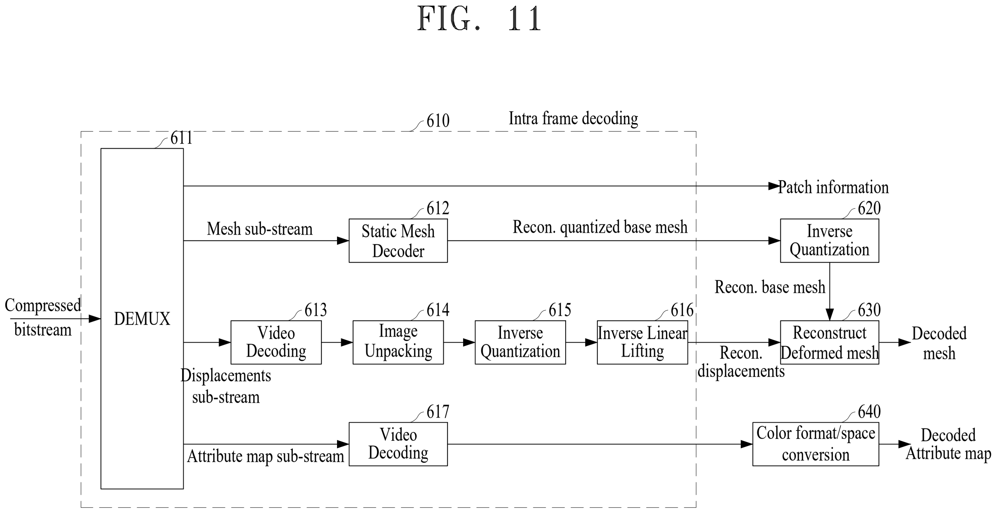

FIG. 11 shows the intra-frame decoding (or intra decoding) process of the V-Mesh technology according to embodiments.

FIG. 11 illustrates the configuration and operation of the mesh video decoder 113 of the reception apparatus of FIG. 1. Additionally, FIG. 11 illustrates that the mesh data may be reconstructed by performing a reverse process to the intra-frame encoding process of FIG. 6. Each component for the intra-frame decoding process of FIG. 11 corresponds to hardware, software, and/or a combination thereof.

First, the bitstream (i.e., compressed bitstream) received and input to the demultiplexer 611 of the intra-frame decoder 610 may be separated into a mesh sub-stream, a displacement sub-stream, an attribute map sub-stream, and a sub-stream containing patch information about the mesh, such as V-PCC/V3C. The term V-PCC (Video-based Point Cloud Compression) used in the present disclosure may have the same meaning as V3C (Visual Volumetric Video-based Coding). The two terms may be used interchangeably. Accordingly, in the present disclosure, the term V-PCC may be interpreted as V3C.

According to embodiments, the mesh sub-stream may be input to and decoded by a static mesh decoder 612, the displacement sub-stream may be input to and decoded by the video decoder 613, and the attribute map sub-stream may be input to and decoded by the video decoder 617.

According to embodiments, the mesh sub-stream may be decoded through the decoder 612 of a static mesh codec used in the encoding such as, for example, Google Draco, to reconstruct connectivity information, vertex geometry information, vertex texture coordinates, and the like related to the result of the decoding, a recon. quantized base mesh, e.g., reconstructed base mesh.

According to embodiments, the displacement sub-stream may be decoded into a displacement video through the decoder 613 of the video compression codec used in the encoding. Then, image unpacking is performed by the image unpacker 614, inverse quantization is performed by the inverse quantizer 615, and inverse transform is performed by the inverse linear lifting unit 616 to reconstruct the displacement information about each vertex (i.e., Recon. displacements).

According to embodiments, the base mesh reconstructed by the static mesh decoder 612 is inversely quantized by the inverse quantizer 620 and output to the mesh reconstructor 630. The mesh reconstructor 630 reconstructs a reconstructed deformed mesh (i.e., a decoded mesh) based on the reconstructed displacements output from the inverse linear lifting unit 616 and the reconstructed base mesh output from the inverse quantizer 620. In other words, the inversely quantized reconstructed base mesh is combined with the reconstructed displacement information to generate a final decoded mesh. In the present disclosure, the final decoded mesh is referred to as a reconstructed deformed mesh.

According to embodiments, the attribute map sub-stream is decoded by the decoder 617 corresponding to the video compression codec used in the encoding, and then a final attribute map (i.e., a decoded attribute map) is reconstructed by the color transformer 640 through color format transform, color space conversion, and the like.

According to embodiments, the reconstructed decoded mesh and decoded attribute map may be utilized at the receiving side as final mesh data that may be utilized by a user.

Referring to FIG. 11, the received compressed bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

As described above, the decoder of FIG. 11 performs intra-frame decoding as follows. The static mesh decoder 612 decodes the mesh sub-stream to generate a reconstructed quantized base mesh, and the inverse quantizer 620 applies the quantization parameters of the quantizer in reverse to generate a reconstructed base mesh. The video decoder 613 decodes the displacement sub-stream, the image unpacker 614 unpacks the image of the decoded displacement video, and the inverse quantizer 615 inversely quantizes the quantized image. The inverse linear lifting unit 616 applies a lifting transform in the reverse process of the encoder to generate a reconstructed displacement. The mesh reconstructor 630 generates a reconstructed deformed mesh based on the reconstructed base mesh and the reconstructed displacement. The video decoder 617 decodes the attribute map sub-stream, and the color transformer 640 transforms the color format and/or space of the decoded attribute map to generate a decoded attribute map.

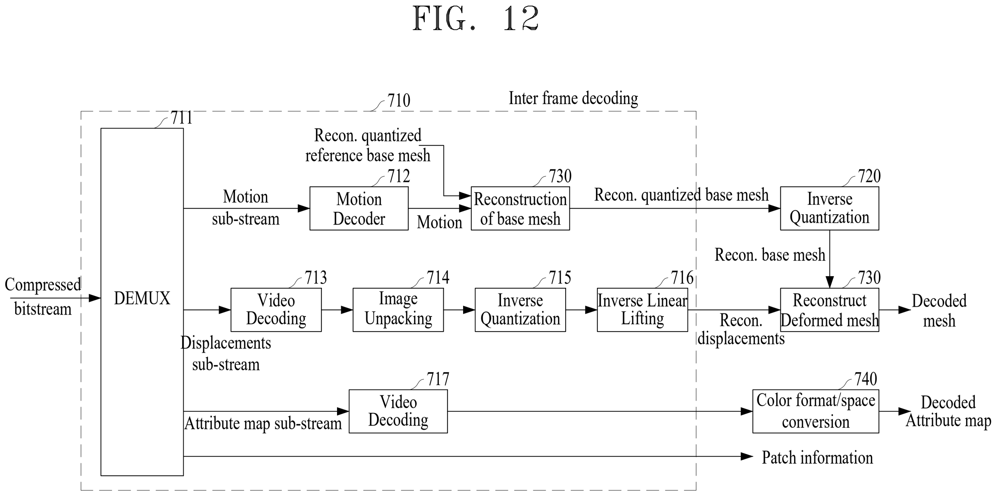

FIG. 12 illustrates an inter-frame decoding (or inter-decoding) process of V-Mesh technology.

FIG. 12 illustrates the configuration and operation of the mesh video decoder 113 of the reception apparatus of FIG. 1. In FIG. 12, mesh data may be reconstructed by performing a reverse process to the inter-frame encoding process of FIG. 7. Each component for the intra-frame decoding process of FIG. 12 corresponds to hardware, software, and/or a combination thereof.

First, the bitstream received and input to the demultiplexer 711 of the intra-frame decoder 710 may be separated into a motion sub-stream (also referred to as a motion vector sub-stream), a displacement sub-stream, an attribute map sub-stream, and a sub-stream containing patch information about the mesh, such as V3C/V-PCC.

According to embodiments, the motion sub-stream may be input to and decoded by the motion decoder 712, the displacement sub-stream may be input to and decoded by the video decoder 713, and the attribute map sub-stream may be input to and decoded by the video decoder 717.

According to embodiments, the motion sub-stream is decoded by the motion decoder 712 through entropy decoding and inverse prediction to reconstruct motion information (also referred to as motion vector information). The base mesh reconstructor 718 combines the reconstructed motion information with a pre-reconstructed and stored reference base mesh to generate a reconstructed quantized base mesh for the current frame. The inverse quantizer 720 applies inverse quantization to the reconstructed quantized base mesh to generate a reconstructed base mesh. The video decoder 713 decodes the displacement sub-stream, the image unpacker 714 unpacks the image of the decoded displacement video, and the inverse quantizer 715 inversely quantizes the quantized image. The inverse linear lifting unit 716 applies a lifting transform in the reverse process of the encoder to generate a reconstructed displacement. The mesh reconstructor 730 generates a reconstructed deformed mesh, i.e., a final decoded mesh, based on the reconstructed base mesh and the reconstructed displacement.

According to embodiments, the video decoder 717 decodes the attribute map sub-stream in the same way as the intra-decoding, and the color transformer 740 transforms the color format and/or space of the decoded attribute map to generate a decoded attribute map. The decoded mesh and decoded attribute map may be utilized at the receiving side as the final mesh data that may be utilized by the user.

Referring to FIG. 12, the bitstream contains motion information (also referred to as motion vectors), displacements, and an attribute map. The process of FIG. 12 further includes decoding the inter-frame motion information because inter-frame decoding is performed. A reconstructed base mesh is generated by decoding the motion information and generating a reconstructed quantized base mesh for the motion information based on the reference base mesh. For the operations in FIG. 12 that are the same as those in FIG. 11, refer to the description of FIG. 11.

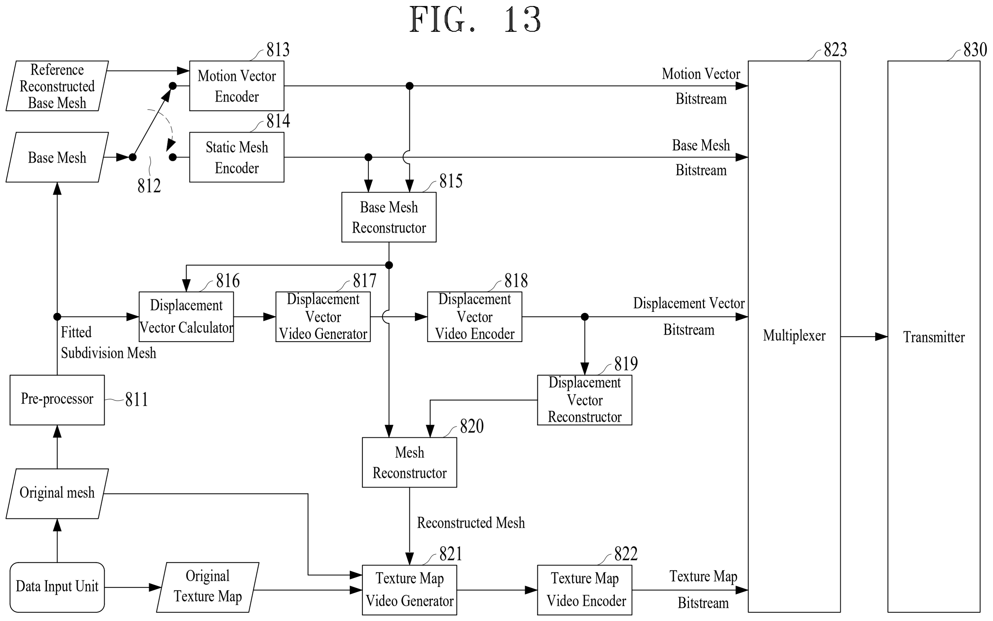

FIG. 13 illustrates a mesh data transmission apparatus according to embodiments.

FIG. 13 corresponds to the transmission apparatus 100 or mesh video encoder 102 of FIG. 1, the encoder (pre-processor and encoder) of FIG. 2, 6, or 7, and/or the corresponding transmission encoding device. Each component of FIG. 13 corresponds to hardware, software, a processor, and/or a combination thereof.

The process of operations at the transmitting end for compressing and transmitting dynamic mesh data using a V-Mesh compression technique may be configured as shown in FIG. 13. The transmission apparatus of FIG. 13 may perform intra-frame encoding (also referred to as intra-encoding or intra-picture encoding) and/or inter-frame encoding (also referred to as inter-encoding or inter-picture encoding).

The pre-processor 811 receives the original mesh and generates a decimated mesh (or base mesh) and a fitted subdivided (or subdivision) mesh. The decimation may be performed based on a target number of vertices or a target number of polygons constituting the mesh. Parameterization may be performed on the decimated mesh to generate texture coordinates and texture connectivity information per vertex. For example, the parameterization is a process of mapping a 3D curved surface into a texture domain for the decimated mesh. When the parameterization is performed using the UVAtlas tool, mapping information indicating where each vertex of the decimated mesh may be mapped to on the 2D image is generated. The mapping information is expressed and stored as texture coordinates, and the final base mesh is generated through this process. The mesh information may be quantized from a floating-point form to a fixed-point form. The result is the base mesh, which may be output to a motion vector encoder 813 or a static mesh encoder 814 through a switching unit 812. The pre-processor 811 may perform a mesh subdivision on the base mesh to generate additional vertices. Depending on the subdivision method, vertex connectivity information including the additional vertices, texture coordinates, and connectivity information about the texture coordinates may be generated. The pre-processor 811 may generate a fitted subdivided mesh by adjusting vertex positions such that the subdivided mesh becomes similar to the original mesh.

According to embodiments, when inter-frame encoding (inter-encoding) is performed on the mesh frame, the base mesh is output to the motion vector encoder 813 through the switching unit 812. When intra-frame encoding (intra-encoding) is performed on the mesh frame, the base mesh is output to the static mesh encoder 814 through the switching unit 812. The motion vector encoder 813 may be referred to as a motion encoder.

For example, when intra-encoding (intra-frame encoding) is performed on the mesh frame, the base mesh may be compressed through the static mesh encoder 814. In this case, the connectivity information, vertex geometry information, vertex texture information, normal information, and the like related to the base mesh may be encoded. The base mesh bitstream generated through the encoding is transmitted to the multiplexer 823.

As another example, when inter-encoding (inter-frame encoding) is performed on the mesh frame, the motion vector encoder 813 may receive as input a base mesh and a reference reconstructed base mesh (or a reconstructed quantized reference base mesh), compute a motion vector between the two meshes, and encode the value thereof. Further, the motion vector encoder 813 may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer 823.

The base mesh reconstructor 815 may receive the base mesh encoded by the static mesh encoder 814 or the motion vector encoded by the motion vector encoder 813, and may generate a reconstructed base mesh. For example, the base mesh reconstructor 815 may perform static mesh decoding on the base mesh encoded by the static mesh encoder 814 to reconstruct the base mesh. In this case, quantization may be applied before the static mesh decoding, and inverse quantization may be applied after the static mesh decoding. In another example, the base mesh reconstructor 815 may reconstruct the base mesh based on the reconstructed quantized reference base mesh and the motion vector encoded by the motion vector encoder 813. The reconstructed base mesh is output to the displacement calculator (or displacement vector calculator) 816 and the mesh reconstructor 820.

The displacement calculator 816 may perform mesh subdivision on the reconstructed base mesh. The displacement calculator 816 may calculate a displacement vector, which is the value of the difference in vertex positions between the subdivided reconstructed base mesh and the fitted subdivision (or subdivided) mesh generated by the pre-processor 811. In this case, displacement vectors as many as vertices in the subdivided mesh may be calculated. The displacement calculator 816 may transform the displacement vectors calculated in the 3D Cartesian coordinate system to a local coordinate system based on the normal vector of each vertex.

The displacement vector video generator 817 may include a linear lifting part, a quantizer, and an image packer. That is, in displacement vector video generator 817, the linear lifting unit may transform the displacement vectors for effective encoding. According to embodiments, the transform may be lifting transform, wavelet transform, or the like. In addition, the quantizer may perform quantization on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image by the image packer. The displacement vector video generator 817 may generate a displacement vector video by grouping the packed 2D images for each frame. A displacement vector video may be generated for each group of frames (GoF) of the input mesh.

The displacement vector video encoder 818 may encode the generated displacement vector video using a video compression codec. The generated displacement vector video bitstream is transmitted to the multiplexer 823.

The displacement vector reconstructor 819 may include a video decoder, an image unpacker, an inverse quantizer, and an inverse linear lifting part. That is, in the displacement vector reconstructor 819, the encoded displacement vector is decoded by the video decoder, image unpacking is performed by the image unpacker, inverse quantization is performed by the inverse quantizer, and inverse transform is performed by the inverse linear lifting unit to reconstruct displacement vectors. The reconstructed displacement vectors are output to the mesh reconstructor 820. The mesh reconstructor 820 reconstructs a deformed mesh based on the base mesh reconstructed by the base mesh reconstructor 815 and the displacement vectors reconstructed by the displacement vector reconstructor 819. The reconstructed mesh (also referred to as the reconstructed deformed mesh) has reconstructed vertices, inter-vertex connectivity information, texture coordinates, and inter-texture coordinate connectivity information.

The texture map video generator 821 may re-generate a texture map based on the texture map (or attribute map) of the original mesh and the reconstructed deformed mesh output from the mesh reconstructor 820. According to embodiments, the texture map video generator 821 may assign the vertex-by-vertex color information in the texture map of the original mesh to the texture coordinates of the reconstructed deformed mesh. According to embodiments, the texture map video generator 821 may generate a texture map video by grouping the frame-level re-generated texture maps into GoFs.

The generated texture map video may be encoded by the texture map video encoder 822 using a video compression codec. A texture map video bitstream generated through the encoding is transmitted to the multiplexer 823.

The multiplexer 823 multiplexes the motion vector bitstream (in the case of, for example, inter-encoding), the base mesh bitstream (in the case of, for example, intra-encoding), the displacement vector bitstream, and the texture map bitstream into a single bitstream. The single bitstream may be transmitted to the receiving side through the transmitter 824. Alternatively, for the motion vector bitstream, the base mesh bitstream, the displacement vector bitstream, and the texture map bitstream, a file with one or more track data may be generated or the bitstreams may be encapsulated into segments and transmitted to the receiving side through the transmitter 824.

Referring to FIG. 13, the transmitter (encoder) may encode the mesh in an intra-frame or inter-frame manner. According to intra-encoding, the transmission apparatus may generate a base mesh, displacement vectors (or displacements), and a texture map (or attribute map). According to inter-encoding, the transmission apparatus may generate a motion vector (or motion), displacement vectors (or displacements), and a texture map (or attribute map). The texture map acquired from the data input unit is generated and encoded based on the reconstructed mesh. The displacements are generated and encoded based on the differences in vertex positions between the base mesh and the segmented (or subdivided) mesh. More specifically, the displacement is a difference in position between the fitted subdivided mesh and the subdivided reconstructed base mesh, i.e., the difference in vertex position between the two meshes. The base mesh is generated by decimating the original mesh through pre-processing and encoding the decimated mesh. For the motion, a motion vector is generated for the mesh in the current frame based on the reference base mesh in the previous frame.

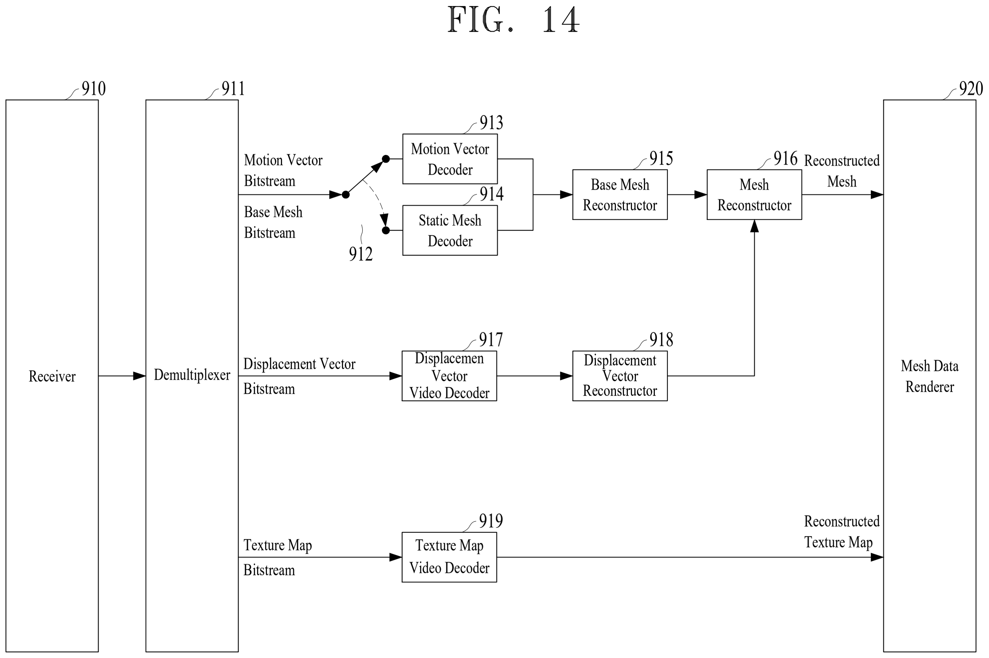

FIG. 14 illustrates a mesh data reception apparatus according to embodiments.

FIG. 14 corresponds to the reception apparatus 110 or mesh video decoder 113 of FIG. 1, the decoder of FIG. 11 or 12, and/or a corresponding reception decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of mesh data received by the receiver 910 is subjected to file/segment decapsulation and then demultiplexed by the demultiplexer 911 into a compressed motion vector bitstream (e.g., inter-decoding) or base mesh bitstream (e.g., intra-decoding), a displacement vector bitstream, and a texture map bitstream. For example, when the current mesh is inter-frame encoded (i.e., inter-encoded), the motion vector bitstream is received, demultiplexed, and then output to the motion vector decoder 913 through the switching unit 912. In another example, when the current mesh is intra-frame encoded (i.e., intra-encoded), the base mesh bitstream is received, demultiplexed, and output to the static mesh decoder 914 through the switching unit 912. Here, the motion vector decoder 913 may be referred to as a motion decoder.

According to embodiments, in the case where inter-frame encoding is applied to the current mesh based on the frame header information, the motion vector decoder 913 may decode the motion vector bitstream. According to embodiments, the motion vector decoder 913 may use the previously decoded motion vector as a predictor and add the same to the residual motion vector decoded from the bitstream to reconstruct the final motion vector.

According to embodiments, in the case where intra-frame encoding is applied to the current mesh based on the frame header information, the static mesh decoder 914 may decode the base mesh bitstream to reconstruct connectivity information, vertex geometry information, texture coordinates, normal information, and the like related to the base mesh.

According to embodiments, the base mesh reconstructor 915 may reconstruct the current base mesh based on the decoded motion vectors or the decoded base mesh. For example, in the case where inter-frame encoding is applied to the current mesh, the base mesh reconstructor 915 may add the decoded motion vectors to the reference base mesh and perform inverse quantization to generate a reconstructed base mesh. In another example, in the case where intra-frame encoding is applied to the current mesh, the base mesh reconstructor 915 may perform inverse quantization on the base mesh decoded by the static mesh decoder 914 to generate a reconstructed base mesh.

According to embodiments, the displacement vector video decoder 917 may decode the displacement vector bitstream as a video bitstream using a video codec.

According to embodiments, the displacement vector reconstructor 918 extracts displacement vector transform coefficients from the decoded displacement vector video, and applies inverse quantization and inverse transform to the extracted displacement vector transform coefficients to reconstruct displacement vectors. To this end, the displacement vector reconstructor 918 may include an image unpacker, an inverse quantizer, and an inverse linear lifting part. If the reconstructed displacement vectors are values in a local coordinate system, inverse transform to the Cartesian coordinate system may be performed.

The mesh reconstructor 916 may subdivide the reconstructed base mesh to generate additional vertices. Through the subdivision, vertex connectivity information including the additional vertices, texture coordinates, and connectivity information about the texture coordinates may be generated. In this case, the mesh reconstructor 916 may combine the subdivided reconstructed base mesh with the reconstructed displacement vectors to generate a final reconstructed mesh (also referred to as a reconstructed deformed mesh).

According to embodiments, the texture map video decoder 919 may decode the texture map bitstream as a video bitstream using a video codec to reconstruct a texture map. The reconstructed texture map has color information about each vertex in the reconstructed mesh, and the texture coordinates of each vertex may be used to obtain the color value of the vertex from the texture map.

According to embodiments, the mesh reconstructed from the mesh reconstructor 916 and the texture map reconstructed from the texture map video decoder 919 are presented to the user through a rendering process in the mesh data renderer 920.

Referring to FIG. 14, the reception apparatus (decoder) may decode the mesh in an intra-frame or inter-frame manner. According to intra-decoding, the reception apparatus may receive a base mesh, displacement vectors (or displacements), and a texture map (or attribute map), and render mesh data based on the reconstructed mesh and reconstructed texture map. According to inter-decoding, the reception apparatus may receive a motion vector (or motion), the displacement vectors (or displacements), a texture map (or attribute map), and render mesh data based on the reconstructed mesh and the reconstructed texture map.

A mesh data transmission apparatus and method according to embodiments may pre-process mesh data, encode the pre-processed mesh data, and transmit a bitstream containing the encoded mesh data. A point mesh data reception apparatus and method according to embodiments may receive a bitstream containing mesh data and decode the mesh data. The mesh data transmission/reception method/apparatus according to embodiments may be referred to as a method/apparatus according to embodiments. The mesh data transmission/reception method/apparatus may also be referred to as a 3D data transmission/reception method/apparatus or point cloud data transmission/reception method/apparatus.

As described above, in the V-Mesh method, the displacement information generated during the encoding process is converted into a video and is then compressed using an existing 2D video codec. The compressed displacement information is then reconstructed by performing the reverse process of the 2D video codec. More specifically, the V-DMC encoder (also referred to as an encoder or encoding device) may calculate a displacement vector representing the difference between a reconstructed mesh of a base mesh and a fitted mesh obtained during a pre-processing stage, and transform the calculated displacement vector in a canonical coordinate system (i.e., x, y, z format) into a local coordinate system (i.e., normal, tangential, bi-tangential format). Thereafter, it may perform a lifting transform and quantization on the displacement vector in the local coordinate system, and encode the vector into a displacement vector bitstream. In this case, the V-DMC decoder (also referred to as a decoder or decoding device) performs a reverse process of the V-DMC encoder to reconstruct the displacement vector. That is, instead of compressing the displacement vector directly in the x, y, z format of the canonical coordinate system, the displacement vector is transformed into the normal, tangential, and bi-tangential format of the local coordinate system. Then, lifting transform and quantization are performed, and the vector in encoded and transmitted in a simple form of displacement vector coefficients, such as 0, 1, and 2. In this process, the encoder performs coordinate transformation calculation on the three components of normal, tangential, and bi-tangential and carries out the entire displacement vector encoding process for each component, which may be inefficient in terms of compression performance and transmission speed.

To achieve more efficient compression and transmission, the present disclosure proposes that the encoder of the transmission apparatus pack only the normal and tangential components of the displacement vector while skipping the packing of the bi-tangential component, and perform encoding and bitstream transmission, and that the decoder of the reception apparatus calculate the bi-tangential component based on the transmitted normal and tangential components, and perform decoding based thereon to obtain the final displacement vector.

That is, the present disclosure proposes methods in which the encoder of the transmission apparatus encodes and transmits only the normal and tangential components among the normal, tangential, and bi-tangential components transformed into a local coordinate system, excluding the bi-tangential component, and the decoder of the reception apparatus decodes the bi-tangential component based on the received normal and tangential components. The present disclosure also proposes packing methods and signaling methods according to various image packing formats. As such, compared to transmitting all three components (normal, tangential, and bi-tangential) as in conventional cases, compressing and transmitting only two components may enable efficient bit reduction and result in mesh data with better image quality.

As described above, the present disclosure relates to V-DMC, which is a method of compressing 3D dynamic mesh data based on a conventional 2D video codec. It describes an apparatus and method for performing encoding/decoding per displacement vector in the displacement vector transformation and quantization stages, as well as related syntax and semantics information. In particular, the present disclosure describes a method of packing and encoding and decoding only the normal and tangential components among the three displacement vector components, i.e., normal, tangential, and bi-tangential, a 2D image packing method according to a displacement vector video format, and signaling methods according to an indication about whether the packing of the bi-tangential component of the displacement vector is skipped and the image packing format. It also describes the operations of a transmitter and receiver using these methods.

In the present disclosure, geometry information (also referred to as geometry or geometry data), which is one of the elements that constitute a mesh, includes vertices (or points), edges, and polygons. Here, a vertex defines a position in 3D space, an edge represents connectivity between vertices, and a polygon, which is a combination of edges and vertices, defines the surface of the mesh. In other words, each vertex that constitutes the mesh represents a position in 3D space, expressed as, for example, x, y, z coordinates (i.e., canonical coordinates). The polygon may be a triangle or a quadrilateral. In other words, geometry forms the skeleton of a 3D model, defines the shape of a model, and is visually represented when rendered.

In the present disclosure, the terms "vertex" and "point" may be used interchangeably. That is, a vertex has coordinates in a 3D space, and a polygon such as a triangle or quadrilateral may be formed by connecting multiple vertices. In addition, the term "V-DMC" referred to in the present disclosure may also be referred to as "V-mesh." The two terms are used interchangeably.

The displacement information may be acquired based on subdivided meshes (or sub-meshes). That is, the difference in position of each vertex between a fitted subdivision mesh and a subdivided reconstructed base mesh is calculated, wherein the fitted subdivided mesh is generated by performing a fitting procedure to make the input mesh and sub-mesh similar to each other, and the subdivided reconstructed base mesh is generated by subdividing the reconstructed base mesh. In the present disclosure, the difference in vertex position is referred to as a displacement vector. In the term displacement vector is used interchangeably with displacement or displacement information. Also, the terms displacement video may be used interchangeably with displacement vector video or displacement vector transform coefficient video, and the term displacement vector may be used interchangeably with displacement vector transform coefficients or displacement vector coefficients.

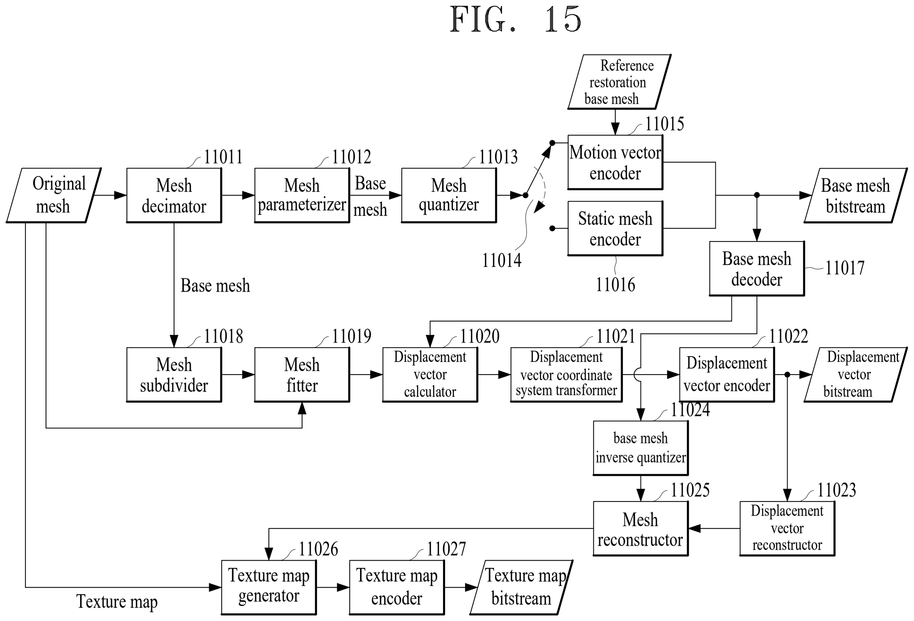

FIG. 15 illustrates a transmission apparatus according to the embodiments. The transmission apparatus of FIG. 15 may be referred to as a mesh data transmission apparatus, an encoder, an encoder of a transmission apparatus, a V-Mesh encoder, or a dynamic mesh encoder.

FIG. 15 corresponds to the transmission device 100 or mesh video encoder 102 of FIG. 1, the encoder (pre-processor and encoder) of FIG. 2, 6, or 7, the transmission apparatus of FIG. 13, and/or the corresponding transmission encoding apparatus. Each component of FIG. 15 corresponds to hardware, software, a processor, and/or a combination thereof. In FIG. 15, the order in which the blocks are executed may be changed. Some blocks may be omitted, and some blocks may be newly added.

In the present disclosure, the transmitting operation process for compression and transmission of dynamic mesh data using the V-Mesh compression technique may be performed as illustrated in FIG. 15. The transmission apparatus of FIG. 15 may support both an intra-frame encoding (or intra encoding or intra-screen encoding) process and/or an inter-frame encoding (or inter encoding or inter-screen encoding) process.

In FIG. 15, the mesh decimator 11011 simplifies the input original mesh using a mesh simplification algorithm to generate a base mesh (also referred to as a simplified base mesh or simplified mesh). The mesh simplification may be performed based on the number of target vertices or the number of target polygons constituting the mesh. For example, decimation or the like may be used as a mesh simplification algorithm for simplifying the original mesh. Specifically, the decimation may be a process of selecting vertices to be removed from the original mesh based on a certain reference point, and then removing the selected vertices and triangles connected to the selected vertices.

In other words, the mesh decimator 11011 may simplify the input mesh to a target number of vertices or a target number of faces. The simplification may be performed using various methods, such as triangle collapse and edge collapse.

According to embodiments, the base mesh simplified by the mesh decimator 11011 is provided to the mesh parameterizer 11012 and the mesh subdivider 11018.

The mesh parameterizer 11012 performs an operation of mapping a 3D surface to a texture domain for the decimated mesh. That is, the mesh parameterizer 11012 generates texture coordinate information and texture connectivity information related to the input mesh. In one embodiment, the mesh parameterizer 11012 may perform parameterization using a UV Atlas tool. In this operation, mapping information indicating a position to which each vertex of the decimated mesh may be mapped to in the 2D image is generated. The mapping information is expressed and stored as texture coordinates, and the final base mesh is generated through this operation. In other words, the mesh parameterizer 11012 performs parameterization to generate texture coordinates (UV coordinates) and texture connectivity information per vertex of the input mesh (i.e., the decimated mesh or decimated base mesh).

The final base mesh (also referred to as a base mesh with a texture map) generated by the parameterizer 11012 is input to the mesh quantizer 11013 to be quantized. According to embodiments, the mesh quantizer 11013 may quantize the mesh information (e.g., geometry information (x, y, z) and/or texture coordinates (u,v), normal information (nx, ny, nz), etc.) in floating point form to fixed-point form. That is, the mesh quantizer 11013 may quantize the vertex coordinates and texture coordinates of the base mesh. In some embodiments, quantization of a specific component may be skipped.

The mesh subdivider 11018 subdivides the base mesh obtained through decimation by the mesh decimator 11011. The mesh subdivider 11018 may perform mesh subdivision on the base mesh to generate additional vertices. Depending on the subdivision method, vertex connectivity information including the additional vertices, texture coordinates, and connectivity information about the texture coordinates may be generated. In this case, the geometry information connectivity information, texture coordinate connectivity information, and texture coordinates may be generated through implicit derivation depending on the subdivision method. According to embodiments, the mesh subdivider 11018 may perform the subdivision using a method such as mid-edge, Loop, or Catmul&Clark.

According to embodiments, a mesh fitter 11019 may perform fitting by adjusting the vertex positions such that the subdivided mesh from the mesh subdivider 1101 becomes similar to the original mesh, thereby generating a fitted subdivided mesh.

In the present disclosure, the combination of the mesh decimator 11011, the mesh parameterizer 11012, the mesh subdivider 11018, and the mesh fitter 11019 may be referred to as a pre-processor. According to embodiments, the pre-processor may further include a displacement vector calculator 11020.

According to embodiments, the base mesh quantized by the mesh quantizer 11013 may be output to a motion vector encoder 11015 or a static mesh encoder 11016 through a switching part 11014.

According to embodiments, when inter-frame encoding (inter encoding) is performed on the mesh frame, the base mesh is output to the motion vector encoder 11015 through the switching part 11014. When intra-frame encoding (intra encoding) is performed on the mesh frame, the base mesh is output to the static mesh encoder 11016 through the switching part 11014. The motion vector encoder 11015 may be referred to as a motion encoder.

In one example, when intra encoding (intra-frame encoding) is performed on the mesh frame, the base mesh may be compressed by the static mesh encoder 11016. In this case, the connectivity information, vertex geometry information, vertex texture information, normal information, and the like related to the base mesh may be encoded. That is, vertex coordinates, vertex connectivity information, texture coordinates, texture connectivity information, and the like related to the mesh may be encoded by the static mesh encoder 11016. The base mesh bitstream generated through the encoding is transmitted to the multiplexer (not shown).

In another example, when inter encoding (inter-frame encoding) is performed on the mesh frame, the motion vector encoder 11015 may receive a base mesh and a reference reconstructed base mesh (or a reconstructed quantized reference base mesh) as input, calculate a motion vector between the two meshes, and encode the value thereof. Further, the motion vector encoder 11015 may perform connectivity information-based prediction using the previously encoded/-decoded motion vector as a predictor, and perform entropy encoding on a motion vector difference (also referred to as a residual motion vector), which is obtained by subtracting the predicted motion vector from the current motion vector. The motion vector bitstream generated through the encoding is transmitted as the base mesh bitstream to the multiplexer (not shown). That is, in the case of intra-frame encoding, the static mesh bitstream is input to the multiplexer as the base mesh bitstream.

In FIG. 15, the base mesh decoder 11017 may receive the base mesh encoded by the static mesh encoder 11016 or the motion vectors encoded by the motion vector encoder 11015, and generate a reconstructed base mesh. The base mesh decoder 11017 reconstructs the base mesh based on the encoding type of the current mesh (inter-frame encoding or intra-frame encoding). For example, the base mesh decoder 11017 may reconstruct the base mesh by performing static mesh decoding on the base mesh encoded by the static mesh encoder 11016. In this case, quantization may be applied before the static mesh decoding, and inverse quantization may be applied after the static mesh decoding. In other words, when intra-frame encoding is performed, inverse quantization may be performed on the base mesh quantized by the mesh quantizer 11013 to reconstruct the current base mesh. As another example, the base mesh decoder 11017 may reconstruct the base mesh based on the reconstructed quantized reference base mesh and the motion vectors encoded by the motion vector encoder 11015. In other words, when inter-frame encoding is performed, motion vectors may be decoded using a motion vector decoding method, and then the decoded motion vectors may be applied (i.e., added) to the reference reconstructed base mesh to generate the current base mesh. In the case where the motion vectors have not been quantized, the motion vector reconstruction process may be skipped, and the motion vectors calculated by the motion vector encoder 11015 may be used to reconstruct the current base mesh. The reconstructed base mesh is output to the displacement vector calculator 11020 and the mesh inverse quantizer 11024.

According to embodiments, the displacement vector calculator 11020 may perform mesh subdivision on the reconstructed base mesh. Further, the displacement vector calculator 11020 may calculate a displacement vector, which is the value of the difference in vertex position between the subdivided reconstructed base mesh and the fitted subdivision (or subdivided) mesh generated by the mesh fitter 11019. In this case, the displacement vectors may be calculated as many times as the number of vertices in the subdivided mesh. In other words, the displacement vectors corresponding to the number of vertices in the subdivided mesh may be calculated by the displacement vector calculator 11020.

According to embodiments, the displacement vector coordinate transformer 11021 may output the vertex displacement vectors calculated in a 3D Cartesian coordinate system (i.e., (x, y, z) space (also referred to as a canonical coordinate system)) or transform the same to a local coordinate system (i.e., a normal, tangential, bi-tangential coordinate system) based on the normal vector of each vertex. Here, the normal vector may be calculated for each subdivided vertex based on the geometry information and connectivity information about neighboring vertices.

Whether the displacement vector coordinate system is to be transformed by the displacement vector coordinate transformer 11021 may be determined by a preset agreement between the encoder (i.e., the transmission apparatus), and the decoder (i.e., the reception apparatus). Alternatively, a displacement vector coordinate system transformation flag (asps_vmc_ext_displacement_coordinate_system), which is information for identifying whether coordinate system transformation is performed, may be signaled to the reception apparatus through signaling information. For example, Atlas Sequence Parameter Set, ASPS. For example, when the value of the asps_vmc_ext_displacement_coordinate_system syntax (or field) is 0, it indicates that the canonical coordinate system is used. When the value is 1, it indicates that transformation to the local coordinate system is performed.

According to embodiments, the displacement vector in the canonical coordinate system or the displacement vector transformed to the local coordinate system by the displacement vector coordinate transformer 11021 is encoded into a displacement vector bitstream (also referred to as a displacement vector video bitstream) by the displacement vector encoder 11022. In one embodiment, the displacement vector encoder 11022 may encode the displacement vector in the canonical coordinate system or the displacement vector transformed to the local coordinate system into a displacement vector bitstream using a 2D video encoder such as H.264, HEVC, or VVC.

That is, the displacement vector encoder 11022 may encode the displacement vectors or displacement vector coefficients (also referred to as displacement vector transform coefficients). In the present disclosure, the displacement vector encoder 11022 may perform encoding using a video codec-based encoder, a zero run-length encoder, an arithmetic encoder, or the like. For example, when the encoding method is video codec-based encoding, the displacement vector encoder 11022 may pack the displacement vectors or displacement vector coefficients into a frame for encoding. That is, the displacement vector encoder 11022 may pack the displacement vector coefficients into a 2D image and then encode the same using a 2D video codec (i.e., a video compression codec), zero run-length encoding, or arithmetic encoding to generate a displacement vector video bitstream.

According to embodiments, the displacement vector video bitstream generated through encoding by the displacement vector encoder 11022 is transmitted to the multiplexer (not shown). According to embodiments, as a method of selecting encoding of the displacement vector encoder 11022, a displacement vector encoder agreed upon by the encoder (i.e., transmitting side)/decoder (i.e., receiving side) may be used, or the encoder on the transmitting side may transmit, to the decoder on the receiving side, the type of displacement vector encoder selected by analyzing the characteristics of the displacement vectors.

According to embodiments, the displacement vector reconstructor 11023 may reconstruct the displacement vectors by performing the reverse process of the displacement vector encoding on the displacement vectors or displacement vector transform coefficients encoded by the displacement vector encoder 11022. That is, the displacement vector reconstructor 11023 may unpack the displacement vectors according to the encoding method, for example, when the displacement vectors have been encoded based on a video codec. The displacement vector reconstructor 11023 may further perform inverse quantization, inverse transformation, or the like depending on whether quantization and transformation have been performed during the displacement vector encoding process.

According to embodiments, the mesh inverse quantizer 11024 may perform inverse quantization on the vertex coordinates or texture coordinates of the reconstructed base mesh through the inverse process of quantization. In the case where the quantization by the mesh quantizer 11013 is skipped, the inverse quantization by the mesh inverse quantizer 11024 is also skipped.

According to embodiments, the mesh reconstructor 11025 may reconstruct a mesh based on the reconstructed displacement vectors output from the displacement vector reconstructor 11023 and the reconstructed base mesh (or inverse-quantized reconstructed base mesh) output from the mesh inverse quantizer 11024. More specifically, the mesh reconstructor 11025 may subdivide the reconstructed base mesh output from the mesh inverse quantizer 11024 and add the reconstructed displacement vectors from the displacement vector reconstructor 11023 to the subdivided base mesh to generate a reconstructed deformed mesh. According to embodiments, the mesh reconstructed by the mesh reconstructor 11025 (also referred to as the reconstructed mesh or reconstructed deformed mesh) includes reconstructed vertices, inter-vertex connectivity information, texture coordinates, and connectivity information about the texture coordinates. The reconstructed mesh (or reconstructed deformed mesh) generated by the mesh reconstructor 11025 is provided to the texture map generator 11026.

According to embodiments, the texture map generator 11026 may regenerate the texture map of the current mesh based on the texture map (also referred to as an attribute map) of the original mesh and the reconstructed mesh from the mesh reconstructor 11025. That is, the texture map generator 11026 may generate a texture map of the reconstructed mesh based on the texture map of the original mesh and the relationship between the original mesh and the reconstructed mesh.

According to embodiments, the texture map generator 11026 may assign per-vertex color information included in the texture map of the original mesh to the texture coordinates of the reconstructed base mesh (or reconstructed deformed mesh). According to embodiments, the texture map generator 11026 may group the regenerated texture maps for each frame into GoFs to generate a texture map (or texture map video).

The texture map generated by the texture map generator 11026 may be encoded by the texture map encoder 11027. For example, the texture map encoder 11027 may encode the texture map using a 2D video codec-based encoder, a zero run-length encoder, or an entropy coding-based arithmetic encoder. Additionally, the texture map encoder 11027 may perform color space conversion on the texture map. The texture map substreams (or texture map video bitstreams) generated through texture map encoding are transmitted to the multiplexer (not shown).

According to embodiments, types of the texture map encoder 11027 may include a video encoder (e.g., VVC, HEVC) and an entropy coding-based encoder. As a method of selecting the texture map encoder 11027, a texture map encoder agreed upon by the encoder (i.e., the transmitting side)/decoder (i.e., the receiving side) may be used, or the type of texture map encoder selected by the encoder on the transmitting side may be transmitted to the decoder on the receiving side.

According to embodiments, the multiplexer (not shown) may multiplex the input base mesh bitstream, displacement vector bitstream, and texture map bitstream into a single bitstream and transmit the multiplexed bitstream to the reception apparatus. Alternatively, the base mesh bitstream, displacement vector bitstream, and texture map bitstream may be encapsulated into a file/segment and transmitted to the reception apparatus.

According to embodiments, the bitstreams multiplexed by the multiplexer may be transmitted over a network and/or stored on a digital storage medium. The network may include a broadcast network and/or a communication network, and the digital storage medium may include various storage media, such as USB, SD, CD, DVD, Blu-ray, HDD, and SSD.

In this way, the V-DMC encoding device (or the transmission apparatus) simplifies the original mesh and generates a base mesh through mesh parameterization. The generated base mesh is quantized. In the case of an inter-frame, motion vectors are calculated from a previously reconstructed reference base mesh and encoded. In the case of an intra-frame, a base mesh bitstream is transmitted via a static mesh encoder. In addition, after subdividing and fitting the simplified mesh derived from the original mesh, the mesh data is compared with the previous mesh data obtained by reconstructing the encoded mesh to calculate displacement vectors representing the differences for each vertex. To efficiently encode the calculated displacement vectors, the displacement vector coordinate system is transformed to a local coordinate system, and the displacement vector encoder 12022 transforms the displacement vectors in the local coordinate system into displacement vector coefficients, quantizes the displacement vector coefficients, and encodes the same into a displacement vector bitstream to be transmitted.

Hereinafter, a description will be given of the process in which the normal and tangential components among the normal, tangential, and bi-tangential vector components transformed into the local coordinate system by the displacement vector encoder 12022 are subjected to lifting transform and quantization to obtain displacement vector coefficients to be encoded, as well as a component signaling method of displacement vectors according to video image packing formats. The principles at each step are described in detail below.

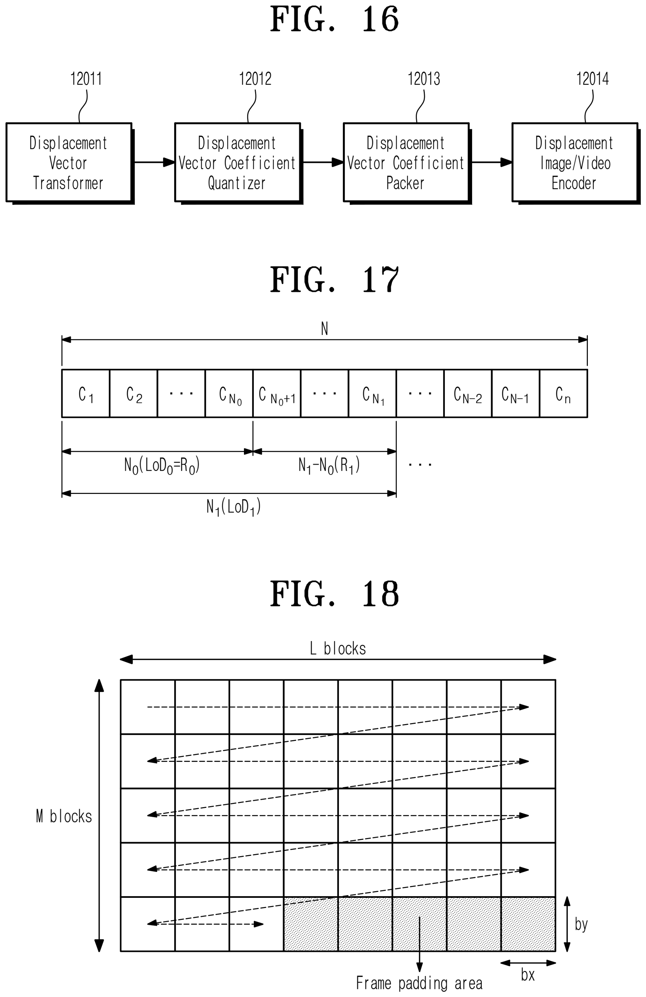

FIG. 16 illustrates a block diagram of an example displacement vector encoder according to embodiments. In FIG. 16, the displacement vector encoder 11022 may include a displacement vector transformer 12011, a displacement vector coefficient quantizer 12012, a displacement vector coefficient packer 12013, and a displacement vector image/-video encoder 12014. Each component in FIG. 16 may correspond to hardware, software, a processor, or a combination thereof. The execution order of the blocks in FIG. 16 may be changed, some blocks may be omitted, and new blocks may be added. In the present disclosure, the displacement vector encoder performs displacement vector coefficient image packing according to each video image format and then encodes the image-packed displacement vector coefficients using a 2D video codec.

More specifically, the displacement vector transformer 12011 may perform linear lifting transform, butterfly lifting transform, wavelet transform, or the like on displacement vectors in the (x, y, z) or (n, t, bt) coordinate system to transform the displacement vectors in the (x, y, z) or (n, t, bt) coordinate system into displacement vector coefficients. In the (n, t, bt) coordinate system, n denotes normal, t denotes tangential, and bt denotes bi-tangential.

For example, when lifting transform is performed to predict vertex $R_k$ of the k-th subdivision level, the subdivided vertex displacement vector of $R_t$ (where t<k or t<=k) may be used as a predictor for displacement vector prediction at the k-th subdivision level. In some embodiments, in predicting the displacement vector, an average or distance-based weighted average of the n nearest points based on connectivity information among the vertices at a lower subdivision level than the current vertex may be predicted. In some embodiments, the prediction may be performed based on the displacement vectors of the n vertices that are used to generate the current vertex in the mesh subdivision operation. When lifting transform is performed, the displacement vectors of the vertices used for prediction may be updated with the residual signal generated from the prediction.

When packing is skipped for the bi-tangential component of the displacement vector, the displacement vector transformer 12011 may perform displacement vector transformation only for the normal and tangential components, excluding the bi-tangential component.

According to embodiments, the displacement vector quantizer 12012 may perform quantization on displacement vector values, i.e., displacement vectors or displacement vector coefficients, transformed by the displacement vector transformer 12011. For example, when the displacement vector transformer 12011 has transformed all of the normal, tangential, and bi-tangential components, the displacement vector quantizer 12012 quantizes the displacement vector coefficients of the normal, tangential, and bi-tangential components. As another example, when only the normal component and tangential component have been transformed by the displacement vector transformer 12011, the displacement vector quantizer 12012 quantizes the displacement vector coefficients of the normal and tangential components. In the present disclosure, displacement vector coefficients are used interchangeably with displacement vector transform coefficients.

According to embodiments, the displacement vector quantizer 12012 may derive quantized values (quant) for each channel by multiplying the displacement vector coefficient (value) by a scale factor and adding an offset as shown in Equation 1 below. The channels may correspond to x, y, and z, or n, t, and b, depending on the coordinate system of the displacement vector. When the bi-tangential component is skipped, displacement vector coefficients may be quantized only for the normal and tangential components. Equation 1 represents the calculation of quantized values for each channel, and Equation 2 represents the calculation of scale values for each channel.

[Equation 1]

$$\text{quant}[\text{channel}] = \text{value}[\text{channel}] \times \text{scale}[\text{channel}] + \text{offset}$$

[Equation 2]

$$scale[channel] = 2^{\alpha+(QP[channel]+\beta)/\gamma} \times level\_scale[channel]$$

In Equation 1, the offset may use a fixed value for each channel per sequence or frame. In Equation 1, scale may be determined by the quantization parameter QP and the level-specific scale level_scale as shown in Equation 2.

For level_scale in Equation 2, predetermined values may be used for each level per frame or sequence. In addition, $\alpha$, $\beta$, and $\gamma$ may be parameter constants defined in the encoder. Similarly, for scale, an individual value may be defined for each channel of the displacement vector.

According to embodiments, the displacement vector coefficient packer 12013 may pack the quantized displacement vector coefficients into a 2D image of size WxH. That is, when the displacement vector encoder 11022 uses a video codec-based encoding method to encode displacement vector coefficients, the packing of displacement vector coefficients into a 2D image frame is performed by the displacement vector coefficient packer 12013. In other words, the displacement vector coefficient packer 12013 may pack the displacement vector coefficients into a 2D image, and the displacement vector image/video encoder 12014 may encode the packed 2D images using a video compression codec.

FIG. 17 illustrates an example of the structure of displacement vector coefficients according to embodiments. In FIG. 17, let the total number of displacement vector coefficients be N, the number of displacement vector coefficients included in LoD0 be N0(LoD0 = $R_0$), and the number of displacement vector coefficients included in LoD1 be N1(LoD1). Then, the number of displacement vector coefficients at level 0 ($R_0$) is N0, and the number of displacement vector coefficients at level 1 ($R_1$) is N1-N0. That is, the number of displacement vector coefficients included in LoD1, N1, is the sum of the number of displacement vector coefficients at level 0 ($R_0$), N0, and the number of coefficients at level 1 ($R_1$), N1-N0.

According to embodiments, the displacement vector coefficient packer 12013 may pack N displacement vector coefficients (e.g., N quantized displacement vector coefficients) into a W×H image. In the present disclosure, W×H may be the size of a frame into which displacement vector coefficients are packed as a 2D image.

Vertices of a higher layer LoD undergo lifting transform first. Thus, as shown in FIG. 17, the displacement vector coefficients of the lower LoD are stored at the front, and the displacement vector coefficients of the higher LoD are stored at the rear. In this regard, packing may be performed separately for each of the normal, tangential, and bi-tangential components. Alternatively, packing may be skipped for some components. For example, packing may be skipped for the bi-tangential component.

FIG. 18 is a diagram illustrating an example of packing displacement vector coefficients according to embodiments. That is, the displacement vector coefficients in the 1D form in FIG. 17 may be packed into a 2D image as shown in FIG. 18.

According to embodiments, the displacement vector coefficient packer 12013 may configure bx×by sized blocks from the 1D vector or scalar displacement vector coefficients (also referred to as transform coefficient levels) and pack the respective blocks according to a scanning order agreed upon by the encoder/decoder, such as z-scan order, zig-zag scan order, or 2D Morton code order. That is, the L×M displacement vector coefficient blocks may be packed into an image of size (bx*L)×(by*M) according to the order defined by the encoder/decoder. Here, L×M may be the number of blocks of size bx*by, and bx and by may each be 16. That is, every 256 (16*16) displacement vector coefficients may constitute one block, and the blocks may be packed according to a z-scan order or zig-zag scan order. In other words, in a block, the displacement vector coefficients may be packed according to a z-scan order, zig-zag scan order, or 2D Morton code order. In other words, a block may be configured to have the size bx*by, and L×M blocks determined according to the number of displacement vector coefficients, N, may be configured. Then, packing may be performed into a 2D image of size W×H according to 2D Morton code, zig-zag scan order, or the like.

To pack the displacement vector coefficients of all levels into one frame as a 2D image, packing may be sequentially performed starting from the displacement vector coefficient blocks of level 0 ($R_0$) according to the scan order. In the case where the total size of the displacement vector coefficients is smaller than L×M, padding is performed as shown in FIG. 18 such that the image has the size (bx*L) ×(by*M). That is, when the total number of displacement vector coefficients is smaller than (bx*L)×(by*M), padding may be performed such that the displacement vector image may have size (bx*L)×(by*M). FIG. 18 illustrates an example in which padding is performed on five blocks. Here, padding means filling the block with a meaningless value (e.g., 0). In another example, when displacement vector coefficients of multiple levels are packed into a single frame as a 2D image, packing may be sequentially performed starting from the displacement vector blocks of a lower level according to the scan order. In another example, packing and padding may be performed in reverse order compared to the order of FIG. 18 to construct the 2D image.

According to embodiments, L and M may be determined according to the number of displacement vector coefficients, N. Alternatively, after defining L (or M) according to an agreement between the encoder/decoder, M (or L) may be derived according to the number of displacement vector coefficients, N, as in Equation 3 below. Equation 3 is an example of deriving M when L is defined according to an agreement between the encoder/decoder.

[Equation 3]

$$blockNum = round(\frac{N+bx*by-1}{bx*by}) \quad M = round((blockNu + L - 1)/L)$$

In Equation 3, the round function rounds the number inside the parentheses to the nearest integer.

According to embodiments, the method of packing displacement vector coefficients by the displacement vector coefficient packer 12013 may be determined by the encoder/decoder according to an agreement, or the packing method performed by the displacement vector coefficient packer 12013 may be transmitted to the decoder of the reception apparatus.

According to embodiments, the displacement vector coefficients of all levels may be packed into a single image (i.e., a single frame) and may be encoded by the displacement vector image/video encoder 12014. Alternatively, the displacement vector coefficients may be packed into separate images (i.e., separate frames) according to the respective subdivision levels (R) to be encoded. Alternatively, the displacement vector coefficients of a specific level may be packed into one image, while the displacement vector coefficients of two or more other levels may be packed into another image.

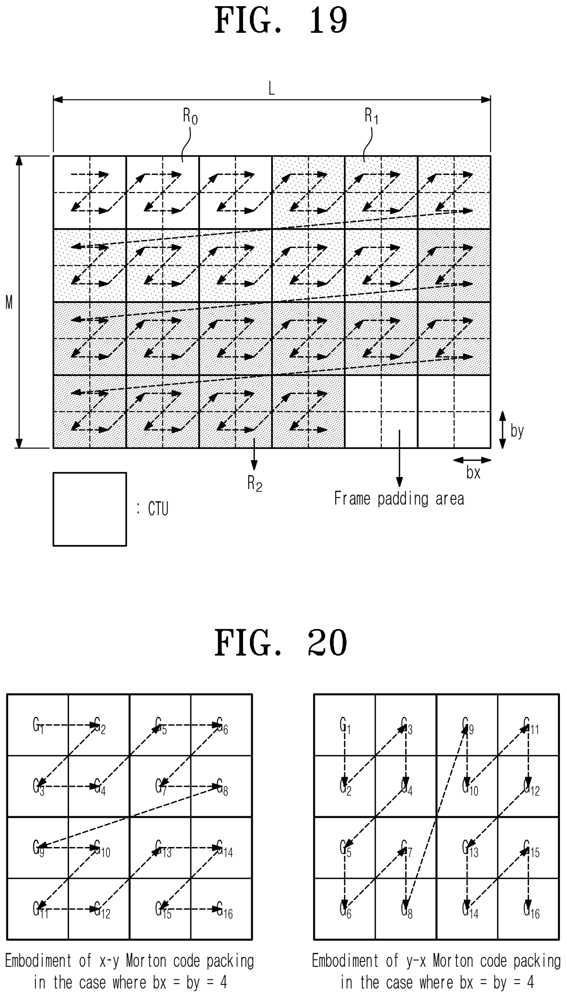

FIG. 19 is a diagram illustrating an example of packing displacement vector coefficient blocks for each LoD according to embodiments. According to embodiments, packing of displacement vector coefficient blocks (bx×by) may be performed per LoD level to match the CTU (Coding Tree Unit) size of the 2D video encoder as shown in FIG. 19. To match the CTU size for each LoD, a median value or of the image or the value of the last displacement vector coefficient may be used. In FIG. 19, CTU is used in splitting a video frame into coding tree units. In particular, it is a unit used when encoding is performed by splitting the video frame according to a tree structure.

In one embodiment, FIG. 19 illustrates an example of packing displacement vector coefficients of three levels ($R_0$-$R_2$) into a single image. That is, the figure illustrates an example of packing the displacement vector coefficients of $R_0$, $R_1$, and $R_2$ into a single frame. Here, when the number of the displacement vector coefficients of $R_0$, $R_1$, and $R_2$ is smaller than the frame size, there may be a padding area.

As shown in FIG. 19, when packing displacement vector coefficients of each level into one or more frames, the displacement vector coefficients may be packed into a bx×by-sized block.

In a displacement vector coefficient block, bx×by displacement vector coefficients may be packed in a zig-zag scan order, or may be packed according to a 2D Morton code order as shown in FIGS. 20-(a) and 20-(b).

FIGS. 20-(a) and 20-(b) illustrate examples of packing methods for displacement vector coefficients in a displacement vector coefficient block according to embodiments.

FIG. 20-(a) illustrates an example of packing 16 displacement vector coefficients (C1 to C16) in a block in x-y Morton code order when bx=by=4. FIG. 20-(b) illustrates an example of packing 16 displacement vector coefficients (C1 to C16) in a block in y-x Morton code order within a block when bx=by=4.

According to embodiments, the size of a frame into which displacement vector coefficients are packed may be determined as (bx×L)×(by×M), where the parameters bx and by define the width and height of each block, and the parameters L and M define the number of blocks in each row and column of the frame. The parameters L and M may be determined by the encoder/decoder according to an agreement. Alternatively, L (or M) may be defined by an agreement between the encoder/decoder, and then M (or L) may be derived according to the number of displacement vector coefficients (see Equation 3), or may be derived according to the level.

The displacement vector coefficients transformed into the local coordinate system may have normal, tangential, and bi-tangential components. The displacement vector coefficient packer 12013 may select a format such as YUV 4:4:4, YUV 4:2:0, or YUV 4:0:0 to perform image packing, and configure the displacement vector coefficients according to each format. For some components, packing may be skipped.

In the present disclosure, the YUV 4:4:4, YUV 4:2:0, and YUV 4:0:0 represent the formats for packing the normal, tangential, and bi-tangential components of displacement vector coefficients into an image. Sampling of displacement vector coefficients V1(N1, T1, B1) to V4(N4, T4, B4) may be performed differently for each format in units of four vertices.

In the present disclosure, the YUV 4:4:4 format means that the size of the Y channel ($w_y*h_y$), the size of the U channel ($w_u*h_u$), and the size of the V channel ($w_v*h_v$) are the same. The YUV 4:2:0 format means that the size of the U channel ($w_u*h_u$) and the size of the V channel ($w_v*h_v$) are smaller than the Y channel ($w_y*h_y$) by a predetermined factor (e.g., 4). Also, the YUV 4:0:0 format means only the Y channel ($w_y*h_y$) is given, which means packing is performed only on the Y channel. That is, there is only the Y channel among the Y, U, and V channels.

For simplicity, in the present disclosure, YUV 4:4:4 is interchangeably used with a first format, YUV 4:2:0 with a second format, and YUV 4:0:0 with a third format. For simplicity, the Y channel may be referred to as For simplicity, a first channel, the U channel as a second channel, and the V channel as a third channel. Terms such as first, second, third, etc., may be used in describing components, and the components should not be limited by these terms. The terms are used for the purpose of distinguishing one component from another. For example, a first component may be referred to as a second component, and similarly, the second component may also be referred to as a first component without departing from the scope of the present disclosure. Alternatively, the first component may be referred to as a third component.

According to embodiments, the encoder may signal the image packing format information (ColourSpace_displacement_video) related to the determined displacement vector coefficients and information for identifying whether packing of the bi-tangential component is skipped (Bi_tangent_skip_flag) in signaling information (e.g., ASPS) to the reception apparatus (or the decoder of the reception apparatus).

For example, the image packing format information (ColourSpace_displacement_video) related to the displacement vector coefficients may indicate whether the format used for packing is YUV 4:4:4 (i.e., the first format), YUV 4:2:0 (i.e., the second format), or YUV 4:0:0 (i.e., the third format). In another example, when the value of the information for identifying whether packing of the bi-tangential component is skipped (Bi_tangent_skip_flag) is 0, it may indicate that the bi-tangential component is not skipped. When the value is 1, it may indicate that the bi-tangential component is skipped.

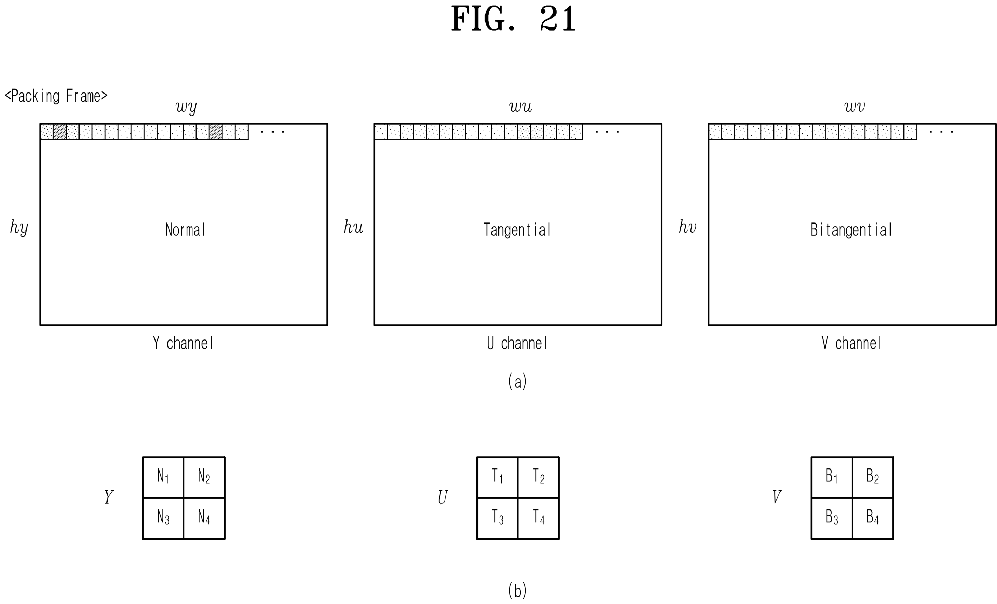

FIGS. 21-(a) and 21-(b) are diagrams illustrating an example of packing displacement vector coefficients based on the YUV 4:4:4 format according to embodiments. That is, FIGS. 21-(a) and 21-(b) illustrate an example where packing of the bi-tangential component is not skipped in packing the displacement vector coefficients based on the YUV 4:4:4 format. In this case, in one embodiment, the image packing format information (ColourSpace_displacement_video) indicates that the format used for the packing is YUV 4:4:4 (ColourSpace_displacement_video = YUV444), and the value of the information for identifying whether packing of the bi-tangential component is skipped (Bi_tangent_skip_flag) is 0.

In this case, as shown in FIG. 21-(a), the normal components of the displacement vector coefficients of each vertex are stored (or packed) in the Y channel, the tangential components in the U channel, and the bi-tangential components in the V channel. That is, normal, tangential, and bi-tangential components may be sequentially stored (or packed) in the Y, U, and V channels. FIG. 21-(b) illustrates an example where, for four vertices, the normal components $N_1$ to $N_4$, tangential components $T_1$ to $T_4$, and bi-tangential components $B_1$ to $B_4$ of the displacement vector coefficients of the four vertices are packed into the Y, U, and V channels, respectively.

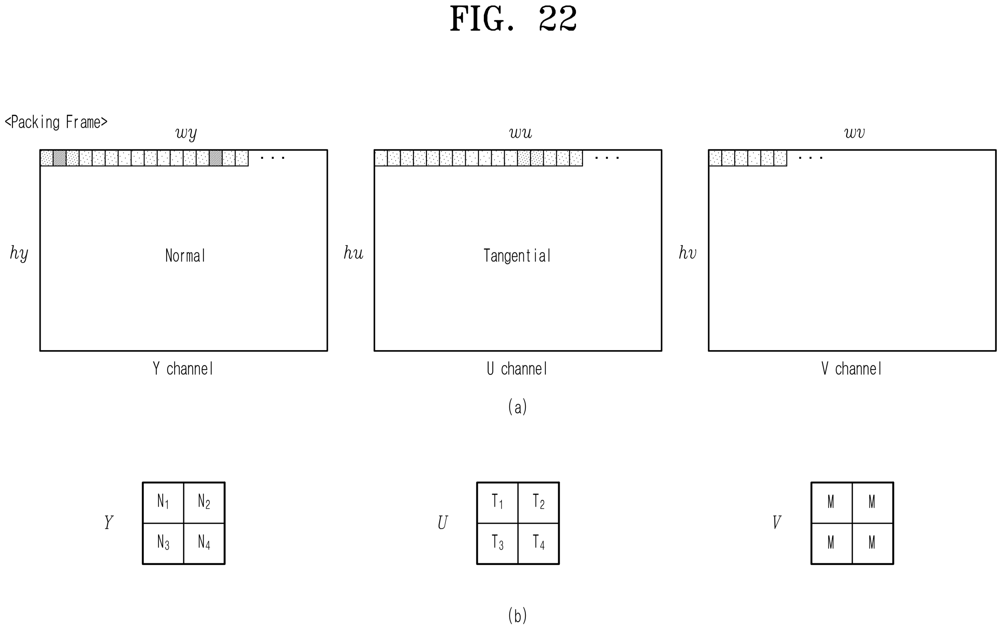

FIGS. 22-(a) and 22-(b) are diagrams illustrating another example of packing displacement vector coefficients based on the YUV 4:4:4 format according to embodiments. That is, FIGS. 22-(a) and FIG. 22-(b) illustrate an example where packing of the bi-tangential component is skipped in packing the displacement vector coefficients based on the YUV 4:4:4 format. In this case, in one embodiment, the image packing format information (ColourSpace_displacement_video) indicates that the format used for the packing is YUV 4:4:4 (ColourSpace_displacement_video = YUV444), and the value of the information for identifying whether packing of the bi-tangential component is skipped (Bi_tangent_skip_flag) is 1.

In this case, as shown in FIGS. 22-(a), the normal components of the displacement vector coefficients are stored (or packed) in the Y channel, and the tangential components of the displacement vector coefficients are stored (or packed) in the U channel. That is, the normal components and tangential components are packed in the Y channel and the U channel sequentially, and then transmitted to the displacement vector image/video encoder 12014.

Here, the bi-tangential components of the displacement vector coefficients of each vertex are skipped. That is, the bi-tangential components are not packed in the V channel, but are skipped.

For efficient encoding/decoding, a median value (or fixed value) may be filled in the V channel. That is, to maintain the YUV 4:4:4 format, the V channel is filled with a median value instead of the skipped bi-tangential components. FIG. 22-(b) illustrates an example where, for four vertices, the normal components $N_1$ to $N_4$ and tangential components $T_1$ to $T_4$ of the displacement vector coefficients of the four vertices are packed into the Y and U, respectively, and the V channel is filled with a median value M instead of the bi-tangential components. In one embodiment, when it is assumed that the bitdepth of the displacement vector video image is 10 bits, 512, which is the median value of 1024 may be packed as M (M=512).

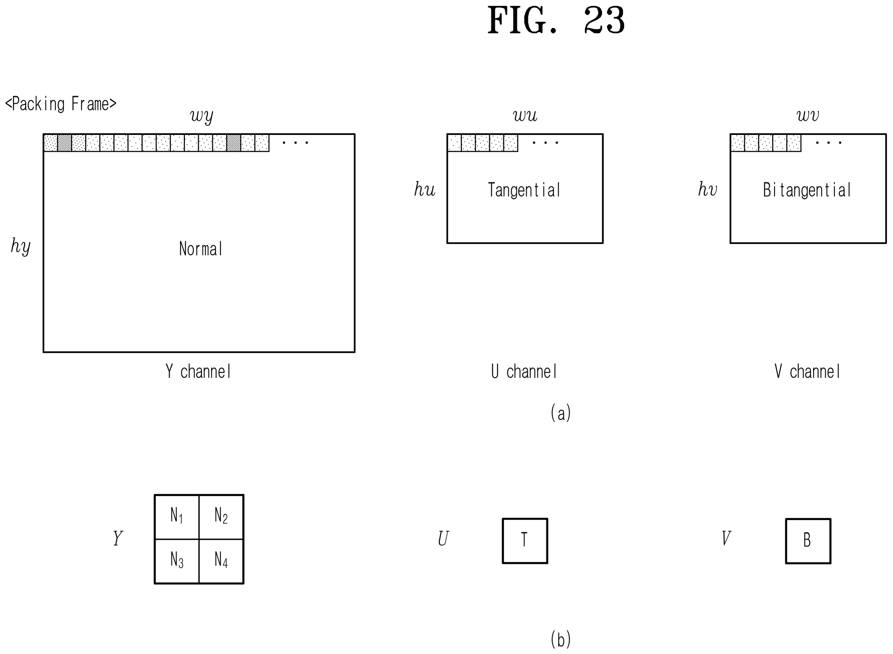

FIGS. 23-(a) and 23-(b) are diagrams illustrating an example of packing displacement vector coefficients based on the YUV 4:2:0 format according to embodiments. That is, FIGS. 23-(a) and FIG. 23-(b) illustrate an example where packing of the bi-tangential component is not skipped in packing the displacement vector coefficients based on the YUV 4:2:0 format. In this case, in one embodiment, the image packing format information (ColourSpace_displacement_video) indicates that the format used for the packing is 4:2:0 format (ColourSpace_displacement_video = YUV420), and the value of the information for identifying whether packing of the bi-tangential component is skipped (Bi_tangent_skip_flag) is 0.

In this case, as shown in 23-(b), the normal components of the displacement vector coefficients are stored (or packed) directly in the Y channel. In contrast, the tangential component of the displacement vector coefficients of one vertex per four vertices is packed in the U channel, and the bi-tangential component of the displacement vector coefficients of one vertex per four vertices is packed in the V channel. That is, the normal components are stored in the Y channel, the tangential components in the U channel, and the bi-tangential components in the V channel sequentially. The tangential components in the U channel and bi-tangential components in the V channel may be sampled according to an agreement between the encoder/decoder. FIG. 23-(b) illustrates an example where, for four vertices, the normal components $N_1$ to $N_4$ of the displacement vector coefficients of the four vertices are packed into the Y channel, one tangential component T of the displacement vector coefficients of one vertex per four vertices is packed into the U channel, and the bi-tangential component B of the displacement vector coefficients of one vertex per four vertices is packed into the V channel. The tangential component of the displacement vector coefficient of one vertex packed into the U channel may be the average of the tangential components of the displacement vector coefficients of the four vertices or a representative tangential component of a specific displacement vector coefficient among the displacement vector coefficients of the four vertices. Similarly, the bi-tangential component of the displacement vector coefficient of one vertex packed into the V channel may be the average of the bi-tangential components of the displacement vector coefficients of the four vertices or a bi-tangential component (i.e., a representative) of the specific displacement vector coefficient among the displacement vector coefficients of the four vertices.

In another embodiment, the packer 12013 may increase the height of the Y channel to a height that is twice the height H of the packing frame image calculated by the displacement vector coefficient packer 12013, and store (i.e., pack) the normal, tangential, and bi-tangential components into the Y channel sequentially. In this case, the U and V channels may be filled with median values to maintain the YUV 4:2:0 format.

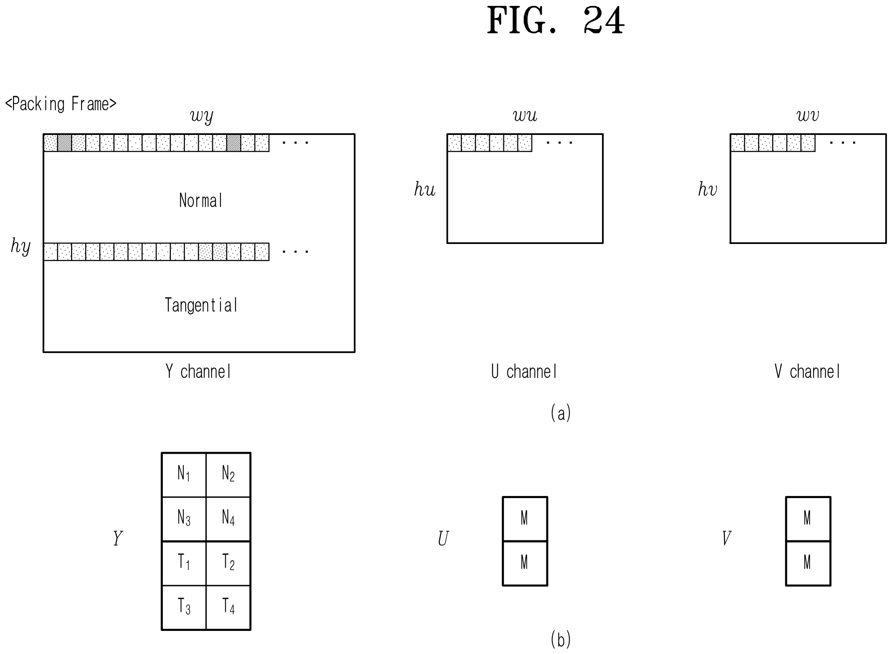

FIGS. 24-(a) and 24-(b) are diagrams illustrating another example of packing displacement vector coefficients based on the YUV 4:2:0 format according to embodiments. That is, FIGS. 24-(a) and FIG. 24-(b) illustrate an example where packing of the bi-tangential component is skipped in packing the displacement vector coefficients based on the YUV 4:2:0 format. In this case, in one embodiment, the image packing format information (ColourSpace_displacement_video) indicates that the format used for the packing is 4:2:0 format (ColourSpace_displacement_video = YUV420), and the value of the information for identifying whether packing of the bi-tangential component is skipped (Bi_tangent_skip_flag) is 1.

As shown in FIGS. 24-(a), the Y channel height is increased to a height that is twice the packing frame image height H calculated by the displacement vector coefficient packer 12013, and then the normal components of the displacement vector coefficients and the tangential components of the displacement vector coefficients are stored (i.e., packed) into the Y channel according to each component. For efficient encoding, the U and V channels may be filled with median values. FIG. 24-(b) illustrates an example where, for four vertices, the normal components $N_1$ to $N_4$ and tangential components $T_1$ to $T_4$ of the displacement vector coefficients of the four vertices are packed into the Y channel, and the median values M corresponding to two vertices are packed into the U and V channels to maintain the YUV 4:2:0 format.

In another example, for four vertices, the normal components $N_1$ to $N_4$ of the displacement vector coefficients of the four vertices may be packed into the Y channel, the tangential component T of the displacement vector coefficient of one vertex per four vertices may be packed into the U channel, and the V channel may be filled with a median value.

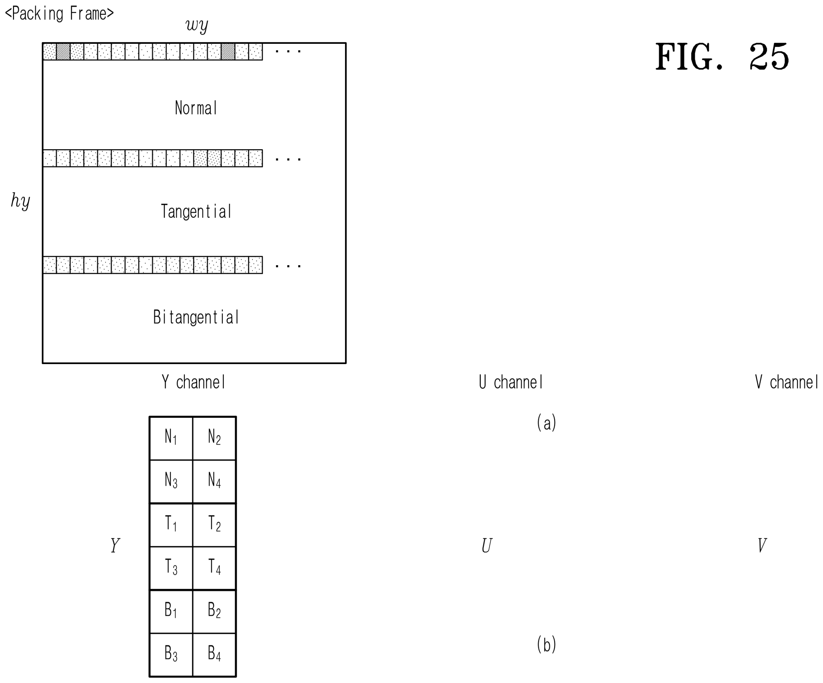

FIGS. 25-(a) and 25-(b) are diagrams illustrating an example of packing displacement vector coefficients based on the YUV 4:0:0 format according to embodiments. That is, FIGS. 25-(a) and FIG. 25-(b) illustrate an example where packing of the bi-tangential component is not skipped in packing the displacement vector coefficients based on the YUV 4:0:0 format. In this case, in one embodiment, the image packing format information (ColourSpace_displacement_video) indicates that the format used for the packing is 4:0:0 format (ColourSpace_displacement_video = YUV400), and the value of the information for identifying whether packing of the bi-tangential component is skipped (Bi_tangent_skip_flag) is 0.

As shown in FIGS. 25-(a), the Y channel height is increased to a height that is three times the packing frame image height H calculated by the displacement vector coefficient packer 12013, and then the normal, tangential, and bi-tangential components of the displacement vector coefficients are stored (i.e., packed) into the Y channel according to each component. FIG. 25-(b) illustrates an example where, for four vertices, the normal components $N_1$ to $N_4$, tangential components $T_1$ to $T_4$, and bi-tangential components B1 to B4 of the displacement vector coefficients of the four vertices are packed into the Y channel on a component by component basis.

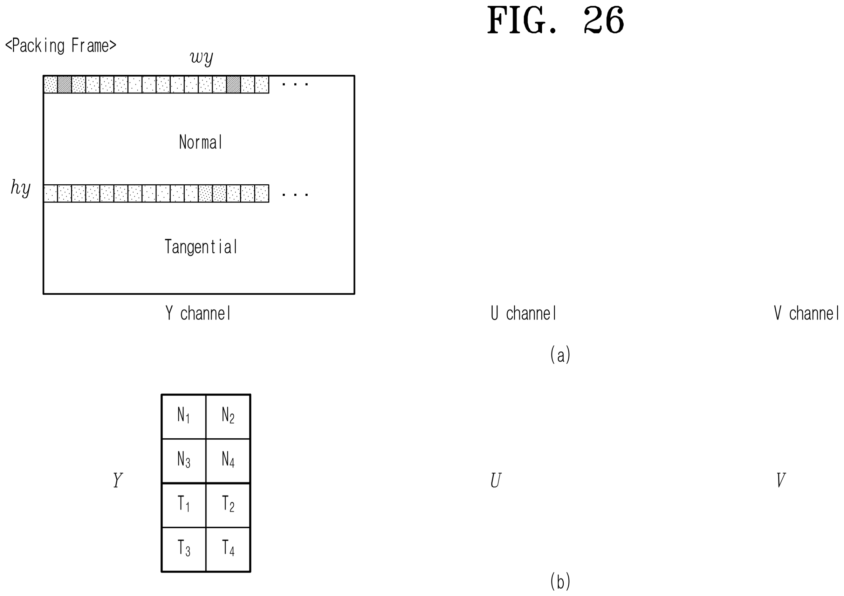

FIGS. 26-(a) and 26-(b) are diagrams illustrating another example of packing displacement vector coefficients based on the YUV 4:0:0 format according to embodiments. That is, FIGS. 26-(a) and FIG. 26-(b) illustrate an example where packing of the bi-tangential component is skipped in packing the displacement vector coefficients based on the YUV 4:0:0 format. In this case, in one embodiment, the image packing format information (ColourSpace_displacement_video) indicates that the format used for the packing is 4:0:0 format (ColourSpace_displacement_video = YUV400), and the value of the information for identifying whether packing of the bi-tangential component is skipped (Bi_tangent_skip_flag) is 1.

As shown in FIGS. 26-(a), the Y channel height is increased to a height that is twice the packing frame image height H calculated by the displacement vector coefficient packer 12013, and then the normal and tangential components of the displacement vector coefficients are stored (i.e., packed) into the Y channel according to each component. FIGS. 26-(a) illustrates an example where, for four vertices, the normal components $N_1$ to $N_4$ and tangential components $T_1$ to $T_4$ of the displacement vector coefficients of the four vertices are packed into the Y channel on a component by component basis. The bi-tangential components are skipped, and thus they are neither packed nor transmitted.

As shown in FIGS. 21 to 26, when the normal components, tangential components, and bi-tangential components (which may be skipped) of the displacement vector coefficients are packed (or stored) into the Y, U, and V channels as a 2D image according to the format, the displacement vector image/video encoder 12014 may encode the packed 2D image using a 2D video encoder such as H.264, HEVC, or VVC.

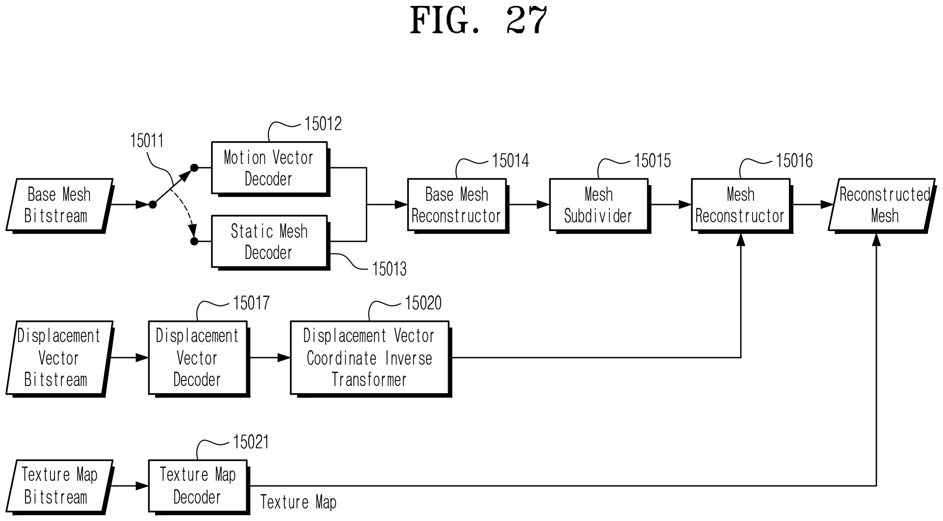

FIG. 27 illustrates a reception apparatus according to embodiments. The reception apparatus of FIG. 27 may be referred to as a mesh data reception apparatus or decoder, a decoder of a reception apparatus, a V-Mesh decoder, or a dynamic mesh decoder.

FIG. 27 corresponds to the reception apparatus 110 or mesh video decoder 113 of FIG. 1, the decoder of FIGS. 11 or 12, the reception apparatus of FIG. 14, and/or a corresponding receiving decoding apparatus. Each component of FIG. 27 corresponds to hardware, software, a processor, and/or a combination thereof. The reception (decoding) operation of FIG. 27 may follow a reverse process to the corresponding process of the transmission (encoding) operation of FIG. 15. In FIG. 27, the order in which the blocks are executed may be changed. Some blocks may be omitted, and some new blocks may be added.

The apparatus of FIG. 21 may include a base mesh decoder, a displacement information decoder, and a texture map decoder. According to embodiments, the base mesh decoder may include a switching part 15011, a motion vector decoder 15012, a static mesh decoder 15013, a base mesh reconstructor 15014, a mesh subdivider 15015, and a mesh reconstructor 15016. According to embodiments, the displacement information decoder may include a displacement vector decoder 15017 and a displacement vector coordinate inverse transformer 15020.

According to embodiments, the bitstream of the mesh data received by the receiver (not shown) may be subjected to file/segment decapsulation, and may then be demultiplexed into a base mesh bitstream, a displacement vector bitstream, and a texture map bitstream by a demultiplexer (not shown). In the case where inter-frame encoding (i.e., inter encoding) has been applied to the current mesh, the base mesh bitstream may be a motion vector bitstream.

According to embodiments, the base mesh bitstream may be provided to the motion vector decoder 15012 or the static mesh decoder 15013 via the switching part 15011.

For example, in the case where inter-frame encoding (i.e., inter encoding) has been applied to the current mesh, the base mesh bitstream, i.e., the motion vector bitstream, is received, demultiplexed, and then output to the motion vector decoder 15012 via the switching part 15011. In another example, in the case where intra-frame encoding (i.e., intra encoding) has been applied to the current mesh, the base mesh bitstream is received, demultiplexed, and then output to the static mesh decoder 15013 via the switching part 15011. Here, the motion vector decoder 15012 may be referred to as a motion decoder.

According to embodiments, the motion vector decoder 15012 may decode the motion vector bitstream on a per-vertex or per-subgroup basis.

According to embodiments, the motion vector decoder 15012 may reconstruct the final motion vector by adding the decoded motion vector difference (i.e., the residual motion vector) from the bitstream to the previously decoded motion vector used as a predictor. That is, the motion vector decoder 15012 may decode motion vector differences (or residual motion vectors) at the vertex or subgroup (or sub-block) level from the motion vector bitstream, perform prediction based on connectivity information using previously decoded motion vectors as predictors, and add the residual motion vectors to the predicted information to decode the motion vectors.

According to embodiments, the static mesh decoder 15013 may decode the base mesh bitstream to restore connectivity information, vertex geometry information, texture coordinates (i.e., attribute geometry information), normal information, and the like related to the base mesh.

According to embodiments, the base mesh reconstructor 15014 may reconstruct the current base mesh based on the decoded motion vectors or decoded base mesh. For example, in the case where inter-frame encoding has been applied to the current mesh, the base mesh reconstructor 15014 may add the decoded (or reconstructed) motion vectors to the reference base mesh and perform inverse quantization to generate the reconstructed base mesh (i.e., the current base mesh). In another example, in the case where intra-frame encoding has been applied to the current mesh, the base mesh reconstructor 15014 may perform inverse quantization on the decoded (or reconstructed) base mesh output by the static mesh decoder 15013 to generate the reconstructed base mesh (i.e., the current base mesh).

According to embodiments, the mesh subdivider 15015 may subdivide the base mesh to generate additional vertices. Depending on the subdivision method, the geometry connectivity information, texture coordinate connectivity information, and texture coordinates may be implicitly derived to generate vertices.

According to embodiments, the mesh subdivider 15015 may perform subdivision using a method such as mid-edge, Loop, or Catmul&Clark.

According to embodiments, the displacement vector decoder 15017 may perform video codec-based decoding, zero run-length decoding, or arithmetic decoding on the demultiplexed displacement vector bitstream as a video bitstream. Here, the term displacement vector decoder may be used interchangeably with a displacement vector transform decoder.

According to embodiments, the displacement vector decoder 15017 may decode and reconstruct the displacement vectors by performing the reverse process of the displacement vector encoding method on the transmitting side.

According to embodiments, when the displacement vector decoded by the displacement vector decoder 15017 is expressed in the local coordinate system (n, t, bt), the displacement vector coordinate inverse transformer 15020 may perform inverse transformation from the local coordinate system to the Cartesian (or canonical) coordinate system (x, y, z). The output of the displacement vector coordinate inverse transformer 15020 is provided to the mesh reconstructor 15016.

That is, the encoder of the transmission apparatus may transform vertex displacement vectors calculated in the (x, y, z) space into the (normal, tangential, bi-tangential) coordinate system (also referred to as the local coordinate system) based on the normal vector of each vertex. The normal vectors may be calculated for each subdivided vertex based on the geometry information and connectivity information related to neighboring vertices.

According to embodiments, the mesh reconstructor 15016 reconstructs the mesh based on the subdivided mesh from the mesh subdivider 15015 and the reconstructed displacement vectors output from the displacement vector coordinate inverse transformer 15020.

According to embodiments, the received and demultiplexed texture map bitstream is input to the texture map decoder 15021. According to embodiments, the texture map decoder 15021 may decode the texture map through a 2D scalable decoder. That is, the texture map decoder 15021 may reconstruct the texture map by applying 2D scalable decoding.

In this way, when the base mesh bitstream, displacement vector bitstream, and texture map bitstream encoded by the dynamic mesh encoder of the transmission apparatus are transmitted, the decoder of the reception apparatus reconstructs the mesh by decoding the respective bitstreams. First, the base mesh is decoded by either the motion vector decoder or the static mesh decoder depending on whether the frame is an inter-frame or an intra-frame and subjected to subdivision, and then the geometry information is reconstructed together with the decoded displacement vector information.

Hereinafter, a decoding method is described in which the displacement vector coefficient decoder reconstructs the normal and tangential components of displacement vectors from 2D image frames packed and transmitted in various formats (e.g., YUV 4:4:4, YUV 4:2:0, YUV 4:0:0) and calculates the bi-tangential components. The principles applied at each step are described in detail below.

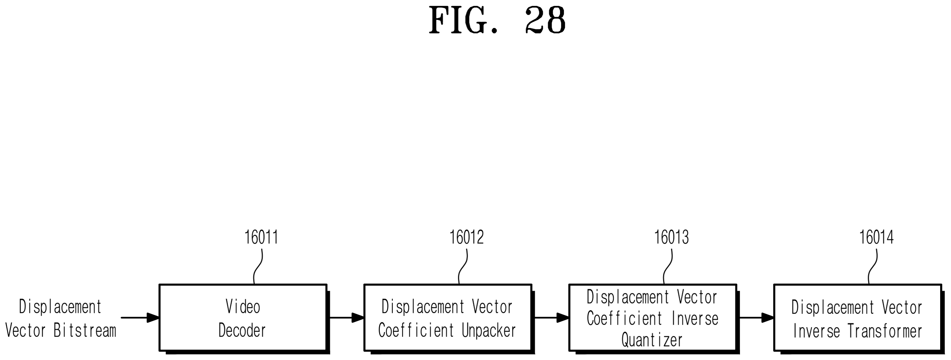

FIG. 28 is a block diagram illustrating an example of a displacement vector decoder according to embodiments. The displacement vector decoder 15017 may include a video decoder 16011, a displacement vector coefficient unpacker 16012, a displacement vector coefficient inverse quantizer 16013, and a displacement vector inverse transformer 16014. Each component of FIG. 28 may correspond to hardware, software, a processor, or a combination thereof. The execution order of the blocks in FIG. 28 may be changed, some blocks may be omitted, and new blocks may be added.

According to embodiments, the video decoder 16011 receives a displacement vector bitstream as input and decodes the displacement vector coefficient image/video using a 2D video codec. Then, the reconstructed displacement vector coefficient video from the video decoder 16011 is processed in displacement vector coefficient unpacking for each frame by the displacement vector coefficient unpacker 16012 to assign displacement vector coefficients corresponding to each vertex of the reconstructed mesh.

In the present disclosure, the displacement vector coefficient unpacker 16012 may perform unpacking from the reconstructed displacement vector coefficient image corresponding to the current mesh frame according to a scan order defined by the agreement between the encoder/decoder or a scan order parsed per higher-level unit (sequence, frame, etc.). That is, the displacement vector coefficient unpacker 16012 may perform unpacking according to a scan order defined by the agreement between the encoder/decoder, a scan order derived based on the characteristics of the displacement vector coefficients, or a scan order received from the encoder of the transmission apparatus.

For example, as shown in FIG. 19, displacement vector coefficient blocks packed according to a specific scan order in units of bx*by, and displacement vector coefficients packed in a block according to a specific order (e.g., 2D Morton code or zig-zag scan order) may be used to derive the displacement vector coefficients for the k-th vertex based on agreement between the encoder/decoder, parsed block sizes bx, by, L, and M, and the scan order.

Next, a method is described in which, when displacement vector coefficients are packed into a 2D image frame in various formats (e.g., YUV 4:4:4, YUV 4:2:0, YUV 4:0:0) for transmission as shown in FIGS. 21 to 26, the displacement vector coefficient unpacker 16012 performs unpacking to reconstruct the normal and tangential components from the 2D image frame, and reconstructs the bi-tangential component based on the reconstructed components.

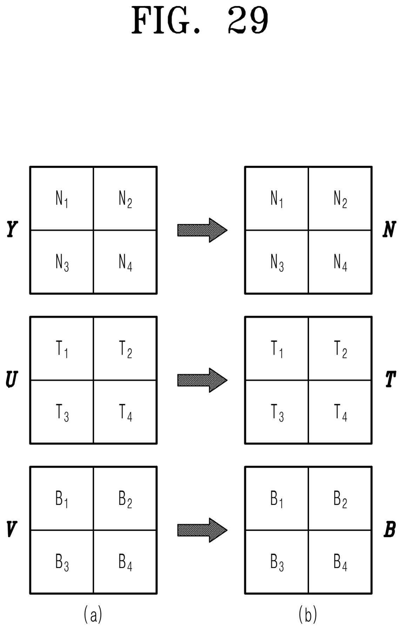

FIGS. 29-(a) and 29-(b) are diagrams illustrating an example of unpacking displacement vector coefficients packed based on the YUV 4:4:4 format according to embodiments. More specifically, FIGS. 29-(a) and 29-(b) illustrate an unpacking method used when the value of the parsed image packing format information (ColourSpace_displacement_video) from the received signaling indicates YUV 4:4:4 (ColourSpace_displacement_video = YUV444) (e.g., value=3) and the value of the parsed information for identifying whether packing of the bi-tangential component is skipped (Bi_tangent_skip_flag) is 0. That is, FIGS. 29-(a) illustrates the case where packing of the bi-tangential component is not skipped by the transmission apparatus (e.g., the displacement vector coefficient packer 12013). For example, for four vertices, the normal components $N_1$ to $N_4$, tangential components $T_1$ to $T_4$, and bi-tangential components $B_1$ to $B_4$ of the displacement vector of the four vertices coefficients of the four vertices may be packed into the Y, U, and V channels, respectively.

In this case, the displacement vector coefficient unpacker 16012 may reconstruct the normal, tangential, and bi-tangential components in the Y, U, and V channels in the YUV 4:4:4 format, respectively, as shown in FIG. 29-(b). That is, the displacement vector coefficients in the Y, U, and V channels may be reconstructed as the normal, tangential, and bi-tangential components according to a specific order (displacement_scan_method) within a block. In the case of the YUV 4:4:4 format, all values of the normal, tangential, and bi-tangential components are transmitted by the transmission apparatus, and therefore the decoding results may be identical to the data prior to the encoding.

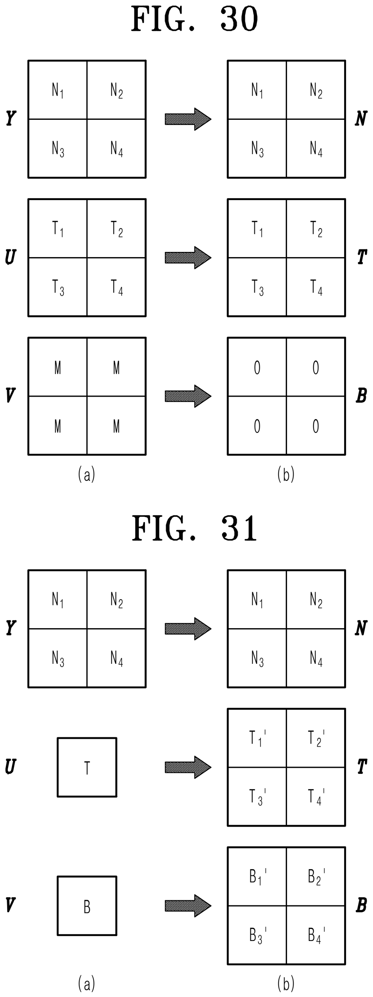

FIGS. 30-(a) and 30-(b) are diagrams illustrating another example of unpacking displacement vector coefficients packed based on the YUV 4:4:4 format according to embodiments. More specifically, FIGS. 30-(a) and 30-(b) illustrate an unpacking method used when the value of the parsed image packing format information (ColourSpace_displacement_video) from the received signaling indicates the YUV 4:4:4 format (ColourSpace_displacement_video = YUV444) (e.g., value=3) and the value of the parsed information for identifying whether packing of the bi-tangential component is skipped (Bi_tangent_skip_flag) is 1. That is, FIGS. 30-(a) illustrates the case where packing of the bi-tangential component is skipped by the transmission apparatus (e.g., the displacement vector coefficient packer 12013). For example, for four vertices, the normal components $N_1$ to $N_4$ and the tangential components $T_1$ to $T_4$, of the displacement vector coefficients of the four vertices may be packed into the Y and U channels, respectively, while a median value M instead of the bi-tangential components $B_1$ to $B_4$ of the displacement vector coefficients may be packed into the V channel. In other words, when the value of the Bi_tangent_skip_flag is 1, as shown in FIG. 30(a), the Y and U channels may be composed of displacement vector coefficients of normal and tangential components, respectively and the V channel may be composed of a median value M. When it is assumed that the bitdepth of the displacement vector video image is 10 bits, 512, which is the median value of 1024, may be M of the V channel.

In this case, the displacement vector coefficient unpacker 16012 may reconstruct the normal, tangential, and bi-tangential components in the Y, U, and V channels, respectively, in the YUV 4:4:4 format as shown in FIG. 30-(b). That is, the displacement vector coefficients in the Y and U channels may be reconstructed as the normal and tangential components according to a specific order (displacement_scan_method) within a block, and the displacement vector coefficients having the medium value in the V channel may be reconstructed as the bi-tangential components having the value of 0. Alternatively, the bi-tangential components may not be reconstructed and may have 0 as the initial value. Since all values of the normal and tangential components are transmitted by the transmission apparatus, the decoding results may be identical to the data about the normal and tangential components prior to the encoding.

FIGS. 31-(a) and 31-(b) are diagrams illustrating an example of unpacking displacement vector coefficients packed based on the YUV 4:2:0 format according to embodiments. More specifically, FIGS. 31-(a) and 31-(b) illustrate an unpacking method used when the value of the parsed image packing format information (ColourSpace_displacement_video) from the received signaling indicates YUV 4:2:0 (ColourSpace_displacement_video = YUV420) (e.g., value=2) and the value of the parsed information for identifying whether packing of the bi-tangential component is skipped (Bi_tangent_skip_flag) is 0. That is, FIGS. 31-(a) illustrates the case where packing of the bi-tangential component is not skipped by the transmission apparatus (e.g., the displacement vector coefficient packer 12013). For example, for four vertices, the normal components $N_1$ to $N_4$ of the displacement vector coefficients of the four vertices may be packed into the Y channel, the tangential component T of the displacement vector coefficient of one vertex per four vertices may be packed into the U channel, and the bi-tangential component B of the displacement vector coefficient of one vertex per four vertices may be packed into the V channel.

In this case, the displacement vector coefficient unpacker 16012 may reconstruct the normal, tangential, and bi-tangential components in the Y, U, and V channels in the YUV 4:2:0 format, respectively, as shown in FIG. 31-(b). In this regard, when it is assumed that the tangential and bi-tangential components in the U and V channels are sampled and transmitted by the transmission apparatus (e.g., one vertex is sampled per four vertices), the tangential components $T'_1$ to $T'_4$ in the U channel and the bi-tangential components $B'_1$ to $B'_4$ in the V channel may be reconstructed using a sampling method pre-agreed upon by the encoder. Alternatively, the normal, tangential, and bi-tangential components may all be reconstructed from the Y channel using a method pre-agreed upon by the encoder. Since all values of the normal components are transmitted by the transmission apparatus, the decoding results may be identical to the data of the normal components prior to the encoding. The displacement vector coefficients in the Y, U, and V channels may be reconstructed as the normal, tangential, and bi-tangential components according to a specific order (displacement_scan_method) within a block.

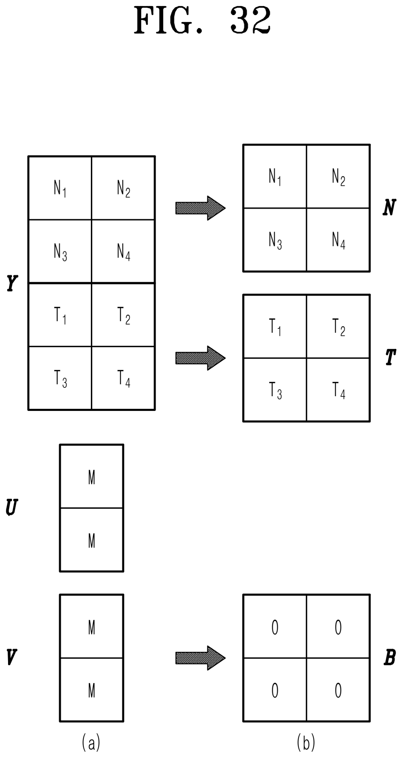

FIGS. 32-(a) and 32-(b) are diagrams illustrating another example of unpacking displacement vector coefficients packed based on the YUV 4:2:0 format according to embodiments. More specifically, FIGS. 32-(a) and 32-(b) illustrate an unpacking method used when the value of the parsed image packing format information (ColourSpace_displacement_video) from the received signaling indicates the YUV 4:2:0 format (ColourSpace_displacement_video = YUV420) (e.g., value=2) and the value of the parsed information for identifying whether packing of the bi-tangential component is skipped (Bi_tangent_skip_flag) is 1. That is, FIGS. 32-(a) illustrates the case where packing of the bi-tangential component is skipped by the transmission apparatus (e.g., the displacement vector coefficient packer 12013). For example, for four vertices, the normal components $N_1$ to $N_4$ and the tangential components $T_1$ to $T_4$ of the displacement vector coefficients of the four vertices may be packed into the Y channel, respectively, while a middle value M may be packed into the U and V channels. To this end, the transmission apparatus may increase the height of the Y channel to twice the packing frame image height H before packing.

In this case, based on the pre-calculated height H of the packing frame, the displacement vector coefficient unpacker 16012 may reconstruct the range of 0 to H of the Y channel as normal components, and the range of H+1 to 2H as tangential components. Then, the displacement vector coefficients of the normal and tangential components in the Y channel may be reconstructed according to a specific order (displacement_scan_method) in the block. The median value in the U channel may not be used for reconstruction because the displacement vector coefficients of the tangential components are already reconstructed in the Y channel. Also, the displacement vector coefficients having the median value in the V channel may be reconstructed as the bi-tangential components having the value 0. Alternatively, the bi-tangential components may not be reconstructed from the V channel, but may have the initial value equal to 0. That is, after the unpacking, the values of the bi-tangential components may all be 0. In other words, the bi-tangential components for which packing has been skipped by the displacement vector coefficient packer 12013 of the transmission apparatus may be reconstructed as 0 by the displacement vector coefficient unpacker 16012 of the reception apparatus. In this case, as shown in FIGS. 32-(a), since all values of the normal and tangential components are transmitted through the Y channel by the transmission apparatus, the decoding results may be identical to the data about the normal and tangential components prior to the encoding.

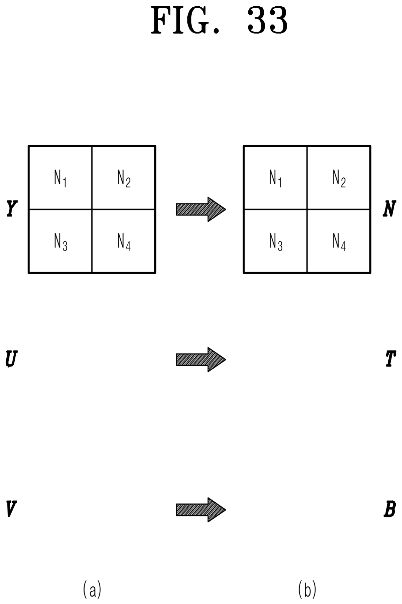

FIGS. 33-(a) and 33-(b) are diagrams illustrating an example of unpacking displacement vector coefficients packed based on the YUV 4:0:0 format according to embodiments. More specifically, FIGS. 33-(a) and 33-(b) illustrate an unpacking method used when the value of the parsed image packing format information (ColourSpace_displacement_video) from the received signaling indicates the YUV 4:0:0 format (ColourSpace_displacement_video = YUV400) (e.g., value=1) and the value of the parsed information for identifying whether packing of the bi-tangential component is skipped (Bi_tangent_skip_flag) is 0. That is, FIGS. 33-(a) illustrates the case where packing of the bi-tangential component is not skipped by the transmission apparatus (e.g., the displacement vector coefficient packer 12013). For example, for four vertices, only the normal components $N_1$ to $N_4$ of the displacement vector coefficients of the four vertices may be packed into the Y channel one by one. In this case, packing and transmission of the tangential and bi-tangential components may be skipped. Accordingly, unpacking of the tangential and bi-tangential components is skipped.

In other words, the displacement vector coefficient unpacker 16012 may reconstruct only the normal components in the Y channel in the YUV 4:0:0 format, as shown in FIG. 33-(b). In this case, the displacement vector coefficients in the Y channel may be reconstructed as the normal components according to a specific order (displacement_scan_method) within the block. Since all values of the normal components are transmitted by the transmission apparatus, the decoding results may be identical to the data about the normal components prior to the encoding.

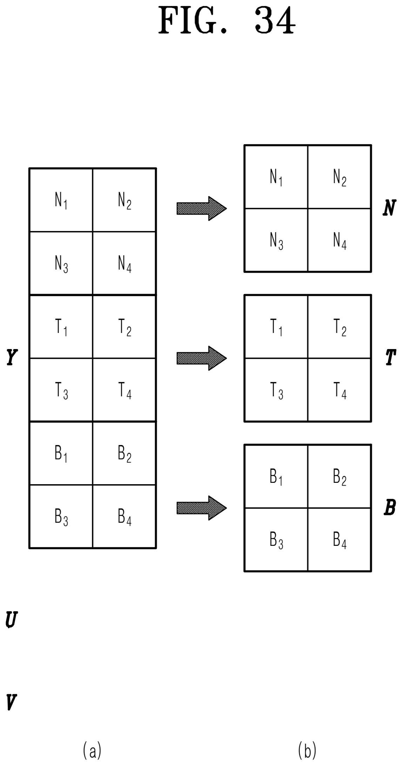

FIGS. 34-(a) and 34-(b) are diagrams illustrating another example of unpacking displacement vector coefficients packed based on the YUV 4:0:0 format according to embodiments. More specifically, FIGS. 34-(a) and 34-(b) illustrate an unpacking method used when the value of the parsed image packing format information (ColourSpace_displacement_video) from the received signaling indicates the YUV 4:0:0 format (ColourSpace_displacement_video = YUV400) (e.g., value=1) and the value of the parsed information for identifying whether packing of the bi-tangential component is skipped (Bi_tangent_skip_flag) is 0. That is, FIGS. 34-(a) illustrates the case where packing of the bi-tangential component is not skipped by the transmission apparatus (e.g., the displacement vector coefficient packer 12013). For example, for four vertices, the normal components $N_1$ to $N_4$, tangential components $T_1$ to $T_4$, and bi-tangential components $B_1$ to $B_4$ of the displacement vector of the four vertices coefficients of the four vertices may all be packed into the Y channel according to each component. To this end, the transmission apparatus may increase the height of the Y channel to three times the packing frame image height H before packing.

In this case, based on the pre-calculated height H of the packing frame, the displacement vector coefficient unpacker 16012 may reconstruct the range of 0 to H of the Y channel as normal components, the range of H+1 to 2H as tangential components, and the range of 2H+1 to 3H as bi-tangential components, as shown in FIG. 34-(b). Then, the displacement vector coefficients of the normal, tangential, and bi-tangential components in the Y channel may be reconstructed according to a specific order (displacement_scan_method) in each block. That is, the normal, tangential, and bi-tangential components in the Y channel may be transmitted according to an agreement with the encoder, and the displacement vector coefficient unpacker 16012 may reconstruct the normal, tangential, and bi-tangential components from the Y channel.

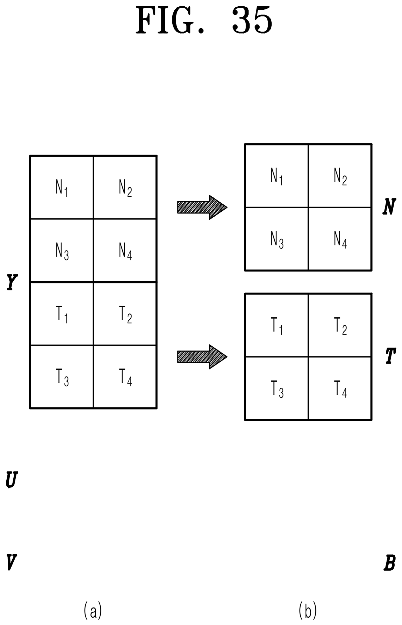

FIGS. 35-(a) and 35-(b) are diagrams illustrating yet another example of unpacking displacement vector coefficients packed based on the YUV 4:0:0 format according to embodiments. More specifically, FIGS. 35-(a) and 35-(b) illustrate an unpacking method used when the value of the parsed image packing format information (Colour-Space_displacement_video) from the received signaling indicates the YUV 4:0:0 format (ColourSpace_displacement_video = YUV400) (e.g., value=1) and the value of the parsed information for identifying whether packing of the bi-tangential component is skipped (Bi_tangent_skip_flag) is 0. That is, FIGS. 35-(a) illustrates the case where packing of the bi-tangential component is skipped by the transmission apparatus (e.g., the displacement vector coefficient packer 12013). For example, for four vertices, the normal components $N_1$ to $N_4$ and tangential components $T_1$ to $T_4$ of the displacement vector of the four vertices coefficients of the four vertices may all be packed into the Y channel according to each component. To this end, the transmission apparatus may increase the height of the Y channel to twice the packing frame image height H before packing.

In this case, based on the pre-calculated height H of the packing frame, the displacement vector coefficient unpacker 16012 may reconstruct the range of 0 to H of the Y channel as normal components and the range of H+1 to 2H, as shown in FIG. 35-(b). Then, the displacement vector coefficients in the Y channel may be reconstructed according to a specific order (displacement_scan_method) in the block. That is, the normal and tangential components in the Y channel may be transmitted according to an agreement with the encoder, and the displacement vector coefficient unpacker 16012 may reconstruct the normal and tangential components from the Y channel. In this case, as shown in FIGS. 35-(a), since all values of the normal and tangential components are transmitted through the Y channel by the transmission apparatus, the decoding results may be identical to the data about the normal and tangential components prior to the encoding.

The displacement vector coefficients unpacked by at least one of the unpacking methods of FIGS. 29 to 35 are provided to the displacement vector coefficient inverse quantizer 16013.

According to embodiments, the displacement vector coefficient inverse quantizer 16013 may inverse-quantize the displacement vector coefficients reconstructed by the unpacker 16012.

According to embodiments, the displacement vector inverse transformer 16014 performs an inverse transform, which is a transform reverse to the transform performed by the encoder of the transmission apparatus, on the inverse-quantized displacement vector coefficients to output displacement vectors. According to embodiments, examples of the inverse transform may include lifting inverse transform and wavelet inverse transform. In the case where the lifting inverse transform is performed by the displacement vector inverse transformer 16014, the parsed residual signal may be used to update the displacement vectors of vertices used for prediction by the encoder.

More specifically, the displacement vector inverse transformer 16014 performs an inverse transform on the displacement vector coefficients assigned per vertex through the unpacker 16012 or the inverse-quantized displacement vector coefficients. According to embodiments, the transform may include linear lifting transform, butterfly lifting transform, or wavelet transform. For example, when asps_vmc_ext_transform_method signaled in the signaling information (ASPS) is equal to 1, it may indicate that Linear_Lifting has been used as the transform method.

In the case where the lifting inverse transform is performed, the displacement vector of vertex $R_k$ at the k-th subdivision level may be predicted using the displacement vector of subdivision vertex $R_t$ (t<k or t≤k) as a predictor.

According to embodiments, the displacement vector may be predicted based on the average or distance-based weighted average of the n nearest points among the vertices at lower subdivision levels based on connectivity information.

According to embodiments, the prediction may be performed based on the displacement vectors of n vertices used to generate the current vertex in the mesh subdivision operation.

Additionally, when the lifting inverse transform is performed, the displacement vectors of vertices used for prediction by the encoder may be updated using the parsed residual signal.

More specifically, the displacement vector coefficient inverse quantizer 16013 performs inverse quantization on the displacement vector coefficients assigned per vertex through the unpacker 16012 or on the inverse-transformed displacement vector coefficients. According to embodiments, the quantization parameter (QP) for each component (Normal, Tangential, and Bi-tangential) may be received on a sequence or frame basis and the quantization rate may be determined based thereon.

When the bi-tangential component packing skip mode is enabled (Bi_tangent_skip_flag = 1), displacement vector coefficient inverse quantizer 16013 may inverse quantization only on the normal and tangential components, and may skip the inverse quantization for the bi-tangential component.

According to embodiments, displacement vector coefficients may be quantized with different quantization parameters for each axis, and quantization or scaling parameters may be derived according to an agreement between the encoder/decoder to determine the quantization rate for each LoD.

According to embodiments, the inverse-transformed displacement vectors or inverse-quantized displacement vectors are provided to the displacement vector coordinate inverse transformer 15020.

The displacement vector coordinate inverse transformer 15020 may parse the coordinate system transform flag (asps_vmc_ext_displacement_coordinate_system) from signaling information for each frame sequence, GOF (Group of Frames), frame, or sub-mesh. When the value of the flag is 1, the inverse-quantized (or inverse-transformed) reconstructed displacement vectors may be transformed from the local coordinate system (n, t, b) to the canonical coordinate system (x, y, z).

Then, a normal vector for each vertex may be calculated based on the reconstructed positions of the vertices of the reconstructed base mesh. Then, for the vertices additionally generated through the subdivision process, the normal values of the newly generated vertices may be assigned by interpolating the calculated vertex normal vectors of the reconstructed base mesh.

The interpolation may be performed based on the average or distance-based weighted sum of the normal information about the base mesh. Alternatively, the normal information about the base mesh may be directly used for the subdivided vertices on the same plane.

Then, tangential and bi-tangential vectors orthogonal to the normal vectors may be calculated based on the calculated per-vertex normal vectors, and the displacement vector coordinate inverse transform may be performed. In Equation 4 given below, $disp_n[0]$ and $disp_n[1]$ denote the results of the inverse transform and inverse quantization for the normal and tangential components. Based on the fact that the normal, tangential, and bi-tangential components are orthogonal to each other, the displacement vector of the bi-tangential component may be calculated as the cross product of the final displacement vectors of the normal and tangential components. Alternatively, methods such as Linear Regression or Multiple Regression may be used to derive and calculate the displacement vector of the bi-tangential component.

[Equation 4]

$$\overrightarrow{disp_{xyz}} = disp_n[0] * \vec{n} + disp_n[1] * \vec{t} + disp_n[2] * \vec{b}$$

In the case where the displacement vector coefficients are packed in YUV 4:0:0 format by the transmission apparatus, the tangential (t) component and bi-tangential (b) component are not transmitted through the U and V channels.

Therefore, Equation 4 for coordinate inverse transform may be represented as $\overrightarrow{disp_{xyz}} = disp_n[0] * \vec{n}$ . In this case, the result of inverse quantization and inverse transform of the n component may be multiplied by the calculated per-vertex normal vector to perform the coordinate inverse transform.

In the case where there are multiple results of inverse transform for the same vertex coordinate, the sum of the results may be used as the value of the final displacement vector. According to embodiments, the coordinate inverse transform may always be performed without transmitting any flag.

In FIG. 27, the mesh reconstructor 15016 may add the reconstructed displacement vectors to the vertices generated by the mesh subdivider 15015 through the subdivision process to compute and reconstruct the vertex geometry of the reconstructed mesh.

According to embodiments, the transmission apparatus (or the encoder of the transmission apparatus) may generate signaling information through a metadata processor (not shown) (which may be referred to as a metadata generator) and provide the same to the relevant blocks within the transmission apparatus and/or to the reception apparatus (or the decoder of the reception apparatus). Then, the metadata parser (not shown) of the reception apparatus may parse the received signaling information and provide the same to the corresponding blocks. Each block in the reception apparatus may perform a corresponding operation based on the parsed signaling information.

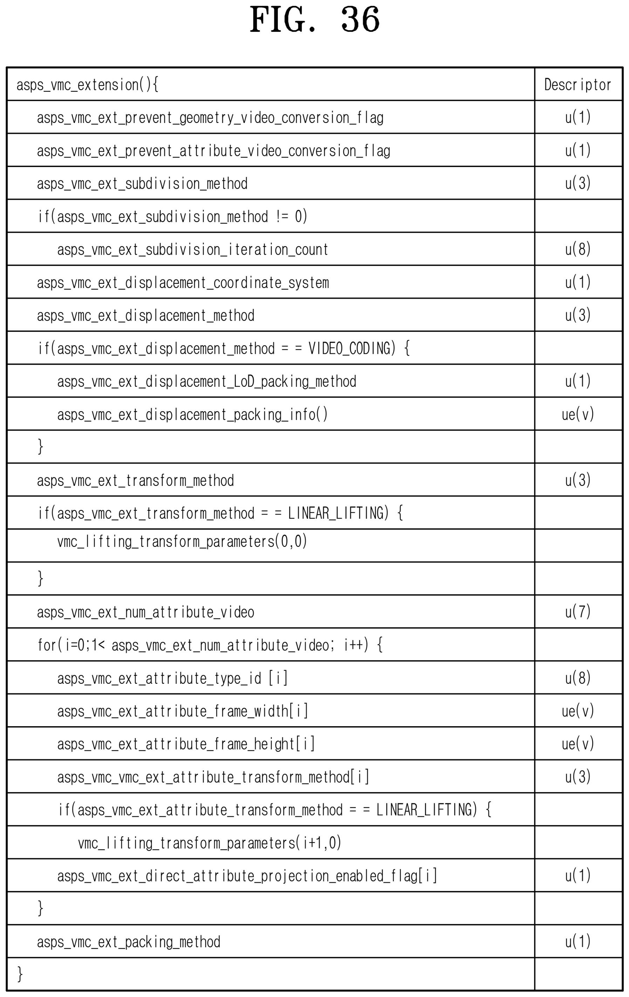

FIG. 36 illustrates an example of the structure of the atlas sequence parameter set (ASPS) in the signaling information in a bitstream according to embodiments. Specifically, FIG. 36 illustrates an example structure of the Atlas sequence parameter set extension RBSP syntax and semantics. That is, the ASPS may be extended to include parameters related to displacement vector encoding.

asps_vmc_ext_displacement_coordinate_system provides information for identifying whether coordinate system transformation of displacement vectors has been applied, indicating the type of the coordinate system used for displacement vector encoding. For example, when the value of the asps_vmc_ext_displacement_coordinate_system syntax (or field) is 0, it may indicate that the transmission apparatus has used the canonical coordinate system directly. When the value is 1, it may indicate that transformation to a local coordinate system has been performed. Thus, when the value of asps_vmc_ext_displacement_coordinate_system is 1, the displacement vector coordinate inverse transformer 15020 may transform the inverse-quantized (or inverse-transformed) reconstructed displacement vectors from the local coordinate system (n, t, b) to the canonical coordinate system (x, y, z).

asps_vmc_ext_transform_method indicates a transform method used for the displacement vectors. For example, asps_vmc_ext_transform_method equal to 0 indicates that no transform is performed (=None). asps_vmc_ext_transform_method equal to 1 indicates that Linear_Lifting has be used as the transform method.

ext_packing_method indicates a method of packing the displacement vector coefficients. For example, ext_packing_method equal to 0 may indicate packing in ascending order, and ext_packing_method equal to 1 may indicate packing in descending order.

asps_vmc_ext_displacement_method indicates the encoding method used for the displacement vectors. asps_vmc_ext_displacement_method equal to 0 may indicate None (which means that displacement vector encoding has not been performed). asps_vmc_ext_displacement_method equal to 1 may indicate arithmetic coding, and asps_vmc_ext_displacement_method equal to 2 may indicate that the displacement vectors have been encoded using video coding.

When asps_vmc_ext_displacement_method indicates Video Coding, the LoD-based displacement vector packing method (asps_vmc_ext_displacement_LoD_packing_method) and displacement vector-related packing information (asps_vmc_ext_displacement_packing_info()) may be included.

asps_vmc_ext_displacement_LoD_packing_method specifies the LoD-based packing method for the displacement vectors. For example, asps_vmc_ext_displacement_LoD_packing_method equal to 0 may indicate packing based on a full-level packing frame configuration, and asps_vmc_ext_displacement_LoD_packing_method equal to 1 may indicate packing based on a per-level frame configuration.

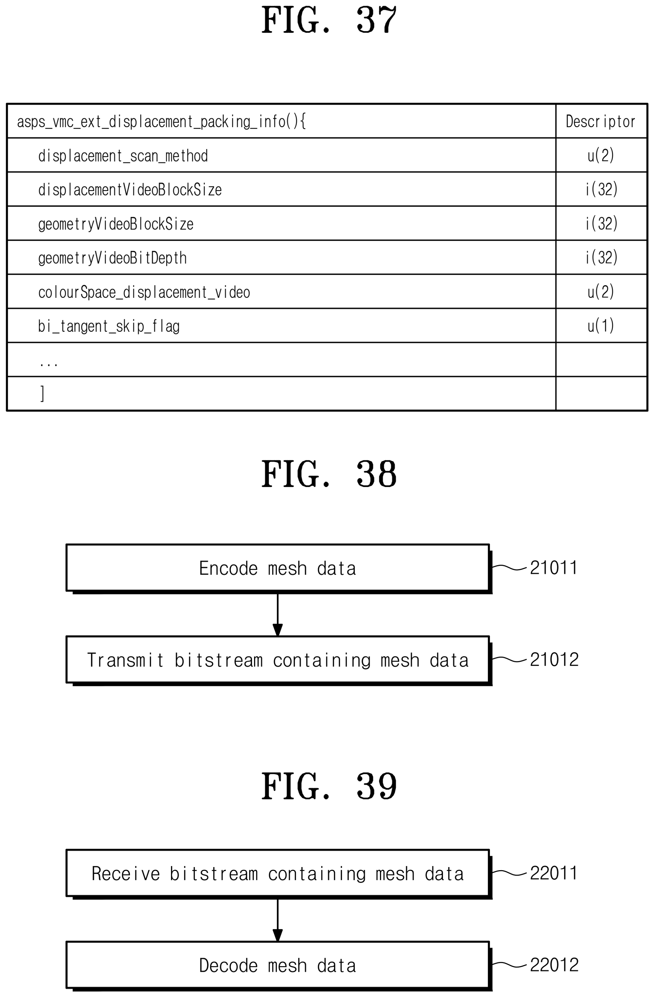

As shown in FIG. 37, asps_vmc_ext_displacement_packing_info() may include displacement_scan_method (indicating the displacement vector scan method), displacementVideoBlockSize (indicating the number of unit blocks in the displacement vector video image), geometryVideoBlockSize (indicating the size of the unit block), geometryVideo-BitDepth (which is bit depth information), ColourSpace_displacement_video (which is image packing format information), and bi tangent_skip_flag (which is information for identifying whether the bi-tangential component image packing is skipped).

FIG. 37 illustrates another example of a structure of the ASPS in signaling information in a bitstream according to embodiments. That is, FIG. 37 shows an example syntax structure of the displacement vector-related packing information (asps _vmc_ext _displacement_packing_info()) included in the ASPS. The information may be included in asps_vmc_extension( ) of FIG. 36.

In FIG. 37, displacement_scan_method indicates the scan method used in packing displacement vectors. For example, displacement_scan_method equal to 0 may indicate scanning the displacement vectors based on the 2D Morton code, and displacement_scan_method equal to 1 may indicate scanning the displacement vectors according to a Zig-zag scan order.

geometryVideoBlockSize indicates the size of the displacement vector video image blocks. For example, it may indicate the number of bx*by blocks, and the default value thereof may be 16.

geometryVideoBitDepth indicates the bit depth unit of the displacement vector video image. The default value may be 10 bits. Based on this value, a medium value may be determined in packing displacement vector coefficients.

ColourSpace_displacement_video indicates the image format for displacement vector video packing. For example, among the values of ColourSpace_displacement_video, 0 indicates None (no image format for displacement vector video packing), 1 indicates that the displacement vector coefficients are packed based on the yuv400 format, 2 indicates that the displacement vector coefficients are packed based on the yuv420 format, and 3 indicates that the displacement vector coefficients are packed based on the yuv444 format.

Bi_tangent_skip_flag provides information for identifying whether the packing of the displacement vector bi-tangential component image is skipped. The flag equal to 0 indicates that the packing is not skipped, and the flag equal to 1 indicates that the packing is skipped.

FIG. 38 is a flowchart illustrating an example of a transmission method according to embodiments. The transmission method may include encoding mesh data (21011) and transmitting a bitstream containing the encoded mesh data (21012). In one embodiment, the bitstream transmitted in operation 21012 may include a base mesh bitstream, a displacement vector bitstream, and a texture map bitstream.

According to embodiments, the encoding of the mesh data (21011) may include encoding a base mesh, encoding displacement vectors or displacement vector transform coefficients, and encoding a texture map.

In encoding the base mesh, the base mesh is generated from the original mesh to be transmitted through simplification and mesh parameterization of the original mesh. The generated base mesh is quantized. In the case of inter-frames, motion vectors are calculated from a previously reconstructed reference base mesh and encoded for transmission. In the case of intra-frames, static mesh encoding is performed and a base mesh bitstream is transmitted.

In encoding displacement vectors (or displacement information), displacement vectors between mesh data, which is obtained by subdividing and fitting the simplified mesh obtained through the mesh simplification, and the mesh data reconstructed from the previously encoded base mesh are calculated. To encode the displacement vectors efficiently, the displacement vector coordinate system is transformed to a local coordinate system, and the displacement vectors in the local coordinate system are transformed to displacement vector coefficients, quantized, and encoded into a displacement vector bitstream for transmission.

Next, a description will be given of packing displacement vector coefficients into an image according to each video image format during the displacement vector encoding operation.

First, for displacement vectors transformed to the local coordinate system, the displacement vector transformer 12011 may perform linear lifting, butterfly lifting, or other transforms to transform the displacement vector coefficients. Also, displacement vectors represented in (n, t, b) local coordinates may be transformed separately for each of the normal, tangential, and bi-tangential components. The displacement vector coefficients transformed by the displacement vector transformer 12011 may be quantized by the displacement vector quantizer 12012. In this operation, the displacement vector coefficients may be quantized to individual values according to each channel. In the case where packing of the bi-tangential component is skipped by the displacement vector coefficient packer 12013, lifting transform and quantization of the bi-tangential component may be skipped by the displacement vector transformer 12011 and the displacement vector quantizer 12012, and the Bi_tangent_skip_flag may be signaled as 0. In the present disclosure, the bi_tangent_skip_flag is referred to as information for identifying whether the packing of the bi-tangential component is skipped. In one embodiment, the bi_tangent_skip_flag may be signaled and transmitted in signaling information (e.g., an atlas sequence parameter set), as shown in FIG. 37.

As described above, the quantized displacement vector coefficients are packed into a W×H 2D image by the displacement vector coefficient packer 12013. For example, when the displacement vector coefficients are arranged in a 1D form in LoD ascending order as shown in FIG. 17, they may be packed into a 2D image as shown in FIG. 18. In this case, blocks each having the size of Bx×by may be configured, and a displacement vector video image may be configured with L×M blocks determined according to the number of the displacement vector coefficients, N. Then, information indicating the number of unit blocks (displacementVideoBlockSize), information indicating the size of the unit block (geometryVideoBlockSize), and bit depth (geometryVideoBitDepth) may be signaled in the signaling information (e.g., the atlas sequence parameter set) as shown in FIG. 37. In the block, displacement vector coefficients may be packed in a zig-zag scan order or a 2D Morton code order, and information indicating the packing order of the displacement vectors (displacement_scan_method) may be signaled in the signaling information (e.g., the atlas sequence parameter set) as shown in FIG. 37. Padding may be performed with a medium value of the image or the value of the last displacement vector coefficient to fit the size of the unit block for each LoD or the size of the entire 2D video image. Each displacement vector coefficient may include normal, tangential, and bi-tangential components, and some of the components may be skipped during packing. For 2D image packing, a format such as YUV 4:4:4, YUV 4:2:0, or YUV 4:0:0 may be selected, and the image packing format (ColourSpace_displacement_video) may be signaled. For simplicity, YUV 4:4:4 is referred to as a first format, YUV 4:2:0 as a second format, and YUV 4:0:0 as a third format.

When the YUV 4:4:4 format is used and packing of the bi-tangential component is not skipped, the values of the normal, tangential, and bi-tangential components may be packed into the Y, U, V channels, respectively, while Colour-Space_displacement_video (value=3) and Bi_tangent_skip_flag (value=0) may be signaled, as shown in FIGS. 21-(a) and 21-(b). When the YUV 4:4:4 format is used and packing of the bi-tangential component is skipped, the normal and tangential components may be packed into the Y and U channels, respectively, and a median value may be packed into the V channel, while ColourSpace_displacement_video (value=3) and Bi_tangent_skip_flag (value=1) may be signaled, as shown in FIGS. 22-(a) and 22-(b).

When the YUV 4:2:0 format is used and packing of the bi-tangential component is not skipped, the value of the normal component may be packed into the Y channel, while the values of the tangential and bi-tangential components may be sampled and packed according to an agreement between the encoder/decoder, as shown in FIGS. 23-(a) and 23-(b). Alternatively, the tangential and bi-tangential components may also be packed into the Y channel, while median values may be packed into the U and V channels. In addition, ColourSpace_displacement_video (value=2) and Bi_tangent_skip_flag (value=0) may be signaled. When the YUV 4:2:0 format is used and packing of the bi-tangential component is skipped,, only the normal and tangential components may be packed together into the Y channel, while median values may be packed into the U and V channels, and ColourSpace_displacement_video (value=2) and Bi_tangent_skip_flag (value=1) may be signaled, as shown in FIGS. 24-(a) and 24-(b).

When the YUV 4:0:0 format is used and packing of the bi-tangential component is not skipped, only the normal component may be packed into the Y channel, or the normal, tangential, and bi-tangential components may all be packed into the Y channel, and ColourSpace_displacement_video (value=1) and Bi_tangent_skip_flag (value=0) may be signaled, as shown in FIGS. 25-(a) and 25-(b). When the YUV 4:0:0 format is used and packing of the bi-tangential component is not skipped, the normal and tangential components may be packed together into the Y channel, and median values may be packed into the U and V channels, while ColourSpace_displacement_video (value=3) and Bi_tangent_skip_flag (value=1) may be signaled, as shown in FIGS. 26-(a) and 26-(b).

Using these packing methods described above, the displacement vector coefficients for each channel may be processed into an image to form packing frame encoding units. All levels in the mesh frame may be packed into a single packing frame, or the respective LoDs in the mesh frame may be packed into individual frames. In addition, the syntax of asps_vmc_ext_displacement LoD_packing_method, which indicates the packing method, may be signaled may be signaled in signaling information (e.g., in the ASPS) on a mesh sequence basis, as shown in FIG. 36. Then, 2D images packed by the displacement vector coefficient packer 12013 are encoded by the displacement vector image/video encoder 12014 using a 2D video encoder such as H.264, HEVC, or VVC to generate a displacement vector bitstream.

Finally, in the operation of encoding the texture map, a new texture map having the color information corresponding to the texture coordinates of the reconstructed mesh is generated by the texture map generator 11026, the generated texture map is encoded by the texture map encoder (i.e., 2D video encoder) 11027, and transmitted as a texture bitstream.

In operation 21012 of transmitting the bitstream containing the mesh data, the base mesh bitstream, displacement vector bitstream, and texture bitstream generated in operation 21011 of encoding the mesh data are multiplexed into a single bitstream by the multiplexer and transmitted to the reception apparatus by the transmitter.

FIG. 39 is a flowchart illustrating an example of a reception method according to embodiments. The reception method may include a operation of receiving a bitstream containing mesh data (22011) and decoding the mesh data contained in the bitstream (22012). The bitstream may include a base mesh bitstream, a displacement vector bitstream, and a texture map bitstream. In one embodiment, operation 22011 of receiving the bitstream containing the mesh data may include receiving the bitstream including a base mesh bitstream, a displacement vector bitstream, and a texture map bitstream. In addition, operation 22011 of receiving the bitstream containing the mesh data includes receiving signaling information that includes an atlas sequence parameter set (ASPS). Here, the signaling information may be received through the bitstream, and may be referred to as metadata.

According to embodiments, operation 22012 of decoding the mesh data may include decoding the base mesh bitstream, decoding the displacement vector bitstream, and decoding the texture map bitstream.

The bitstream received in operation 22011 of receiving the bitstream containing the mesh data may be demultiplexed by the demultiplexer into the base mesh bitstream, displacement vector bitstream, and texture map bitstream, which are then decoded individually.

In decoding the base mesh bitstream, the base mesh bitstream is decoded using a motion vector decoder 15012 in the case of inter-frames, and decoded using a static mesh decoder 15013 in the case of intra-frames. The decoded base mesh is then processed by the base mesh reconstructor 15014 for mesh subdivision.

In decoding the displacement vector bitstream, the displacement vector coefficients are decoded from the displacement vector bitstream in reverse order of encoding, inverse-quantized, and inverse-transformed, and even the coordinate system thereof is inverse-transformed. Then, mesh geometry information is reconstructed along with the base mesh data.

Next, the operation of decoding the displacement vectors is further described with reference to FIGS. 28 to 35.

The video decoder 16011 receives the displacement vector bitstream and decodes the displacement vector coefficient image/video using a 2D video codec. Then, unpacking may be performed on the reconstructed coefficient image corresponding to the current mesh frame by the displacement vector coefficient unpacker 16012. In this operation, scan order information (displacement_scan_method) used for displacement vector packing, the number of unit blocks in the displacement vector video image (displacementVideoBlockSize), information indicating the size of the unit block (geometryVideoBlockSize), and bit depth (geometryVideoBitDepth) may be parsed from the signaling information (e.g., ASPS) in FIGS. 36 and 37 to derive the sizes of the block and packing frame (bx, by, L, M) and unpack the packed displacement vector coefficients. In the unpacking operation, packing image format information (ColourSpace_displacement_video) and information for identifying whether packing of the bi-tangential component has been skipped (Bi_tangent_skip_flag) are also parsed from the signaling information (e.g., ASPS). The method of deriving the displacement vector coefficients may vary depending on the transmitted image packing format and the included displacement vector coefficient components.

When the parsed information is ColourSpace_displacement_video=3 and Bi tangent_skip_flag=0, the normal, tangential, and bi-tangential components may be reconstructed from the Y, U, and V channels sequentially according to the YUV 4:4:4 format, as shown in FIGS. 29-(a) and 29-(b). When the parsed information is ColourSpace_displacement_video=3 and Bi tangent_skip_flag=1, the normal and tangential components may be reconstructed from the Y and U channels according to the YUV 4:4:4 format, and the bi-tangential component may be initialized to 0 or derived from the V channel, as a shown in FIGS. 30-(a) and 30-(b).

When the parsed information is ColourSpace_displacement_video=2 and Bi tangent_skip_flag=0, the normal, tangential, and bi-tangential components may be reconstructed from the Y, U, and V channels according to the YUV 4:2:0 format, as shown in FIGS. 31-(a) and 31-(b). Here, the tangential and bi-tangential components in the U and V channels may be the results of sampling according to an agreement between the encoder/decoder, and the predetermined values or positions thereof may be reconstructed. Alternatively, the normal, tangential, and bi-tangential components may all have been packed in the Y channel, and thus each component may be reconstructed from the Y channel, while the U and V channels may be composed of median values. When the parsed information is ColourSpace_displacement_video=2 and Bi_tangent_skip_flag=1, the normal and tangential components may be reconstructed from the Y channel, respectively, according to the YUV 4:2:0 format, and the bi-tangential component may be initialized to 0 or derived from the V channel, as shown in FIGS. 32-(a) and 32-(b).

When the parsed information is ColourSpace_displacement_video=1 and Bi_tangent_skip_flag=0, only the normal component may be reconstructed from the Y channel according to the YUV 4:0:0 format, as shown in FIGS. 33-(a) and 33-(b). Alternatively, the normal, tangential, and bi-tangential components may all have been packed in the Y channel. In this case, the normal, tangential, and bi-tangential components may be reconstructed sequentially from the Y channel sequentially as shown in FIGS. 34-(a) and 34-(b). When the parsed information is ColourSpace_displacement_video=1 and Bi tangent_skip_flag=1, the normal and tangential components may be reconstructed from the Y channel, respectively, according to the YUV 4:0:0 format, and the bi-tangential component may be initialized to 0 or derived from the V channel, as shown in FIGS. 35-(a) and 35-(b).

The displacement vector coefficients assigned per vertex after unpacking performed using any one of the methods illustrated in FIGS. 29 to 35 are subjected to inverse quantization by the displacement vector coefficient inverse quantizer 16013. When the parsed information is Bi tangent_skip_flag=1, inverse quantization may be performed only on the displacement vector coefficients of the normal and tangential components, excluding the bi-tangential component. In this case, each displacement vector coefficient may be quantized using a different quantization parameter for each axis, and the quantization rate for each LoD level may be determined by deriving a quantization parameter or a scaling parameter.

The inverse-quantized displacement vector coefficients are inverse-transformed by the displacement vector inverse transformer 16014 based on the transform method parsed from asps _vmc_ext_transform_method signaled in the signaling information to calculate the reconstructed displacement vectors. When the parsed information is Bi_tangent-t_skip_flag=1, the inverse transform may be applied only to the results of inverse quantization of the normal and tangential components, except for the bi-tangential component. As the normal, tangential, and bi-tangential components are orthogonal to each other, the final displacement vector of the bi-tangential component may be calculated by the cross product of the normal and tangential components. Alternatively, linear regression, multiple regression, or similar methods may be used to derive the bi-tangential displacement vector.

Once all displacement vectors are inverse-transformed by the displacement vector inverse transformer 16014, the displacement vector coordinate inverse transformer 15020 parses asps_vmc_ext_displacement_coordinate_system signaled in the signaling information as shown in FIG. 36. When the parsed value is 1, the reconstructed displacement vectors are inverse-transformed from the local coordinate system (n, t, b) to the canonical coordinate system (x, y, z). In one embodiment, normal vectors per vertex may be calculated based on the reconstructed vertex positions in the reconstructed base mesh, and the tangential and bi-tangential vectors orthogonal to the normal vectors may be calculated based on the calculated normal vectors per vertex to inverse-transform the coordinates of the displacement vector.

When asps_vmc_ext_displacement_coordinate_system is equal to 0, the calculated reconstructed displacement vectors may be used as the final reconstructed displacement vectors. When there are multiple inverse-transform results for the same coordinates of a vertex, the sum thereof may be used as the value of the final displacement vector. The mesh reconstructor 15016 may compute vertex geometry information related to the reconstructed mesh by adding the reconstructed displacement vectors to the vertices generated through mesh subdivision, thereby reconstructing the final geometry information.

In decoding the texture map bitstream, the received texture map bitstream is decoded by the texture map decoder 15021. The decoded texture map is used together with the geometry information reconstructed by the mesh reconstructor 15016 to generate the final reconstructed mesh.

In current V-DMC mesh compression technology, displacement vectors are transformed into a local coordinate system, subjected to lifting transform and quantization, and transformed into simple displacement vector coefficients for compression efficiency. In conventional techniques, the encoder performs calculation for all components, i.e., the normal, tangential, and bi-tangential components, and packs the displacement vector coefficients of the respective components, which are the results of the calculation, into a 2D image for transmission.

The present disclosure proposes, as illustrated in FIGS. 15 to 39, an approach to pack and transmit only the a method for efficiently transmitting data at a higher speed with a reduced data size by packing and transmitting the displacement vector coefficients of two components-normal and tangential-among the three components, and then calculating the bi-tangential component by the decoder after decoding the received displacement vector components of the normal and tangential components. Thus, only two out of the three displacement vector components need to be encoded and transmitted, and therefore the displacement vector sub-bitstream size may be reduced to about two-thirds of the size in conventional methods. In addition, by proposing signaling methods, as shown in FIGS. 36 and 37, that enable packing and encoding/decoding according to 2D video image compression formats such as YUV 4:4:4, YUV 4:2:0, and YUV 4:0:0, efficient packing suitable for each image format may be achieved, resulting in improved real-time mesh data transmission speed according to the reduced data size.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception apparatus including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations may be made in the present disclosure without departing from the spirit and scope of the disclosure. Thus, it is intended that the present disclosure cover the modifications and variations of the present disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the 3D data transmission/reception apparatus and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1. A method of decoding mesh data, the method comprising:

   an operation of receiving a base mesh bitstream, a displacement vector bitstream, a texture map bitstream, and signaling information;
   a base mesh processing operation of reconstructing a base mesh from the base mesh bitstream;
   a displacement information processing operation of reconstructing displacement information from the displacement vector bitstream;
   a reconstruction operation of reconstructing a mesh based on the base mesh and the displacement information; and
   a texture map processing operation of reconstructing a texture map from the texture map bitstream.

2. The method of claim 1, wherein the displacement information processing operation comprises:

   decoding the displacement vector bitstream into the displacement information;
   identifying a format applied to the displacement information among a first format, a second format, and a third format, and unpacking at least one of a normal component, a tangential component, or a bi-tangential component included in the displacement information based on the identified format; and
   inversely transforming the unpacked displacement information from a local coordinate system into an original coordinate system.

3. The method of claim 2, wherein the signaling information comprises information for identifying the format applied to the displacement information.

4. The method of claim 3, wherein the signaling information further comprises information for identifying whether packing of the bi-tangential component has been skipped,
   wherein the unpacking operation comprises:
   determining a method of unpacking at least one of the normal component, the tangential component, or the bi-tangential component based on the signaling information.

5. A device for decoding mesh data, comprising:

   a receiver configured to receive a base mesh bitstream, a displacement vector bitstream, a texture map bitstream, and signaling information;
   a base mesh processor configured to reconstruct a base mesh from the base mesh bitstream;
   a displacement information processor configured to reconstruct displacement information from the displacement vector bitstream;
   a reconstructor configured to reconstruct a mesh based on the base mesh and the displacement information; and
   a texture map processor configured to reconstruct a texture map from the texture map bitstream.

6. The device of claim 5, wherein the displacement information processor comprises:

   a displacement information decoder configured to decode the displacement vector bitstream into the displacement information;
   a displacement information unpacker configured to identify a format applied to the displacement information among a first format, a second format, and a third format, and to unpack at least one of a normal component, a tangential component, or a bi-tangential component included in the displacement information based on the identified format; and
   a coordinate inverse transformer configured to inversely transform the unpacked displacement information from a local coordinate system into an original coordinate system.

7. A method of encoding mesh data, the method comprising:

encoding an original mesh; and
transmitting a bitstream containing the encoded mesh and signaling information.

**8.** The method of claim 7, wherein the encoding comprises:

a base mesh processing operation of encoding a base mesh and generating a base mesh bitstream, the base mesh being generated by simplifying the original mesh;
a displacement information processing operation of encoding displacement information generated based on the base mesh and generating a displacement vector bitstream;
a mesh reconstruction operation of reconstructing a mesh based on the encoded base mesh and the encoded displacement information; and
a texture map processing operation of encoding a texture map generated based on the original mesh and the reconstructed mesh and generating a texture map bitstream.

**9.** The method of claim 8, wherein the displacement information processing operation comprises:

transforming a coordinate system of the displacement information into a local coordinate system;
packing at least one of a normal component, a tangential component, or a bi-tangential component included in the displacement information in the local coordinate system based on one of a first format, a second format, or a third format; and
encoding the packed displacement information.

**10.** The method of claim 9, wherein the packing comprises:

selectively packing the bi-tangential component in the displacement information,
wherein the signaling information comprises information for identifying whether packing of the bi-tangential component has been skipped.

**11.** The method of claim 9, wherein the signaling information comprises information for identifying the format applied to the displacement information.

**12.** A device for encoding mesh data, comprising:

an encoder configured to encode an original mesh; and
a transmitter configured to transmit a bitstream containing the encoded mesh and signaling information.

**13.** The method of claim 12, wherein the encoder comprises:

a base mesh processor configured to encode a base mesh and generate a base mesh bitstream, the base mesh being generated by simplifying the original mesh;
a displacement information processor configured to encode displacement information generated based on the base mesh and generate a displacement vector bitstream;
a mesh reconstructor configured to reconstruct a mesh based on the encoded base mesh and the encoded displacement information; and
a texture map processor configured to encode a texture map generated based on the original mesh and the reconstructed mesh and generate a texture map bitstream.

**14.** The device of claim 13, wherein the displacement information processor comprises:

a displacement information coordinate transformer configured to transform a coordinate system of the displacement information into a local coordinate system;
a displacement information packer configured to pack at least one of a normal component, a tangential component, or a bi-tangential component included in the displacement information in the local coordinate system based on one of a first format, a second format, or a third format; and
a displacement information encoder configured to encode the packed displacement information.

**15.** The device of claim 14, wherein the displacement information packer is configured to:

selectively pack the bi-tangential component in the displacement information,

wherein the signaling information comprises information for identifying whether packing of the bi-tangential component has been skipped.

16. The device of claim 14, wherein the signaling information comprises information for identifying the format applied to the displacement information.

# FIG. 1

# FIG. 2

Feedback

Static of dynamic
Mesh M(i)

Attribute map
A(i)

Pre-processing

Base mesh
m(i)

Displacements
d(i)

200

Encoder

Compressed bitstream
b(i)

201

# FIG. 3

EP 4 734 518 A1

Pre-processing ⌐200

GoF
Generation

GoF info

Input
Mesh

Mesh
Decimation

Decimated
mesh

Atlas
Parameterization

Decimated
mesh with
tex coord

Fitting
Subdivision
surface ⌐300

Displacements

Base mesh

Encoder ⌐201

# FIG. 4

vertex

original          1st subdivision          2nd subdivision
                    result                    result

FIG. 5

300

Fitted
subdiv. mesh

Compute Local
Coordinates
System
(Optional)

Compute
Displacements

Displacements
$(d_x, d_y, d_z)$ or $(d_n, d_t, d_b)$

Recon.
Base
mesh

Subdivision

Subdivided
recon. Base
mesh

FIG. 6

FIG. 7

Input Mesh

200 — Pre Processing

base mesh m(i)

201

511 — Quantization

512 — Motion Encoder

Recon quantized ref base mesh m'(j)

513 — Reconstruction of base mesh

514 — Inverse Quant.

Compressed motion bitstream

Fitted subdiv mesh

515 — Recon base mesh m'(i) — Compute Displacements

displacements d(i)

516 — Wavelet Transform

Lifting coefficients e(i)

517 — Quantization

Quantized Lifting coefficients e'(i)

518 — Image Packing

519 — Video Encoding

520 — Video Decoding

521 — Image Unpacking

522 — Inverse Quant.

523 — Inverse Linear Lifting

Recon displacements d'(i)

525 — Reconstruct deformed mesh

Recon deformed mesh DM'(i)

Compressed displacements bitstream

524 — Attribute Transfer

525 — Generate attribute map A'(i)

Input Attribute map A(i)

526 — Push-Pull Padding

527 — Color Space conversion

528 — Video Encoding

Compressed attribute bitstream

530 — MUX

Compressed bitstream

FIG. 8

original

1st subdivision result

2nd subdivision result

$LoD_0$: ⊘

$LoD_1$: ⊘+○

$LoD_2$: ⊘+○+◉

P0, P3, P5, P6 | P1, P4, P7, P2, P10 | P8, P9, P11, P12, ...

$LoD_0$

$LoD_1$

$LoD_2$

$LoD_2$

Split

pred

update

Residual

$LoD_1$

$LoD_1'$

$LoD_1'$

Split

pred

update

Residual

$LoD_0'$

$LoD_0''$

Prediction process:

$$Signal(v) \leftarrow Signal(v) - \frac{1}{2}(Signal(v_1) + Signal(v_2))$$

Update process:

$$Signal(v_1) \leftarrow Signal(v_1) + \frac{1}{8}Signal(v)$$

$$Signal(v_2) \leftarrow Signal(v_2) + \frac{1}{8}Signal(v)$$

$v_1$

$v$

$v_2$

EP 4 734 518 A1

# FIG. 9

Lifting coefficients

n = # of vertex of the subdivied base mesh

| $C_0$ | $C_1$ | $C_2$ | $C_3$ | $C_4$ | $C_5$ | ⋯ | $C_{n-3}$ | $C_{n-2}$ | $C_{n-1}$ |

Low frequency(LoD$_0$)   High frequency

Packing

16개

h개

16

16

16

$C_0$ → $C_1$   $C_4$ → $C_5$   ⋯
$C_2$ → $C_3$

16

→ 2D Morton code

# FIG. 10

Input Mesh

Recon. deformed mesh =
Subdivided recon. base mesh + Recon. displacements

Texture Domain   3D Domain          3D Domain    Texture Domain

M(x, y, z)          M(x, y, z)

P'(u', v')                                    P(u, v)

Input Attribute map                          Generated Attribute map

# FIG. 11

Intra frame decoding

Compressed bitstream → DEMUX (611)

Patch information

Mesh sub-stream → Static Mesh Decoder (612) → Recon. quantized base mesh → Inverse Quantization (620)

Recon. base mesh

Displacements sub-stream → Video Decoding (613) → Image Unpacking (614) → Inverse Quantization (615) → Inverse Linear Lifting (616) → Recon. displacements → Reconstruct Deformed mesh (630) → Decoded mesh

Attribute map sub-stream → Video Decoding (617) → Color format/space conversion (640) → Decoded Attribute map

610

EP 4 734 518 A1

# FIG. 12

# FIG. 13

Reference Reconstructed Base Mesh

Base Mesh

812

813 Motion Vector Encoder

814 Static Mesh Encoder

Motion Vector Bitstream

Base Mesh Bitstream

815 Base Mesh Reconstructor

816 Displacement Vector Calculator

817 Displacement Vector Video Generator

818 Displacement Vector Video Encoder

Displacement Vector Bitstream

819 Displacement Vector Reconstructor

Fitted Subdivision Mesh

811 Pre-processor

Original mesh

Data Input Unit

Original Texture Map

820 Mesh Reconstructor

Reconstructed Mesh

821 Texture Map Video Generator

822 Texture Map Video Encoder

Texture Map Bitstream

823 Multiplexer

830 Transmitter

EP 4 734 518 A1

# FIG. 14

EP 4 734 518 A1

FIG. 15

# FIG. 16

12011

Displacement Vector Transformer

12012

Displacement Vector Coefficient Quantizer

12013

Displacement Vector Coefficient Packer

12014

Displacement Image/Video Encoder

# FIG. 17

$N$

| $C_1$ | $C_2$ | $\cdots$ | $C_{N_0}$ | $C_{N_0+1}$ | $\cdots$ | $C_{N_1}$ | $\cdots$ | $C_{N-2}$ | $C_{N-1}$ | $C_n$ |

$N_0(LoD_0=R_0)$

$N_1-N_0(R_1)$ $\cdots$

$N_1(LoD_1)$

# FIG. 18

L blocks

M blocks

Frame padding area

by

bx

# FIG. 19

: CTU

# FIG. 20

Embodiment of x-y Morton code packing
in the case where bx = by = 4

Embodiment of y-x Morton code packing
in the case where bx = by = 4

# FIG. 21

EP 4 734 518 A1

<Packing Frame>

| $wy$ | $wu$ | $wv$ |
|---|---|---|
| Normal | Tangential | Bitangential |
| Y channel | U channel | V channel |

$hy$    $hu$    $hv$

(a)

$Y$

| $N_1$ | $N_2$ |
|---|---|
| $N_3$ | $N_4$ |

$U$

| $T_1$ | $T_2$ |
|---|---|
| $T_3$ | $T_4$ |

$V$

| $B_1$ | $B_2$ |
|---|---|
| $B_3$ | $B_4$ |

(b)

# FIG. 22

<Packing Frame>

$wy$

$hy$ | Normal

Y channel

$wu$

$hu$ | Tangential

U channel

$wv$

$hv$

V channel

(a)

$Y$

| $N_1$ | $N_2$ |
|-------|-------|
| $N_3$ | $N_4$ |

$U$

| $T_1$ | $T_2$ |
|-------|-------|
| $T_3$ | $T_4$ |

$V$

| M | M |
|---|---|
| M | M |

(b)

EP 4 734 518 A1

# FIG. 23

(a)

<Packing Frame>

| Y channel | U channel | V channel |
|---|---|---|
| Normal | Tangential | Bitangential |

$wy$ — $hy$

$wu$ — $hu$

$wv$ — $hv$

(b)

$Y$

| N₁ | N₂ |
|---|---|
| N₃ | N₄ |

$U$ — T

$V$ — B

# FIG. 24

<Packing Frame>

Y channel

U channel

V channel

(a)

$Y$

$U$

$V$

(b)

# FIG. 25

<Packing Frame>

Normal

Tangential

Bitangential

$wy$

$hy$

Y channel

| $N_1$ | $N_2$ |
|---|---|
| $N_3$ | $N_4$ |
| $T_1$ | $T_2$ |
| $T_3$ | $T_4$ |
| $B_1$ | $B_2$ |
| $B_3$ | $B_4$ |

$Y$

U channel

V channel

(a)

$U$

$V$

(b)

# FIG. 26

<Packing Frame>

Y channel     U channel     V channel

(a)

$Y$     $U$     $V$

(b)

# FIG. 27

EP 4 734 518 A1

# FIG. 28

EP 4 734 518 A1

16011

16012

16013

16014

Displacement
Vector Bitstream → Video
Decoder → Displacement Vector
Coefficient Unpacker → Displacement Vector
Coefficient Inverse
Quantizer → Displacement Vector
Inverse Transformer

# FIG. 29

(a)            (b)

# FIG. 30

(a)      (b)

# FIG. 31

(a)      (b)

# FIG. 32

(a)                                   (b)

# FIG. 33

|       |       |
|-------|-------|
| $N_1$ | $N_2$ |
| $N_3$ | $N_4$ |

**Y** ⟹ **N**

|       |       |
|-------|-------|
| $N_1$ | $N_2$ |
| $N_3$ | $N_4$ |

**U** ⟹ **T**

**V** ⟹ **B**

(a)　　　　　　　(b)

# FIG. 34

(a)                    (b)

# FIG. 35

| | |
|---|---|
| N₁ | N₂ |
| N₃ | N₄ |

*(a)* *(b)*

# FIG. 36

| asps_vmc_extension(){ | Descriptor |
|---|---|
|    asps_vmc_ext_prevent_geometry_video_conversion_flag | u(1) |
|    asps_vmc_ext_prevent_attribute_video_conversion_flag | u(1) |
|    asps_vmc_ext_subdivision_method | u(3) |
|    if(asps_vmc_ext_subdivision_method != 0) | |
|      asps_vmc_ext_subdivision_iteration_count | u(8) |
|    asps_vmc_ext_displacement_coordinate_system | u(1) |
|    asps_vmc_ext_displacement_method | u(3) |
|    if(asps_vmc_ext_displacement_method = = VIDEO_CODING) { | |
|      asps_vmc_ext_displacement_LoD_packing_method | u(1) |
|      asps_vmc_ext_displacement_packing_info() | ue(v) |
|    } | |
|    asps_vmc_ext_transform_method | u(3) |
|    if(asps_vmc_ext_transform_method = = LINEAR_LIFTING) { | |
|      vmc_lifting_transform_parameters(0,0) | |
|    } | |
|    asps_vmc_ext_num_attribute_video | u(7) |
|    for(i=0;1< asps_vmc_ext_num_attribute_video; i++) { | |
|      asps_vmc_ext_attribute_type_id [i] | u(8) |
|      asps_vmc_ext_attribute_frame_width[i] | ue(v) |
|      asps_vmc_ext_attribute_frame_height[i] | ue(v) |
|      asps_vmc_vmc_ext_attribute_transform_method[i] | u(3) |
|      if(asps_vmc_ext_attribute_transform_method = = LINEAR_LIFTING) { | |
|        vmc_lifting_transform_parameters(i+1,0) | |
|      asps_vmc_ext_direct_attribute_projection_enabled_flag[i] | u(1) |
|      } | |
|    asps_vmc_ext_packing_method | u(1) |
| } | |

# FIG. 37

| asps_vmc_ext_displacement_packing_info(){ | Descriptor |
|---|---|
| displacement_scan_method | u(2) |
| displacementVideoBlockSize | i(32) |
| geometryVideoBlockSize | i(32) |
| geometryVideoBitDepth | i(32) |
| colourSpace_displacement_video | u(2) |
| bi_tangent_skip_flag | u(1) |
| ... | |
| ] | |

# FIG. 38

| Encode mesh data | —21011 |
|---|---|

↓

| Transmit bitstream containing mesh data | —21012 |
|---|---|

# FIG. 39

| Receive bitstream containing mesh data | —22011 |
|---|---|

↓

| Decode mesh data | —22012 |
|---|---|

## INTERNATIONAL SEARCH REPORT

| International application No. |
|---|
| **PCT/KR2024/008873** |

### A. CLASSIFICATION OF SUBJECT MATTER

**H04N 19/597**(2014.01)i; **H04N 19/70**(2014.01)i; **H04N 19/18**(2014.01)i; **H04N 19/46**(2014.01)i; **H04N 19/54**(2014.01)i; **H04N 19/593**(2014.01)i

According to International Patent Classification (IPC) or to both national classification and IPC

### B. FIELDS SEARCHED

Minimum documentation searched (classification system followed by classification symbols)

H04N 19/597(2014.01); G06T 17/10(2006.01); G06T 17/20(2006.01); G06T 9/00(2006.01); H04N 13/344(2018.01); H04N 13/395(2018.01); H04N 21/235(2011.01); H04N 21/236(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 메쉬(mesh), 변위(displacement), 벡터(vector), 텍스처(texture), 베이스(base), 포맷(format), 패킹(packing)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0126225 A (HYUNDAI MOTOR COMPANY et al.) 15 September 2022 (2022-09-15) See paragraphs [0018], [0022], [0025], [0027] and [0118]-[0121]; claims 1, 3, 11 and 16; and figure 11. | 1-16 |
| Y | US 2022-0108483 A1 (SONY GROUP CORPORATION) 07 April 2022 (2022-04-07) See paragraphs [0034], [0038], [0066] and [0074]-[0075]; and figures 1 and 10. | 1-16 |
| Y | US 2021-0112240 A1 (NOKIA TECHNOLOGIES OY) 15 April 2021 (2021-04-15) See paragraphs [0102]-[0111] and [0175]-[0181]; and claim 28. | 2-4,6,9-11,14-16 |
| A | KR 10-2373833 B1 (LG ELECTRONICS INC.) 14 March 2022 (2022-03-14) See claims 1-12. | 1-16 |
| A | US 2021-0287431 A1 (INTEL CORPORATION) 16 September 2021 (2021-09-16) See claims 1-9. | 1-16 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2024** | **16 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008873**

| Patent document cited in search report | | | Publication date (day/month/year) | Patent family member(s) | | | Publication date (day/month/year) |
|---|---|---|---|---|---|---|---|
| KR | 10-2022-0126225 | A | 15 September 2022 | CN | 116965034 | A | 27 October 2023 |
| | | | | US | 2023-0410374 | A1 | 21 December 2023 |
| | | | | WO | 2022-191543 | A1 | 15 September 2022 |
| US | 2022-0108483 | A1 | 07 April 2022 | CN | 115428459 | A | 02 December 2022 |
| | | | | EP | 4197191 | A1 | 21 June 2023 |
| | | | | JP | 2023-544618 | A | 24 October 2023 |
| | | | | US | 11836953 | B2 | 05 December 2023 |
| | | | | WO | 2022-074515 | A1 | 14 April 2022 |
| US | 2021-0112240 | A1 | 15 April 2021 | EP | 3756170 | A1 | 30 December 2020 |
| | | | | US | 11463681 | B2 | 04 October 2022 |
| | | | | WO | 2019-162567 | A1 | 29 August 2019 |
| KR | 10-2373833 | B1 | 14 March 2022 | CN | 114946179 | A | 26 August 2022 |
| | | | | CN | 114946179 | B | 08 March 2024 |
| | | | | EP | 4072132 | A1 | 12 October 2022 |
| | | | | EP | 4072132 | B1 | 06 March 2024 |
| | | | | JP | 2023-509190 | A | 07 March 2023 |
| | | | | JP | 7434574 | B2 | 20 February 2024 |
| | | | | KR | 10-2021-0090089 | A | 19 July 2021 |
| | | | | US | 11606547 | B2 | 14 March 2023 |
| | | | | US | 2021-0218947 | A1 | 15 July 2021 |
| | | | | WO | 2021-141258 | A1 | 15 July 2021 |
| US | 2021-0287431 | A1 | 16 September 2021 | CN | 113470179 | A | 01 October 2021 |
| | | | | EP | 3882859 | A1 | 22 September 2021 |
| | | | | JP | 2021-149942 | A | 27 September 2021 |
| | | | | KR | 10-2021-0116199 | A | 27 September 2021 |

Form PCT/ISA/210 (patent family annex) (July 2022)